# EUROPEAN PATENT SPECIFICATION

(11) **EP 1 628 811 B1**
(45) Date of publication and mention of the grant of the patent: **20.06.2012**
(21) Application number: 04751745.3
(22) Date of filing: 10.05.2004
(51) Int. Cl.: B29B 7/76

(54) **FOAM DISPENSING APPARATUS WITH PUMPING AND LINE HEATER SYSTEM**
ABGABESYSTEM MIT CHEMISCHEM PUMP- UND LEITUNGSHEIZSYSTEM
SYSTEME DE DISTRIBUTION AVEC POMPAGE DE PRODUITS CHIMIQUES ET SYSTEME DE CHAUFFAGE A CONDUITES

(30) Priority: 09.05.2003 US 469034 P; 09.05.2003 US 468989 P; 22.07.2003 US 623100; 12.03.2004 US 798897; 30.04.2004 US 835588
(43) Date of publication of application: 01.03.2006
(73) Proprietor: IntelliPack, Inc., Tulsa, OK 74146 (US)
(72) Inventor: BERTRAM, George, Southbury, CT 06488 (US)
(74) Representative: Thomson, Neil David
(86) International application number: PCT/US2004/014515
(87) International publication number: WO 2004/101245

(56) References cited:
- WO-A1-84/01684
- US-A- 2 890 836
- US-A- 3 976 230
- US-A- 4 131 395
- US-A- 5 050 776
- US-A- 5 375 743
- US-A- 5 964 378
- US-B1- 6 283 329

## Description

### FIELD OF THE INVENTION

The inventive subject matter includes a dispensing system with a preferred embodiment featuring a foam-in-bag dispensing apparatus with in line pumping system and chemical line heating system for providing chemical precursor at the desired pressure and temperature.

### BACKGROUND OF THE INVENTION

Over the years a variety of material dispensers have been developed including those directed at dispensing foamable material such as polyurethane foam which involves mixing certain chemicals together to form a polymeric product while at the same time generating gases such as carbon dioxide and water vapor. If those chemicals are selected so that they harden following the generation of the carbon dioxide and water vapor, they can be used to form "hardened" (e.g., a cushionable quality in a proper fully expanded state) polymer foams in which the mechanical foaming action is caused by the gaseous carbon dioxide and water vapor leaving the mixture.

In particular techniques, synthetic foams such as polyurethane foam are formed from liquid organic resins and polyisocyanates in a mixing chamber (e.g., a liquid form of isocyanate, which is often referenced in the industry as chemical "A", and a multi-component liquid blend called polyurethane resin, which is often referenced in the industry as chemical "B"). The mixture can be dispensed into a receptacle, such as a package or a foam-in-place bag (see e.g., U.S. Pat. Nos. 4,674,268, 4,800,708 and 4,854,109), where it reacts to form a polyurethane foam.

While features of the present invention are applicable to single component dispensing systems, the present invention is particularly suited for systems that have a plurality of openings (usually two) arranged in the core in communication with the bore for supplying mixing material such as organic resin and polyisocyanate to the bore, which acts as a mixing chamber. In a preferred embodiment of the invention, there is utilized a combination valving and purge rod positioned to slide in a close tolerance, "interference", fit within the bore to control the flow of organic resin and polyisocyanate from the openings into the bore and the subsequent discharge of the foam from the cartridge.

The above described dispensing device has utility in the packing industry such as hand held dispensers which can be used, for instance, to fill in cavities between an object being packed and a container (e.g., cardboard box) in which the object is positioned. Manufacturers who produce large quantities of a particular product also achieve efficiencies in utilizing automated dispensing devices which provide for automated packaging filling such as by controlled filling of a box conveyed past the dispenser (e.g., spraying into a box having a protective covering over the product), intermediate automated formation of molded foam bodies, or the automatic fabrication of foam filled bags, which can also either be preformed or placed in a desired location prior to full expansion of the foam whereupon the bag conforms in shape to the packed object as it expands out to its final shape.

With dispensing devices like the hand held and foam-in-bag dispensing apparatus described above, there is also a need to provide the chemical(s) (e.g., chemicals "A" and "B") from their respective sources (typically a large container such as a 12 m³ (55 gallon) container for each respective chemical) in the desired state (e.g., the desired flow rate, volume, pressure, and temperature). Thus, there are proper chemical temperature and flow rate requirements involved in attempting to achieve a desirable foam product. Under the present state of the art a variety of pumping techniques have arisen which include individual pumps designed for insertion into the chemical source containers coupled with a controller provided in an effort to maintain the desired flow rate characteristics through monitoring pump characteristics. The individual in "barrel" pumps typically feature a tachometer used in association with a controller attempting to maintain the desired flow rate of chemical to the dispenser by adjustment in pump output. The tachometers used in the prior art are relatively sensitive equipment and prone to breakdowns.

In an effort to address the injection of chemicals into the mixing chamber at the desired temperature(s) there has been developed heater systems positioned in the chemical conduits extending between the chemical supply and the dispenser, these heaters include temperature sensors (thermisters) and can be adjusted in an effort to achieve the desired temperature in the chemical leaving the feed line or conduit. Reference is made to, for example, US Patent Nos. 2,890,836 and 3,976,230, the latter disclosing the features of the preambles of claims 1 and 35. These chemical conduit heater wires suffer from a variety of drawbacks such as (a) poor sensor (e.g., thermistors) responsiveness due to non head-on flow positioning of the sensor or difficulty in manipulating the sensor without breakage to be in the proper orientation, (b) difficulty in positioning the tip of the heater wire close enough to the dispenser to avoid cold shot formation and associated material stretch limitations in the heater wire conduit needed to avoid stretching and separation of the dispenser from the tip of the heater wire when the other "fixed" end originates from the pump control region, (c) increased pump weight and an increase in the length and cost associated with the leads extending from the heater wire tip to heater wire control and power source locations at the pump end, (d) an associated increase in electromagnetic interference (EMI) due to the longer "umbilical" cords and thermister leads, (e) poor thermister reliability in its heavy flex location within the interior of the heater wire, (f) difficulty in feeding heater elements within the outer protective chemical conduit, and (g) cost and production limitations in the overall heater wire and conduit length requiring relatively close positioning of the chemical driver source to the dispenser location.

As noted above, in the packaging industry, a variety of devices have been developed to automatically fabricate foam filled bags for use as protective inserts in packages. Some examples of these foam-in-bag fabrication devices can be seen in U.S. Pat. Nos. 5,376,219; 4,854,109; 4,983,007; 5,139,151; 5,575,435; 5,679,208; 5,727,370 and 6,311,740.

Prior art systems also suffer from hose and cable management (e.g., electronics, chemical supply and solvent supply) difficulties due to their becoming tangled and in a state of disarray so as to present obstacles to operators and potential equipment malfunctions due to cable or hose interference with moving components or the hoses/cables becoming disconnected and/or damaged.

The pump equipment of prior art systems are also prone to malfunction including the degrading of seals (e.g., isocyanate forms hardened crystals when exposed to air which can quickly degrade soft seals). The pumping systems currently used in the field are also subject to relatively rapid deterioration as they often operate at high rates during usage due to, for example, general inefficiency in driving the chemical from its source to the dispenser outlet. The common usage of in-barrel pump systems also introduces limitations in chemical source locations (e.g., typically a 20 foot range limitation for standard heater wire conduit and in barrel pump systems), which can make for difficulties in some operator facilities where it is required or preferred to have the chemical source located at a greater distance from the dispenser. The common usage of in-barrel pumps for prior-art dispenser systems also presents a requirement for multiple chemical sources to achieve the required one-to-one chemical source and pump combination, which in particularly problematic for operators running numerous dispenser systems.

### SUMMARY OF THE INVENTION

The present invention provides a foam chemical dispenser apparatus as set out in appended claim 1 and a method of manufacturing a heater system for a foam dispenser assembly as set out in appended claim 35.

The subject of the invention includes a dispensing device as in a hand held or supported (e.g., foam-in-bag dispensing system) having a heated chemical conduit hose feeding into a dispenser. At the juncture of the heated chemical hose and dispenser (e.g., at an intake manifold of the dispenser) the chemical hose has a feed through unit that allows passage of the electrical power supply for both the main resistance heater and the temperature sensor provided in the hose. The coiled resistance heater extends out toward the chemical source (with a preferred embodiment featuring an in-line chemical pump in communication with a removed chemical source) such that chemical passing along the hose comes in contact with the free end of the heater element is sensed by a temperature sensor receiving the chemical in direct flow contact before exiting a manifold connection at the dispenser.

The dispenser includes a main housing as in an extruded body through which the chemical further travels in going from the heated hose and through the intake manifold with its exit point into a supported mixing module cartridge. Preferably the dispenser has a two zone heating system with a first heater cartridge with temperature sensor provided in the intake manifold and a second heater cartridge with temperature sensor provided so as to extend along the length of the main manifold's receiving cartridge aperture. A preferred embodiment further includes a solvent passageway which is heated together with the chemical in the main manifold. A control system is used to monitor and adjust temperature and preferably also includes means for adjusting the heaters to achieve a uniform and continuous heat level in the chemical passing in the dispenser system once reaching a desired temperature.

To facilitate feeding the coiled heater element into an outer hose sheeting the inventive subject matter includes a bulbous feed facilitator provided at the free end of the coiled resistance element and which provides for quick insertion despite the common ribbed interior of the typical chemical hose sheaths.

The inventive subject matter also includes an in-line chemical feed pump for a foam dispenser system that has an inlet conduit for receiving chemical fluid, a pump head in chemical fluid communication with the inlet conduit, an outlet conduit in chemical fluid communication with the pump head, and a driver. In addition, there is provided a pump drive transmission system positioned in drive transmission communication between the driver and pump head, with the pump drive transmission system including a magnetic coupling with first and second magnetic coupling members placed to opposite sides of an intermediate protective shroud, and with the shroud having a coupling reception cavity which receives one of said first and second magnetic coupling members. The protective shroud is preferably top hat shaped with an annular magnetic arrangement. A method of dispensing foam using an in-line chemical feed pump is also featured including use of a system where two chemical lines are involved each with the in-line pump assembly and each line feeding to a mixing module of a dispenser.

The pump is preferably a gerotor pump driven by a brushless DC motor with an encoder communicating with a control system which monitors the pump characteristics as in pressure transducers at the intake manifold working together with the motor encoder directing signals to the control system. The control system is also preferably in communication with the above noted chemical and hose heater manifolds.

In addition the chemical feed preferably further comprises first and second bearing device received within the pump manifold reception cavity to provide bearing support to said drive transmission shaft and which second bearing device is axially spaced apart from said first bearing device. The pump assembly is also designed to have a large in-feed filter region to facilitate the use of finer mesh screening without high pressure drops.

### BRIEF DESCRIPTION OF THE DRAWINGS

Figure 1 shows an embodiment of the dispensing system of the present invention.
Figure 2 shows a rear elevational view of a dispenser system embodiment used in the dispensing system.
Figure 3 shows a front view of the dispenser system.
Figure 4 provides a top plan view of the dispenser system's coiled conduit feature.
Figure 5 shows a view similar to Figure 2, but with the lifter extended.
Figure 6 shows a base and extendable support assembly of the dispenser system.
Figure 7 shows a front perspective view of a bag forming assembly.
Figure 8 shows a front perspective view of the bag forming assembly mounted on the support base.
Figure 9 shows a rear perspective view of that which is shown in Figure 8.

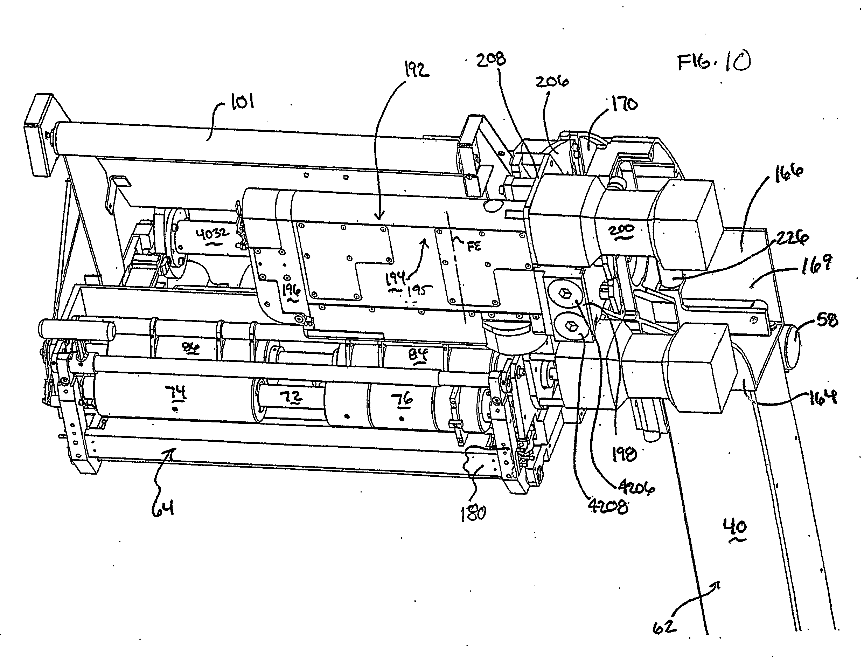

Figure 10 shows a front perspective view of that which is shown in Figure 8 together with a mounted chemical dispenser apparatus (dispenser and bagger assembly combination).
Figure 11A shows dispenser apparatus separated from its support location.
Figure 11B shows a portion of the film travel path past that dispenser apparatus and nip rollers.
Figure 12 shows a view of dispensing apparatus similar to Figure 10, but from a different perspective orientation.
Figure 13 shows an enlarged view of dispenser outlet section.
Figure 14A shows a view similar to Figure 13, but with the mixing module compression door in an open state and with the mixing module in position.
Figure 14B shows the same view as Figure 14A, but with the mixing module removed.
Figure 15 shows a perspective view of the mixing module showing the mounting face of the same.
Figure 16 shows a similar view as that in Figure 15 but from the valving rod end.
Figure 17 shows a cross-sectional view of the mixing module taken along cross-section line A-A in Figure 18.
Figure 18 shows a cross-sectional view of the mixing module taken along cross-section line B to B in Figure 17.
Figure 19 shown an expanded view of the circled region in Figure 18.
Figure 19A shows an additional cross-sectional view of the mixing module taken along cross-section line C-C in Figure 17.
Figure 20 shows a front elevational view of the dispenser apparatus with means for reciprocating the mixing module rod and with a bottom brush cover plate removed.
Figure 21 provides a perspective view of the dispenser apparatus similar to that of Figure 12 but from a different perspective angle.

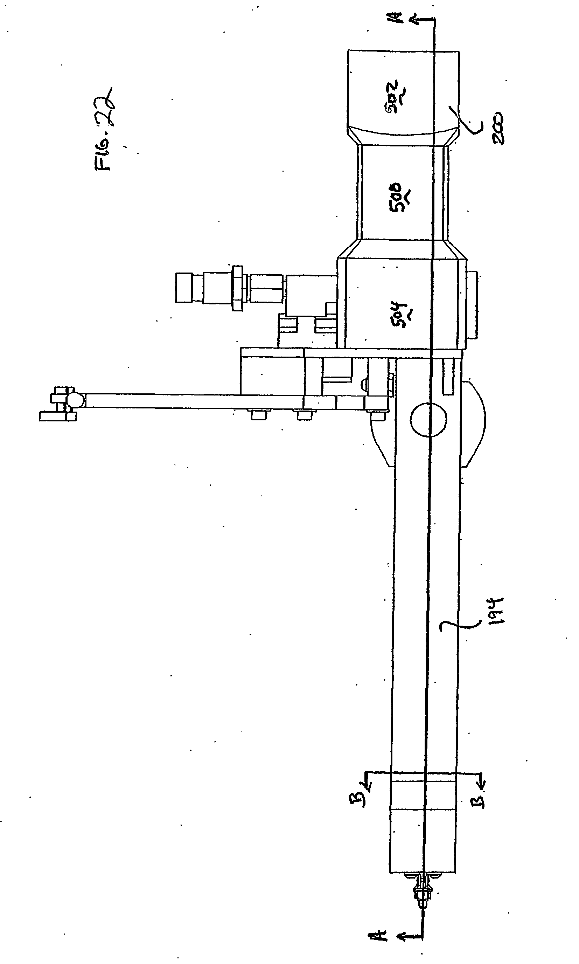

Figure 22 shows a top plan view of that which is shown in Figure 21.
Figure 23 shows a right end and view of that which is shown in Figure 22 (with the brush cover added).
Figure 24 shows a cross-sectional view taken along cross-section view B-B in Figure 22.
Figure 25 shows a cross-sectional view taken along cross-section line A-A in Figure 22.
Figure 26 shows a front elevational view of the dispenser end section of the dispenser apparatus.
Figure 27 shows a rear end view of that which is shown in Figure 26.
Figure 28 shows a cross-sectional view taken along A-A in Figure 27.
Figure 29 shows a cross-sectional view taken along cross-section line C-C in Figure 28.
Figure 30 shows a perspective view of the dispenser (and brush) drive mechanism.
Figure 31 shows the rear side of the main housing for use in the dispenser apparatus.
Figure 32A shows a view of the main housing with access panels removed.
Figure 33 shows the in-line pump assembly of the preferred embodiment of the present invention.
Figure 33A shows a side elevational view of the in line plump assembly of the present invention.
Figure 34 shows a cross-sectional view of the in-line pump assembly.
Figure 35 shows a cut away bottom view of the pump motor and electrical feed.
Figure 36 shows a perspective view of the pump motor showing the threaded output shaft.
Figure 37 shows a similar view to that of Figure 36 with an added connector housing adapter plate.
Figure 38 shows a cross sectional view of the connector housing for connecting the pump motor and outlet manifold of the in-line pump assembly.
Figure 39 shows a cut away view of the magnetic coupling assembly.
Figure 40 provides a perspective view of the outer magnet assembly.
Figure 41 shows a cross-sectional view of the outer magnet assembly.
Figure 42 shows a perspective view of the magnet coupling assembly shroud.
Figure 43 shows a cross-sectional view of the shroud.
Figure 44 shows a perspective view of the outer magnet assembly.
Figure 45A shows a perspective view of the inner magnet assembly for the in-line pump assembly.
Figure 45B shows a cross-sectional view of the inner magnet assembly.
Figure 46 shows a cross-sectional view of the output manifold assembly.
Figure 47 shows a bottom plan view of the outlet manifold.
Figure 48 shows the bearing shaft used in the in-line pump assembly.
Figure 49 shows in perspective the geroter pump head.
Figure 49A shows an exploded view of the geroter pump head.
Figure 50 shows a cross-sectional view of the geroter pump head from a first orientation.
Figure 51 shows a cross-section view of the geroter pump head from a different orientation.
Figure 52 shows the plates of the geroter pump from an inside or interior surface plate perspective.
Figure 53 shows the plates of the geroter pump from an outside surface plate perspective.
Figure 54 illustrates flex coupling for use in the pump assembly.
Figure 55 shows an upper perspective view of the chemical inlet manifold.
Figure 56 shows a lower perspective view of the chemical inlet manifold.
Figure 57 shows a perspective view of a chemical inlet valve manifold.
Figure 58 shows a cross-sectional view of the chemical inlet valve manifold.
Figure 59 illustrates the hose and cable management means of the present invention.
Figure 60 shows a schematic depiction of the heated chemical conduit circuitry.
Figure 61 shows a section of the heated chemical conduit where the thermister or temperature sensor is provided and the bypass return leg for the heater circuit.
Figure 61A shows an enlarged view of the thermister section of the heater coil.
Figure 62 provides a cross-sectional view of a non-thermister section of the heated chemical conduit taken along.
Figure 63 shows a front face elevational view of the feed through block of the chemical conduit heating system.
Figure 64 shows a side elevational view of the feed through block.
Figure 65 illustrates the feed through assembly used in the chemical hose heater wire system for introducing electricity to the heater wire across an air/chemical interface.
Figure 65A shows a cut-away view of the feed through assembly.
Figure 65B shows a perspective view of the feed through assembly.
Figure 65C shows a perspective view of the main manifold and heated chemical hose manifolds in combination.
Figure 66 illustrates a preferred embodiment of the chemical temperature sensing unit which includes a thermister in the illustrated embodiment.
Figure 67 shows the sensing unit of Figure 66 encapsulated as part of a chemical conduit sensing device.
Figure 68 shows the free end of the coiled chemical hose heater wire having a crimped "true" ball end for threaded insertion of the heater wire into the chemical hose.
Figure 69 shows the threading tip means of the present invention alone.
Figure 69A shows an end view of the tip shown in Figure 69.
Figure 70 shows a side view of the tip used on the second tip embodiment.
Figure 71 shows an overall dispenser assembly sub-systems schematic view of the display, controls and power distribution for a preferred foam-in-bag dispenser embodiment.

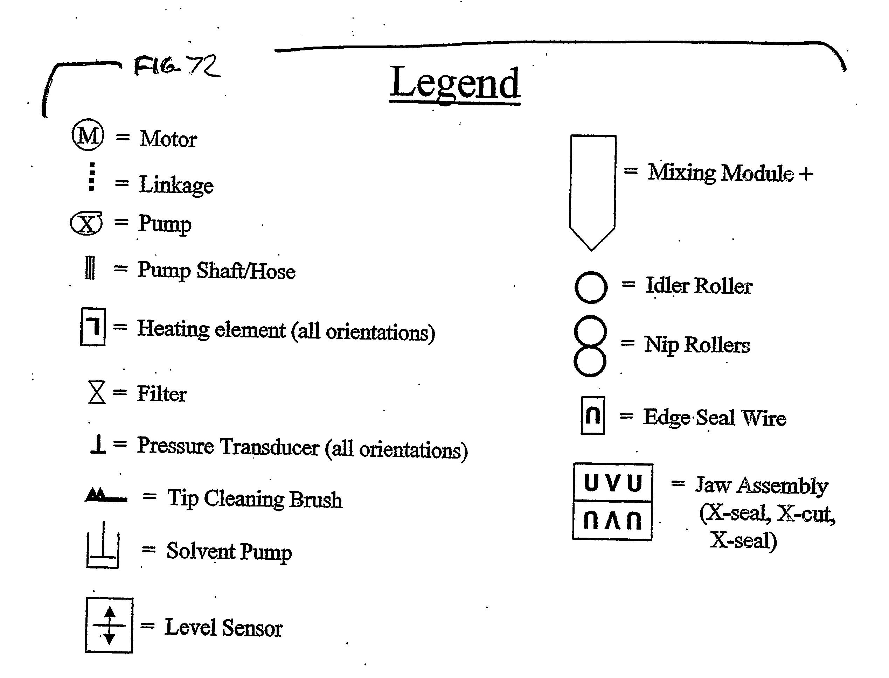

Figure 72 provides a legend key for the features shown schematically in Figure 71.
Figure 73 shows an illustration of the control, interface and power distribution features for the heated and temperature monitored chemical hoses of the present invention.
Figure 74 shows an illustration of the control, interface and power distribution features for the heaters used in the main manifold and dispenser housing to maintain the chemical flowing therethrough at the desired set temperature through use of heater cartridges in the main manifold and dispenser housing adjacent flow passageways formed in the manifold and housing.
Figure 75 shows an illustration of the control, interface and power distribution features for the pump system feeding chemical to the dispenser.

### DETAILED DESCRIPTION OF THE PREFERRED EMBODIMENTS

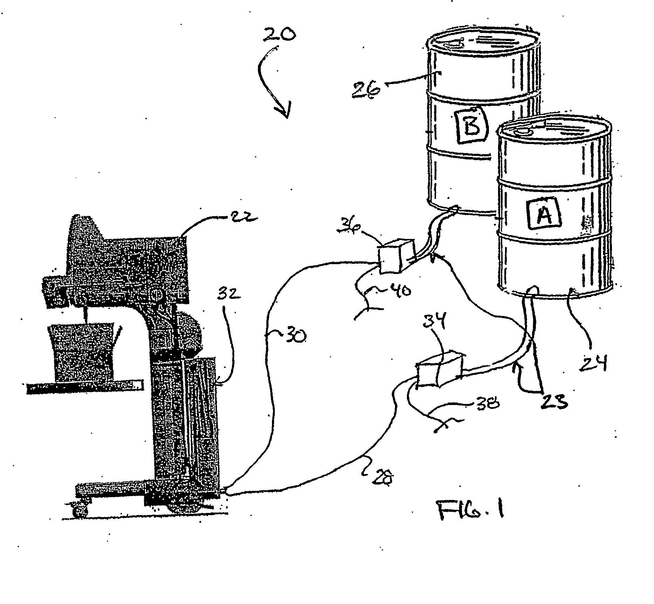

Figure 1 illustrates a preferred embodiment of dispensing system 20 which comprises dispenser system 22 in communication with the chemical supply system 23 comprising chemical supply container 24 (supplying chemical component A) and chemical supply container 26 (supplying chemical component B). Chemical hoses 28 (chemical A) and 30 (chemical B) provide fluid communication between respective chemical supply containers 24, 26 and in-line pump system 32 mounted on dispenser system 22. Dispenser system 22 includes in-line pump system 32 that is in communication with chemical supply containers that are either in proximity (12.2 m (40 feet) or less) to the dispenser system 22 or remote (e.g., greater than 12.2 m (40 feet)) from where the dispenser system 22 is located. This allows the containers to be situated in a more convenient or less busy area of the plant, as it is often not practical to store chemicals in close proximity to the machine (e.g., sometimes 30.5 to 152.4 m (100 to 500 feet) separation of dispenser and chemicals is desirable).

Thus the present invention has a great deal of versatility as to how the dispenser system is to be set up relative to the chemical source. For example, "in-barrel pumps," while available for use as a chemical drive component in one chemical supply system 23 of the present invention, are less preferred as they have a limited reach as they are connected to the electric resistance heaters positioned between the chemical supply and the dispenser. The normal chemical hose length is 6 m (20 feet), but typically at least five 1.5 m (feet) of this length is required to route the hoses and cables out of the system enclosure and part way down the support stem. This means that the chemical drums for many prior art "in barrel" pump systems can be no more than 4.57 m (15 feet) way from the dispenser system, which is not feasible in many plants. The in barrel pumps can to some extent be modified with longer chemical hoses and pump cables (e.g., chemical hose internal electric resistance heater wires), but there is a practical limit on how far these hoses can extend, since they are light duty and susceptible to mechanical damage, kinking, and crushing. Another limitation, for various electrical and electro-magnetic interference (EMI) reasons, is the cable length from the drive board in the enclosure to the "in barrel" pumps. Because of these reasons it is estimated that a practical length limit on the pump cable for such systems is 9.14 to 12.19m (30 to 40 feet) without industry unacceptable modifications or enhancements (expensive) to the controls or to the cable construction. As a number of installations require that the containers be stored hundreds of feet (e.g., 30.5 to 152.4 m 100 to 500 feet or more) away from the system, the estimated practical limit of 9.14 to 12.19 m 30 to 40 feet for such hoses is not enough for many requirements. An embodiment of the present invention is designed to accommodate these long length installation requirements.

Figure 1 further illustrates feed pumps 34, and 36 associated with chemical supply containers 24, and 26. Feed pumps 34, and 36 provide a positive pressure to the in-line pump system so as to provide positive pressure on the in line pumps' input ports to avoid problems like cavitations, or starvation of the pumping means (e.g., a gerotor based pump system) and to reliably suck chemical out of the bottom of the supply containers even if the in-line pumps are far away (e.g., over 30.5m (100 feet)). Short runs of hose length between the containers and the positive pressure feed pumps can be handled by attaching a dip tube to the inlet end of the feed hose, or by simply attaching the feed hose to the bottom of the container via valves and connectors.

The positive pressure feed pumps are preferably located in or near the chemical supply containers, are preferably air driven, and preferably produce between 349 KPa and 1,378 KPa (50 and 200 psi) of pressure at the input port of each in-line pump. Rather than individual feed pumps, a common feed pump system is provided in a preferred embodiment having an output capacity to supply chemical to multiple systems all dispensing at the same time. Figure 1 illustrates a multiple chemical conduit arrangement wherein feed pumps 34 and 36 feed chemical to more than one dispenser system at the same time with lines 28 and 30 feeding dispenser system 22 and lines 38 and 40 feeding a second dispenser system (not shown). A single feed pump with manifold assembly can also be used to distribute chemicals A and B to multiple locations. Under the present invention the feed pumps can have expanded capacity such as a capacity to feed 4 to 5 systems simultaneously. The ability to run multiple systems from a single set of supply containers sets the in-line pump option provided by the present invention apart from in-barrel pump based systems, which can only feed one system per set of containers.

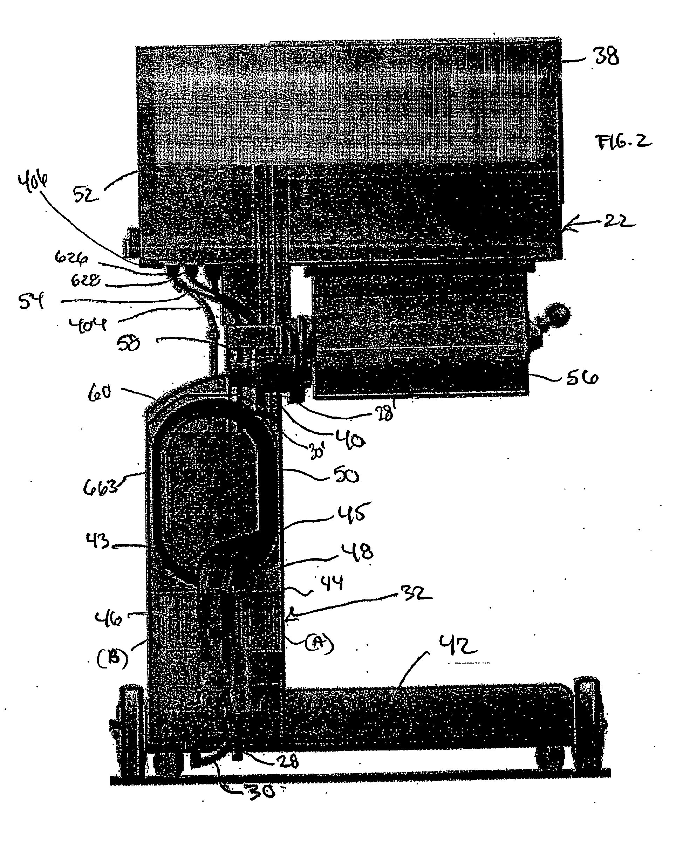

Figure 2 provides a rear elevational view of dispenser system 22 which includes exterior housing 38 supported on telescoping support assembly 40 which in a preferred embodiment comprises a lifter (e.g., electric motor driven gear and rack system with inner and outer telescoping sleeves) and is mounted on base 42 (e.g., a roller platform base to provide some degree of mobility). Further mounted on base 42 is in-line pump system 32 comprising in line chemical A pump 44 and in line chemical B pump 46 housing output or downstream chemical supply conduit sections 43 and 45 that extend into hose manager assembly 48 containing heated coiled hoses and cables set 50. The rear view shown in Figure 2 also illustrates control console 52 and communication links generally represented by communication lines 54. Film roll reception assembly 56 and film roll driver 58 extends out from support assembly 40.

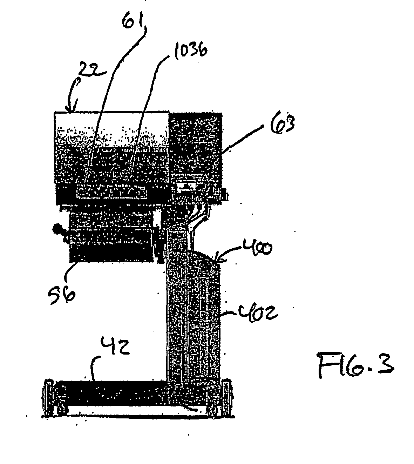

Figure 3 provides a front view of dispenser assembly 22 including first and second control panels 61 and 63.

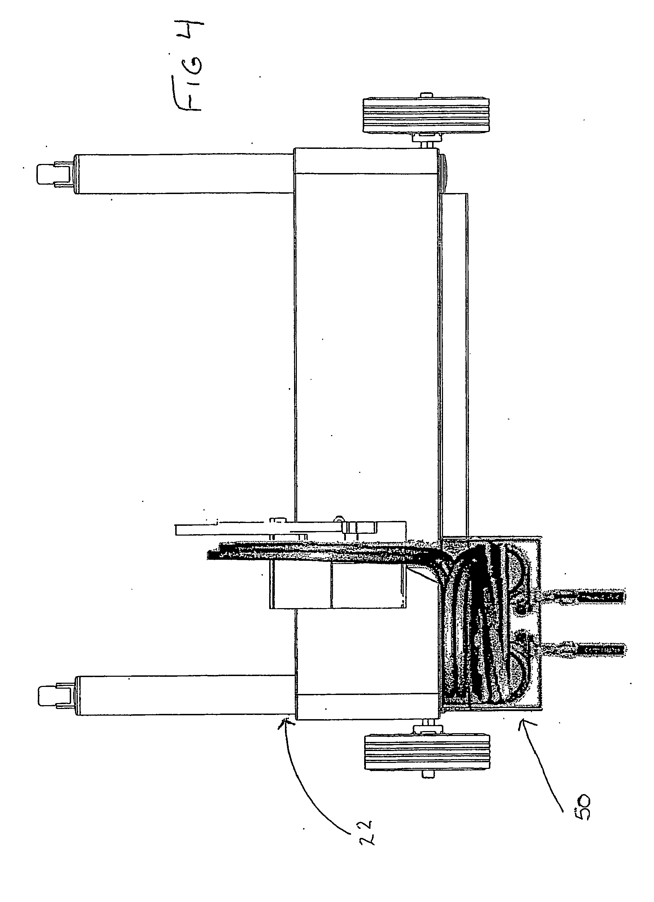

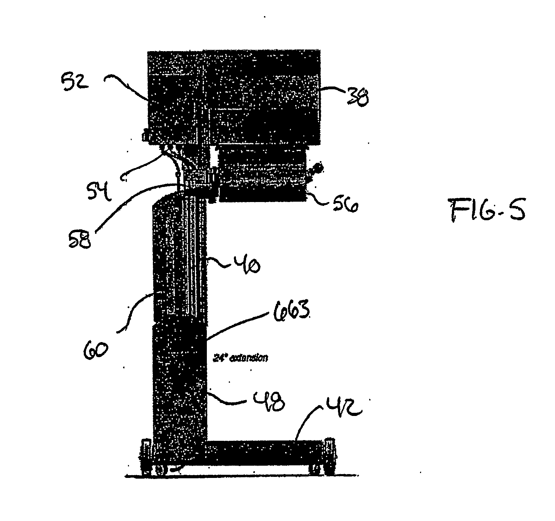

Figure 4 provides a top plan view of dispending system 22 with heated coiled hoses and cables set 50 emphasized relative to the rest of the system 22 shown with dotted lines. Figure 5 provides a similar rear elevational view as in Figure 2, except with extendable support assembly 40 being in a maximum extension state (e.g., a 38.1 cm to 101.6 cm (15 to 40 inch) extension with a 100.1 cm (24 inch) extension being well suited ergonomically from a collapsed maximum height of 91.4 to 152.4 cm (3 to 5 feet) being illustrative for the dispenser). With reference to Figure 5 and the front view of Figure 1 there is seen solvent container 60 which is fixed to extendable support 40 and rides up and down with the moving component of lifter or extendable support 40.

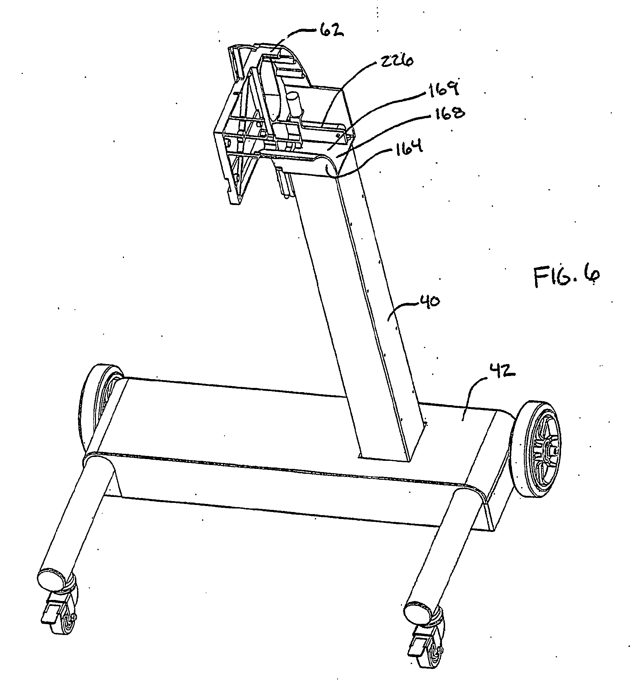

Figure 6 illustrates base 42 and lifter or extendable support assembly 40 (e.g., preferably a hydraulic (air pressure) or gear/rack combination or some other telescoping or slide lift arrangement) extending up from base and having bagger and dispenser assembly support mount 62. Figure 6 also illustrates the mobile nature of base 42 which is a wheeled assembly.

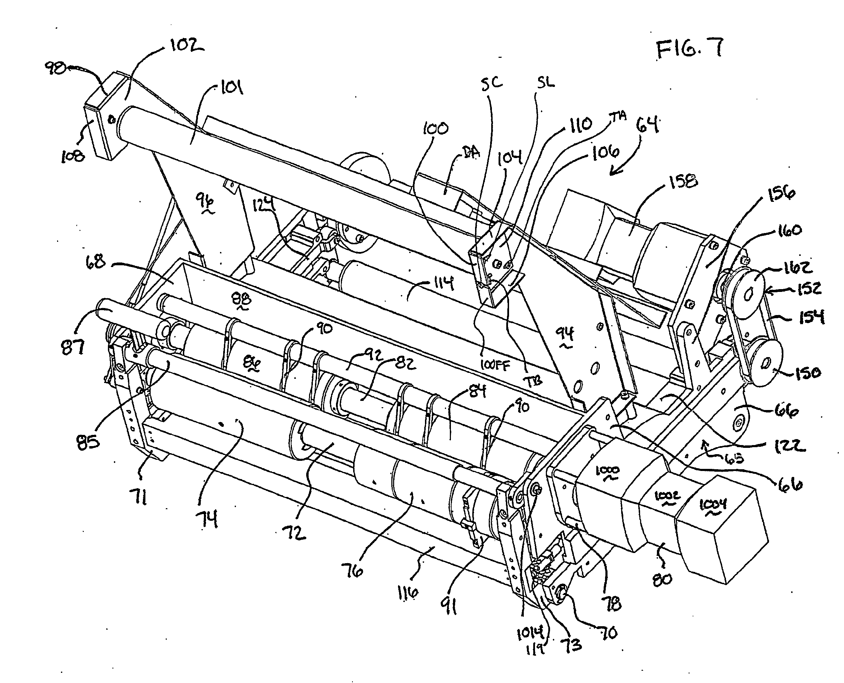

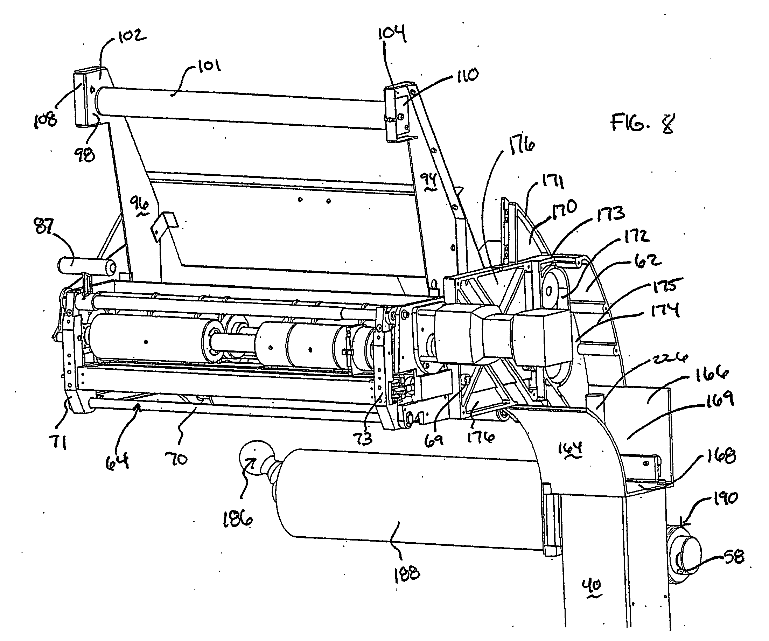

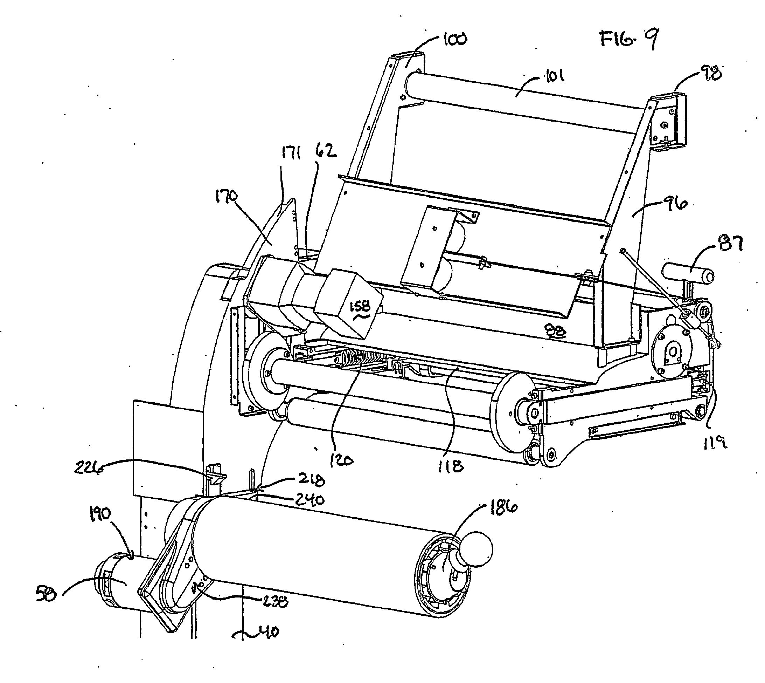

Figure 7 shows foam-in-bag assembly or "bagger assembly" 64 (with dispenser removed for added clarity) that is designed to be mounted in cantilever fashion on support mount or bracket 62 as shown in Figures 8 and 9. Bagger assembly 64 comprises framework 65 having first side frame 66 (shown on the right side relative to a front view in Figure 7) and second side frame 68 (shown on the left side in the front view Figure 7). Side frame 66 has means for mounting bagger assembly 64 to support bracket 62 (e.g., a set of bolts 69 as shown in Figure 8). Framework 65 further includes front pivot rod 70 extending between the two interior sides of side frames 66, and 68, as well as front face pivot frame sections 71 and 73 which are pivotally supported by pivot rod 70. Rod 70 also extends through the lower end of front face pivot frame sections 71 and 73 to provide a rotation support for sections 71, 73. Driver roller shaft 72, supporting left and right driven or follower nip rollers 74 and 76, also extends between and is supported by side frames 66 and 68. While in a latched state the upper ends of pivot frame sections 71, 73 are also supported (locked in closed position) by door latch rod 85 with handle latch 87.

First frame structure 66 further includes mounting means 78 for roller shaft drive motor 80 in driving engagement with drive shaft 82 extending between and supported by frame structures 66 and 68. Drive shaft 82 supports drive nip rollers 84 and 86. Framework 65 further comprises back frame structure 88 preferably formed as a single piece unit with side frame structures 66 and 68. Driven roller shaft 72 and driver roller shaft 82 are in parallel relationship and spaced apart so as to place the driven nip rollers 74, 76, and drive nip rollers 84, 86 in a film drive relationship with a preferred embodiment featuring a motor driven drive roller set 84, 86 formed of a compressible, high friction material such as an elastomeric material (e.g., synthetic rubber) and the opposite, driven roller 74, 76 is preferably formed of a knurled aluminum nip roller set (although alternate arrangement are also featured as in both sets being formed of a compressible material like rubber). The roller sets are placed in a state of compressive contact by way of the relative diameters of the nip rollers and rotation axis spacing of shafts 72, and 82 when pivot frame sections 71, 73 are in their roller drive operation state. Figure 7 further illustrates door latch rod 85 rotatably supported at its opposite ends by pivot frame sections 71, 73 and having door latch (with handle) 87 fixedly secured to the left end of door latch rod 85. As explained in greater detail below, latch 87 provides for the pivoting open of pivot frame sections 71, 73 of the hinged access door means about pivot rod 70 into an opened access mode. While in a latched state, the upper ends of pivot frame sections 71, 73 are also supported (locked in closed position) by door latch rod 85.

Drive nip rollers 84 and 86 have slots formed for receiving film pinch preventing means 90 (e.g., canes 90) that extend around rod 92 with rod 92 extending between first and second frames 66, 68 and parallel to the rotation axes of shafts 72 and 82. Figure 7 further illustrates bag film edge sealer 91 shown received within a slot in roller 76 and positioned to provide edge sealing to a preferred C-fold film supply. Rear frame structure 88 has secured to its rear surface, at opposite ends, idler roller supports 94 and 96 extending up (e.g., 20.3 to 38.1 cm (8 to 15 inches) or a preferred 27.9 cm (11 inches)) from the nip roller contact location. Idler roller supports 94, 96 include upper ends 98 and 100 each having means for receiving a respective end of upper idler roller 101 (e.g., a roller shaft reception aperture or bearing support). As shown in Figure 7, ends 98, 100 present opposing parallel face walls 102, 104 and outward flanges 106, 108. Within the confines of flanges 106, and 108 there is provided first and second idler roller adjustment mechanisms 110, and 112. In a preferred embodiment, one of the adjustment mechanisms provides vertical adjustment as to the rotation axis of idler roller 101 while the other provides front to back horizontal adjustment to the same idler roller 101 rotation axis. Figure 7 further illustrates the horizontal track adjustment means of the present invention which, in combination with the opposite vertical adjustment track plate (opposite side - not shown), helps ensure the film properly tracks through the nip roller (retains a right angle film edge relationship to the roller axis while traveling a pre-set preferably generally centered or intermediate path through the nip roller set). Sliding plate 110 is retained in a frictional slide relationship with surface 100 by way of slide pins TA extending through elongated horizontal slots SL at opposite corners of the plate. On the front flange 100 FF there is supported adjustment screw SC extending into engagement with tab TB on sliding plate 110 receiving an end of the idle roller 101. Upon rotation of screw SC, plate 110 is shifted together with the end of the idler roller. The opposite side is just the same but for there being a vertical adjustment relationship. In this way, idler roller 101 can be adjusted to accommodate any roller assembly position deviation that can lead to non-proper tracking and also can be used to avoid wrinkled or non-smooth bag film contact. Also, idler roller 101 is preferably a steel or metal roller and not a plastic roller to avoid static charge build up relative to the preferred plastic film supplied. Idler roller is also preferably of the type having roller bearings positioned at its ends (not shown) for smooth performance and smooth, unwrinkled film feed.

Second or lower idler roller 114 is shown arranged parallel to drive roller shaft 82 and supported between left and right side frames 66 and 68. Idler roller 114 preferably has a common roller/bearing design with that of idler roller 101. Also, these figures show first (preferably fixed in position when locked in its operative position) end or cross-cut seal support block or jaw 116 positioned forward of a vertical plane passing through the nip roller contact location and below the axis of rotation of drive shaft 82. End seal jaw 116, which preferably is operationally fixed in position, is shown having a solid block base of a high strength (not easily deformed over an extended length) material that is of sufficient heat wire heat resistance (e.g., a steel block with a zinc and/or chrome exterior plating), and extends between left and right frame structures 66, and 68, but again, like driven shaft 72 and rollers 74, 76, is preferably supported on pivot frame sections 71, 73 and extends parallel with driven shaft 72. Figure 7 illustrates block 116 rigidly fixed at its ends to the opposing, interior sides of pivot frame sections 71, and 73 for movement therewith when latch 87 is released.

Movable end film sealer and cutter jaw 118 (Fig. 9) is secured to end sealer shifting assembly 120 and is positioned adjacent fixed jaw 116 with fixed jaw having sealer and cutter electrical supply means 119 with associated electric connections supported on the opposite ends of jaw 116 positioned closest to the front or closest to the operator. End sealer shifting assembly 120 is positioned rearward and preferably at a common central axis height level relative to end seal contact block 116. During formation of a bag, heater jaw 116 supports a cutter heater wire in-between above and below positioned seal forming wires (e.g., for a total of three vertically spaced apart heater wires) with of, for example 3.2 to 19.1 mm (1/8 to 3/4 inch) equal spacing with 6.4 to 12.7 mm (¼ to ½ inch) spacing being well suited for providing the seal (SE) cut (CT) seal (SE) sequence in the bag just formed and the bag in the process of being formed. The SE-CT-SE sequence in conjunction with edge seal ES, forms a complete bag from a preferred C-film source. With the SE-CT-SE arrangement there is provided a more assured bottom bag formation and there is avoided the problems associated with prior art devices that rely on the end or cross-cut only as the means for sealing. For example, if for any reason a perfect end seal is not secured during the cut formation, there can result massive foam spillage and build up as the foam mix is at its most liquid and least foam development stage when the dispenser first shoots the shot into the just formed bag bottom.

A preferred embodiment features a combination end film sealer means and cutter means having three independently controlled cross-cut/cross-seal resistance wire mechanisms preferably extending across the full length of the (rear) face of block 116. These wires are connected at their ends with quick release wire end holders (not shown). The end seal and cutter means on the fixed block 116 (after access panel locked in place) works in conjunction with movable sealer shifting assembly or jaw support assembly 120. The heater and sealer wires are sensed and thus in communication with a controller such as one associated with a main processor for the system or a dedicated heater wire monitoring sub-processing as illustrated in Figure 186. Venting preferably takes place on the side with the edge seal ES through a temporary lowering of heat below the sealing temperature as the film is fed past or some alternate means as in adjacent mechanical or heat associated slicing or opening techniques. Block 118 also has a forward face positioned rearward (farther away from operator) of the above mentioned nip roller vertical plane when in a stand-by state and is moved into an end seal location when shifting assembly is activated and, in this way, there is provided room for bag film feed past until end sealer shifting assembly 120 is activated.

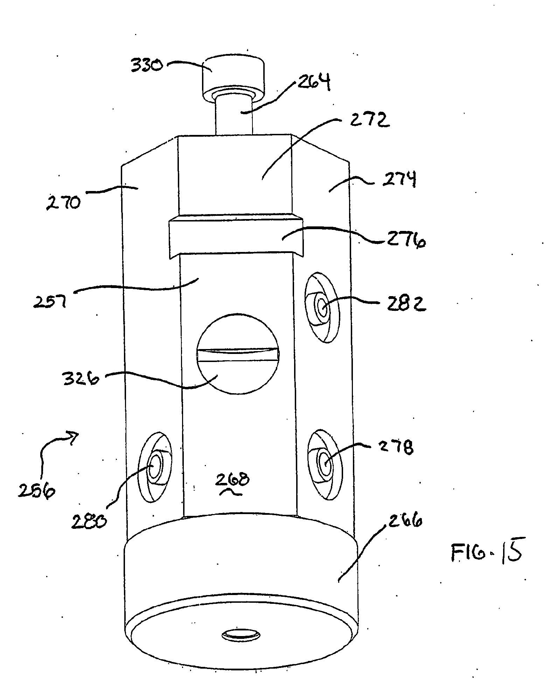

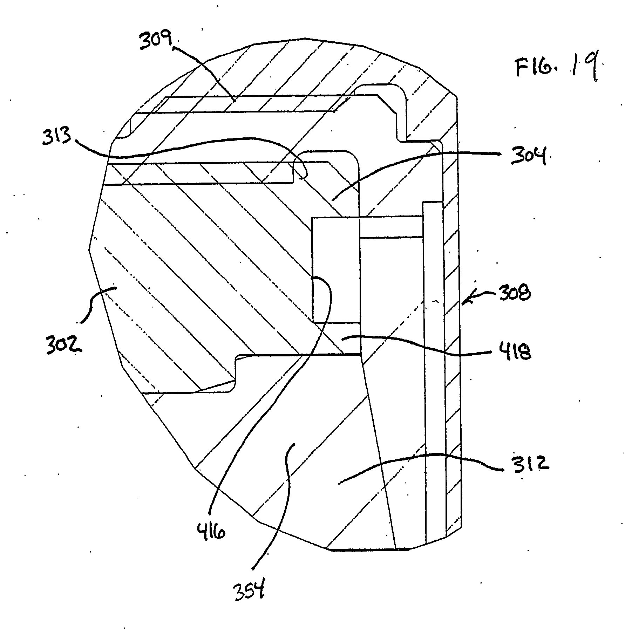

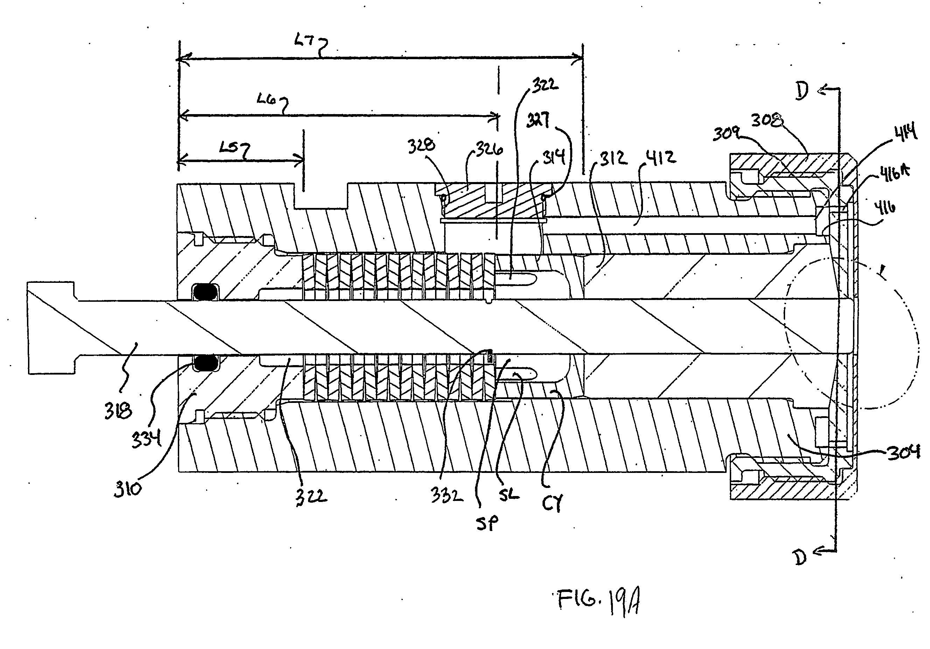

Mixing module 256 shown in Fig. 15 shares similarities with the mixing module described in co-pending U.S. Patent Application No. 10/623,716, filed on July 22, 2003 and entitled Dispenser Mixing Module and Method of Assembling and Using Same, which application corresponds to publication WO 2004 101244. Through the use of mixing chamber shift prevention means (313, Fig. 19) there is prevented movement of a mixing chamber within its housing due to rod stick and compression and return of the compression means with the mixing chamber and thus there is avoided a variety of problems associated with the movement of the mixing chamber in the prior art. The present invention also preferably features mixing chamber shift prevention means used together with an additional solvent distribution system that together provide a tip management system with both mixing chamber position maintenance and efficient solvent application to those areas of the mixing module otherwise having the potential for foam build up such as the dispenser outlet tip.

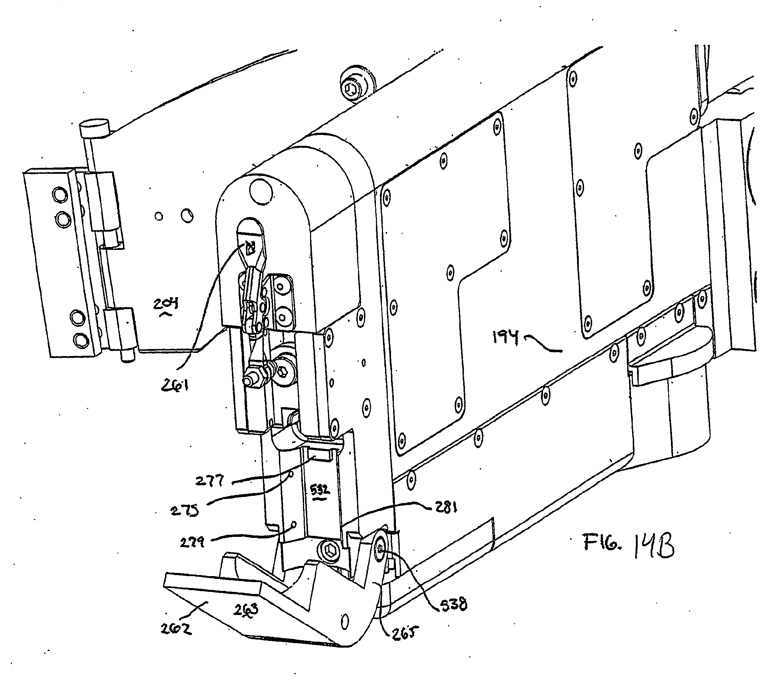

Figure 15 illustrates the contact side 268 of mixing module housing 257 encompassing mixing chamber 312 with shift prevention means 313 and also, preferably provided with solvent flow distribution means having solvent entrance port 282. Housing 257 features, first, second and third side walls 270, 272 and 274 which together provide housing contact side 268 representing half of the walls of the preferred hexagonal cross-sectioned mixing module. Wall 272 includes main housing positioner 276, with a preferred embodiment being a positioner recess configured to receive a corresponding positioner projection 277 provided in main housing component 532 (Fig. 14B). Positioner 276, when engaged by projection 277, acts to position first and second mixing module chemical inlet ports 278, 280 in proper alignment with chemical outlet feed ports 279, 281 of housing module support 532 (Fig. 14B). Similarly, the positioning means for the mixing module further aligns the mixing module solvent inlet port 282 in proper position relative to solvent outlet port 275 (Fig. 14B) of module support housing 532. While a two component system is a preferred embodiment of the present invention, the present invention is also suitable for use with single or more than two chemical component systems, particularly where there is a potential stick and move problem in a mixing or dispensing chamber of a dispenser (mixing being used in a broad sense to include multi-source chemical mixing or the spraying into a rod passageway of a chemical through a single, sole inlet source and an internal intermingling of the sole chemical material's constitution).

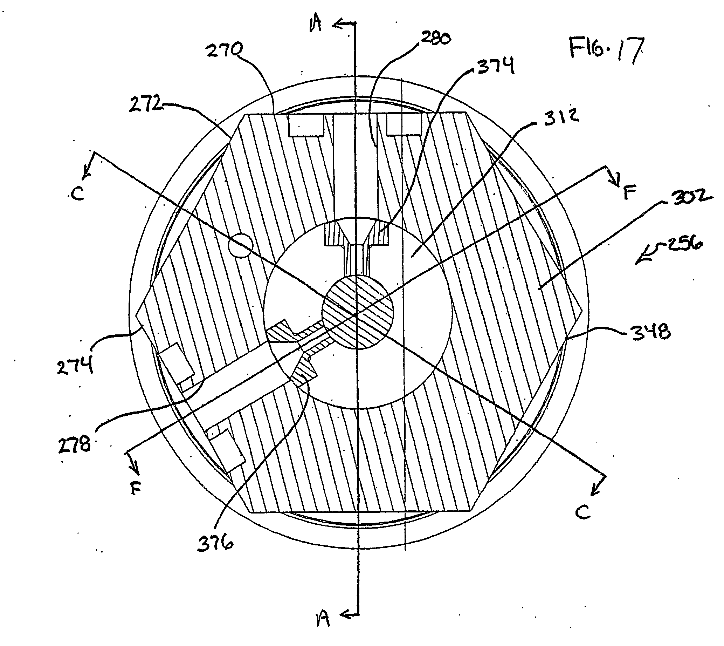

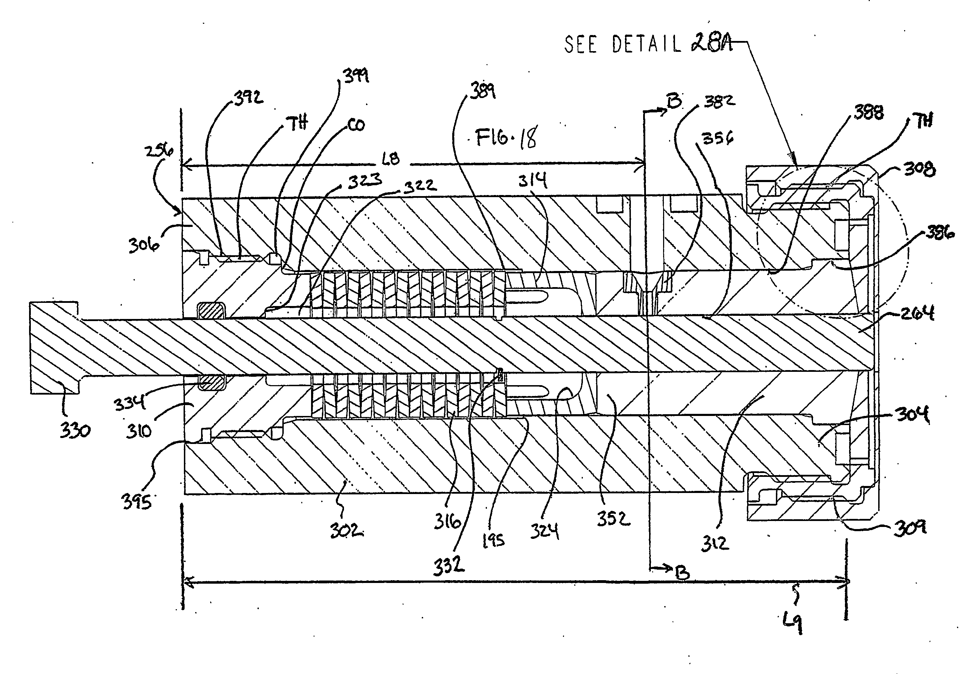

Figures 17 to 19 illustrate mixing module 256 in an assembled state comprising module housing 302 having a "front "(open) end 304 and a "rear" (open) end 306 with associated front end solvent dispensing front cap assembly 308 or cap covering and back cap 310. Front cap assembly 308 and back (e.g., compression) cap 310 retain in operating position mixing chamber 312, slotted cup-shaped spacer 314 and Belleville washer stack 316 (the preferred form of compression means). Each of the face cap assembly 308, mixing chamber 312, spacer 314, washer stack 316 and back cap 310 have an axial passageway for receiving valving or purge rod ("rod" hereafter) 264. Mixing module 256 also preferably has internal solvent chamber 322 with spacer 314 and back cap 310 preferably formed with solvent reception cavities (323,324). The Belleville washers in stack 316 are also shown as having an annular clearance space which facilitates solvent flow along the received portion of rod 318 and provides room for limit ring 332 for limiting axial movement of rod 264.

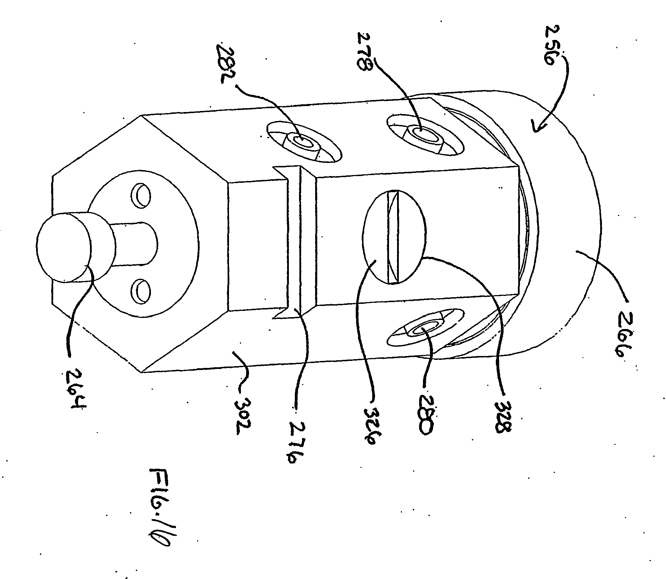

Solvent cap 326 (Fig. 16), is attached (e.g., threaded) to housing 302 to close off solvent access opening 328 formed in one of the sides (e.g., side wall 272) of the multi-sided housing 302. Solvent cap 326 is preferably positioned to axially overlap part of the internally positioned Belleville washer stack 316 and the spacer 314 positioned between the compression means 316 and Teflon block 312. The Belleville washer stack 316 is also preferably arranged in opposing pairs (e.g., 8 washer pairs with each pair set having oppositely facing washers) which provides a preferred level of 890 N (200 lbf.) relative to spacer contact with the mixing chamber. Solvent cap 326 provides an access port for emptying and filling the solvent chamber 322 which provides for a pooling of solvent (continuous replenishment flow pooling under a preferred embodiment of the present invention) at a location which retains fluid contact with an exposed surface of the valving rod as it reciprocates in the mixing chamber. There is further provided solvent feed port 282 which provides an inlet port for solvent from a separate source (preferably a pumped continuous or periodic flow solvent system as described below) for feeding the flow through dispenser tip cleaning solvent system for the front cap assembly 308 and replenishing solvent chamber 322 after its initial filling via access cap 326.

Valving rod 264 has a reciprocating means capture end 330 (e.g., an enlarged end as in a radially enlarged cylindrical end member) for attachment to a motorized rod reciprocator. Rod 264 axially extends completely through the housing so as to extend out past respective face and back caps 308 and 310. Rod 264 also comprises annular limit ring 332 to avoid a complete pull out of rod 264 from the mixing module. A rod contacting seal 334 is further preferably provided such as an inserted O-ring into an O-ring reception cavity formed in back cap 310. Housing 302 further includes chemical passage inlet holes 278, 280 (Fig. 17) formed at midway points across side walls 270 and 274 which are positioned to opposite sides of intermediate side wall 272 in the preferred hexagonal configured housing 302. Wall 348 is preferably diametrically opposed to wall 272. Walls 270 and 274 position chemical inlets 278, 280 in the preferred 120° chemical inlet spacing.

Chemical port holes 374, 376 are shown in Figure 17 and are formed through the radial thickness of the main body of the Teflon mixing chamber and are shown circumferentially spaced apart and lying on a common cross-section plane (rather than being axially offset which is a less preferred arrangement). The central axis of each port hole 374, 376 is designed to be common with a respective central axis of inlet passage holes 278, 280, in housing 257 and the respective central axis for chemical output ports 279 and 281 feeding the mixing module. The central axis for port holes 374, 376 also are preferably arranged to intersect the central axis of passageway 356 at a preferred angle of 120°.

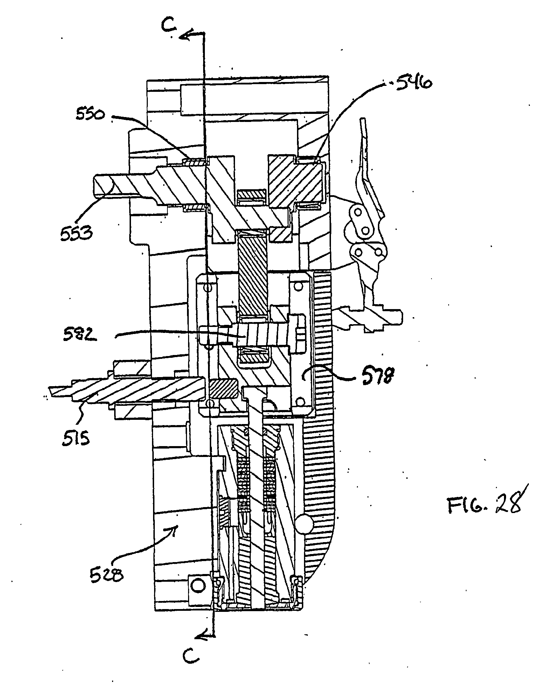

Also, port holes 374, 376 preferably have a step configuration with an outer large reception cavity 378 and a smaller interior cavity 380. The step configuration is dimensioned to accommodate ports 382, 384 (Fig. 28) which are preferably stainless steel ports designed to produce streams of chemicals that jet out from the ports to impinge at the central axis, based on, for example, a 120° angle orientation to avoid chemical cross-over problems in the mixing chamber cavity.

With reference to Figure 3 there is illustrated solvent supply system 400 comprising supply tank 402 having solvent conduit 404 providing flow communication between solvent tank 402 and solvent plug inlet 406 (Fig. 2), through which solvent is forced via the metering pump which is in communication with the control processor. Downstream from solvent plug inlet 406, the solvent line is in flow communication with main support housing 194 having a solvent conduit which extends through main housing 194 and opens out into the module support housing 532. From there the solvent passes via port 275 (Fig. 14B) into solvent port 282 (Fig. 15) in mixing module 256 when mixing module 256 is properly positioned in dispenser system 192. Solvent is preferably supplied based on a preprogrammed sequence such as one which provides heavy flow volumes at completion of a use cycle or periodically, over periods of non-use (e.g., overnight prior to a daytime shift) as well as periodically during use (e.g., after a predetermined number of shots (e.g., after each shot to every 5 shots) and/or based on a time cycle independent of usage. Preferably, the solvent flow control activates valve mechanism 408 based on open or shut off signals, with an opening signal being coordinated with solvent pump operation. The controller sub-system is shown schematically in Figure 186.

Solvent inlet port 282 opens into internal solvent chamber 322 as does the separate access solvent opening 328 blocked off by solvent cap 326. Solvent port 282 has a central axis that is axially positioned on the housing such that its central axis extends through a central region formed between the compression cap 310 and spacer 314. Figure 19A illustrates solvent passage 412 which is in solvent flow communication with solvent chamber 322 and is preferably formed in the annular thickness of housing 302 such as an annular port opening out into chamber 322 at its rear end and extending axially toward the front end of housing 302 through a peripheral central region of one of the illustrated housing walls. Outlet opening 414 is formed in recessed front housing surface 416 extending about the circumference of the front end of housing 302. The annular recess defined by housing surface is covered over by inner threaded front cap 309 having circumferentially spaced solvent opening 416A which open into a larger radiused annular cavity which feeds solvent to the free end of rod stem 318 and the over dispenser tip through the chemical outlet hole formed in outer front cap component 308.

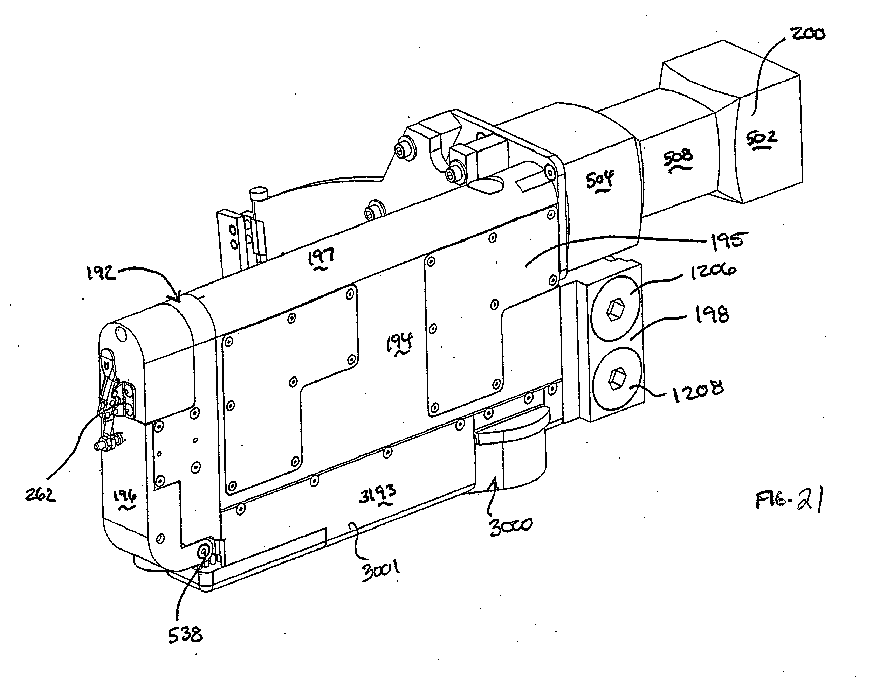

As a means for reciprocating rod 264 and thus controlling the on-off flow of mixed chemicals from the mixing module, reference is now made to the mixing module drive mechanism 500 of a preferred embodiment of the present invention. In this regard, reference is made to, for example, Figures 21, 25 and 38 to 30 for an illustration of a preferred embodiment of the means for reciprocating purge/valve rod 264 extending in mixing module 256.

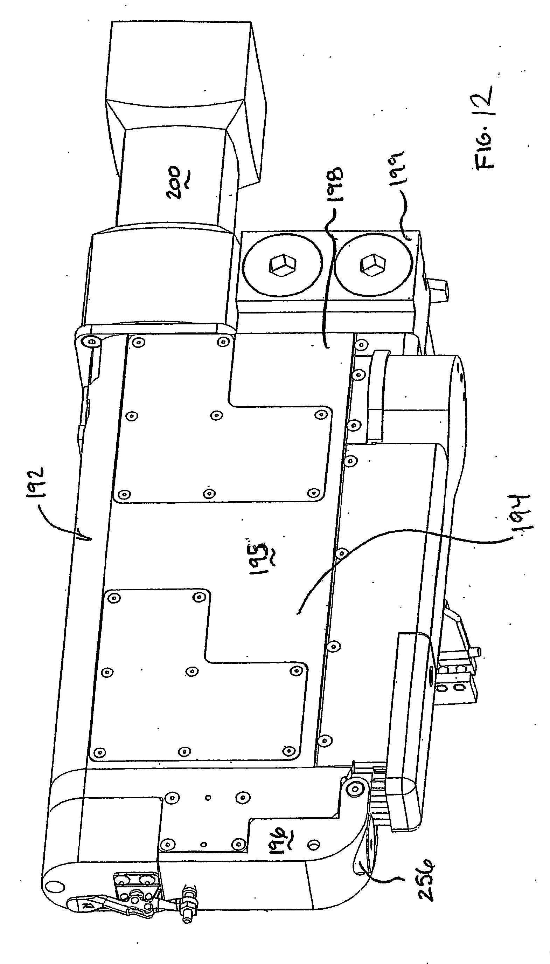

Figure 21A provides a perspective view of dispenser system 192 (similar to Figure 12 but at a different perspective angle). Dispenser system 192 is shown in these figures to include dispenser housing 194 with main housing 195 section, dispenser end section 196 and chemical inlet section 198, with at least the main housing and dispenser end sections each having an upper convex or curved upper surface 197 corresponding in configuration with each other so as to provide a smooth, non-interrupted or essentially seamless transitions between the two. The preferably parallel side walls of the main housing 194 and dispenser end section 196 of dispenser apparatus 192 also fall along a common smooth plane and are flush such that corresponding side walls of each provide an uninterrupted or essentially seamless transition from one to the next (the access plates shown being mounted so as to be flush with the surrounding dispenser housing side walls with, for example, countersunk screws). Dispenser apparatus thus provides smooth, continuous contact surfaces on the top and sides of the portion of dispenser apparatus 192 forward of line 191 representing generally the back edge location of the film being fed past dispenser apparatus 192.

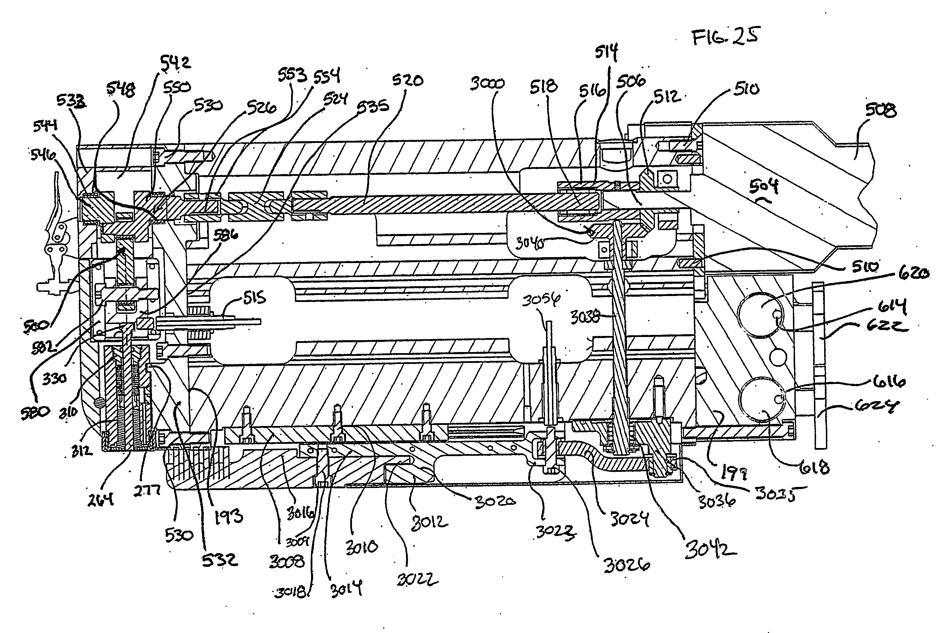

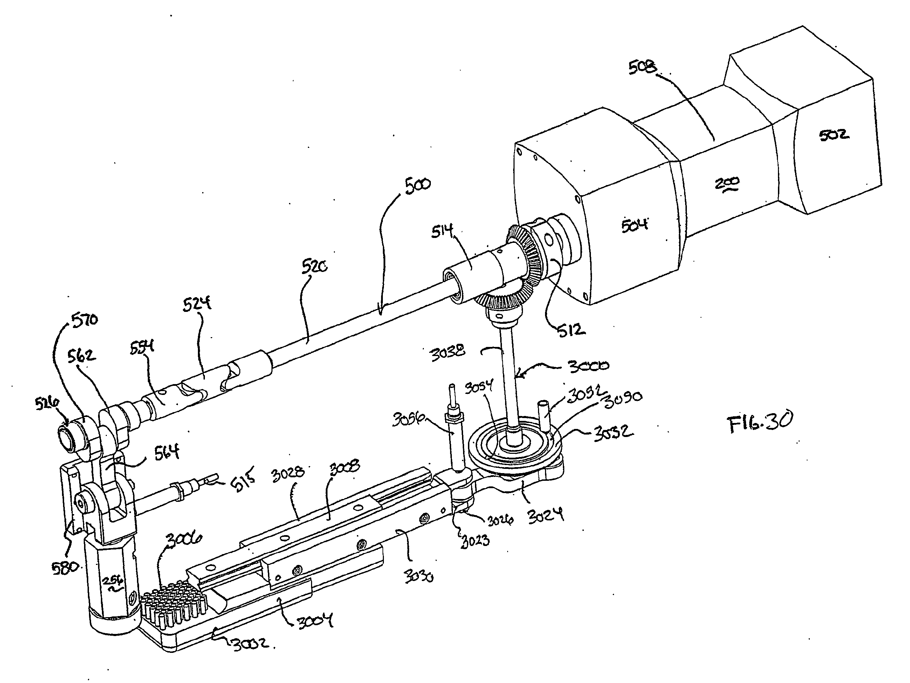

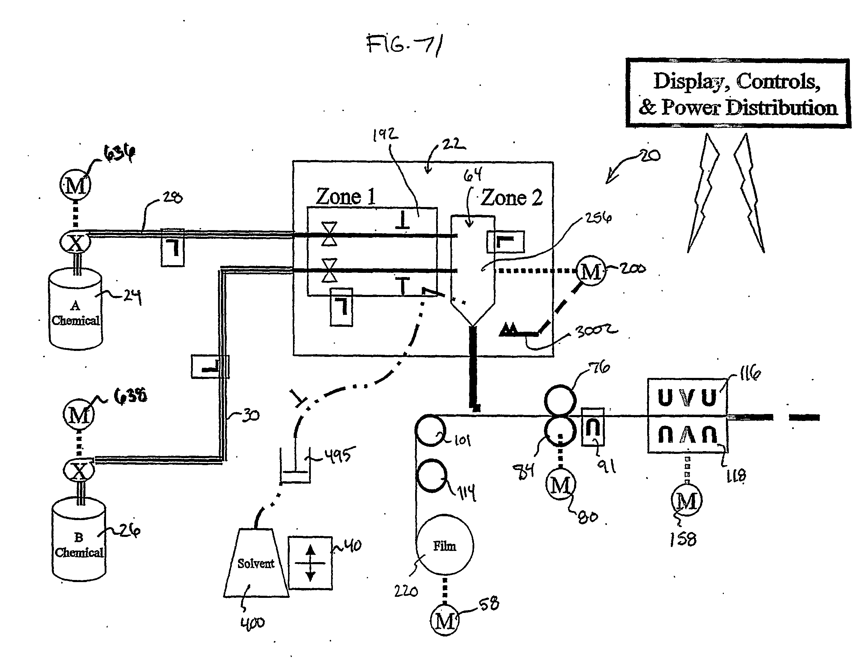

With reference particularly to Figure 25 and 30 there is illustrated dispenser drive mechanism 500 which is used to reciprocate rod 264 within mixing module 256 and is housed in dispenser system 192 and, at least, for the most part, is confined within the smoothly contoured housing of dispenser system 192. Dispenser drive mechanism 500 includes dispenser drive motor system 200 ("motor" for short which entails either a motor by itself or more preferably a motor system having a motor, an encoder means and/or gear reduction means). Motor 200 (the system "driver") preferably comprises a brushless DC motor 508 with an integral controller 502 mounted to the back section of the motor and encased within the motor housing, and gear reduction assembly 504. Motor controller 502 provides encoder feedback (e.g., a Hall effect or optically based encoder system) to the controller such as one provided as a component of main system control board which is used to determine speed and position of the various drive components in the drive mechanism 500. Figure 71 illustrates the control system for operating, monitoring and interfacing the data concerning the rod drive mechanism. The motor controller input from the main system control board preferably includes a 0 to 5 volt speed signal from the main system controller, a brake signal, a direction signal and an enable signal. Motor 200 further preferably includes a gear reduction front section 504 out from which motor output drive shaft 506 extends (Figure 25). The motor drive source is located in the central section 508.

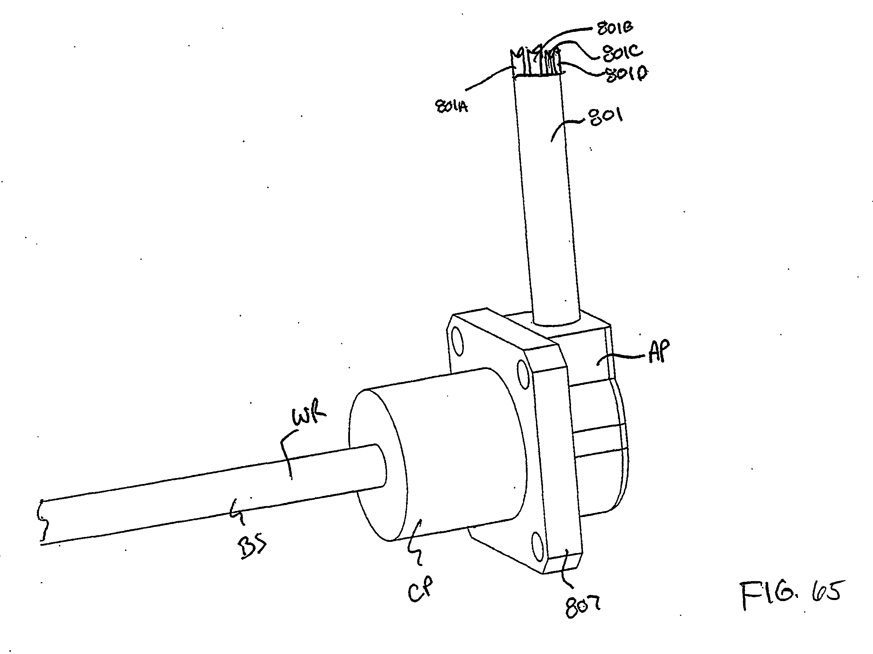

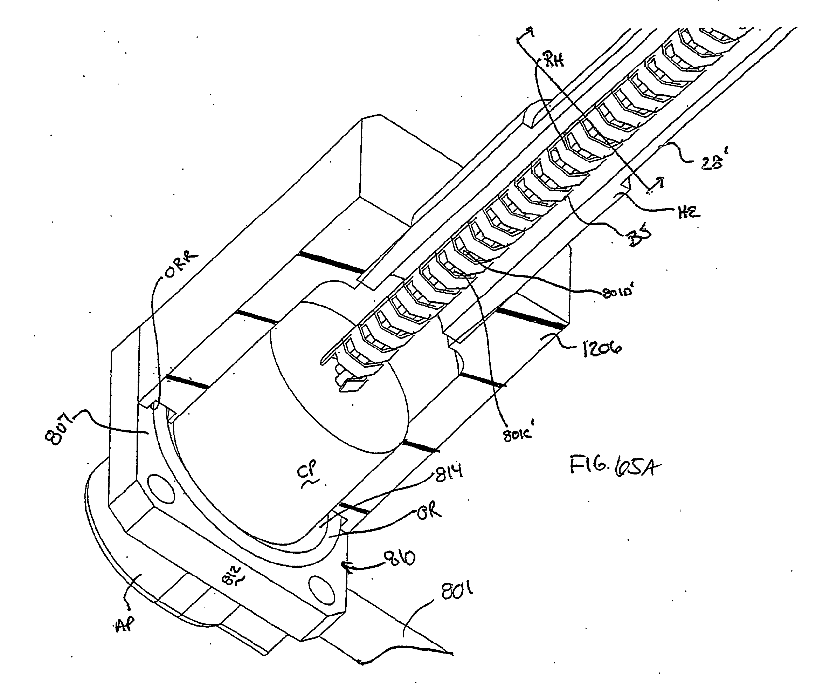

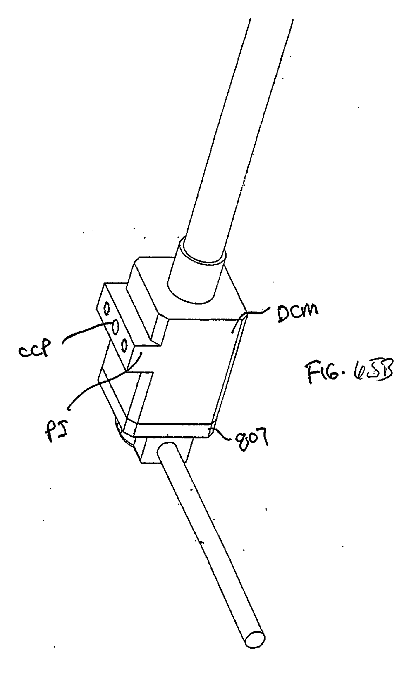

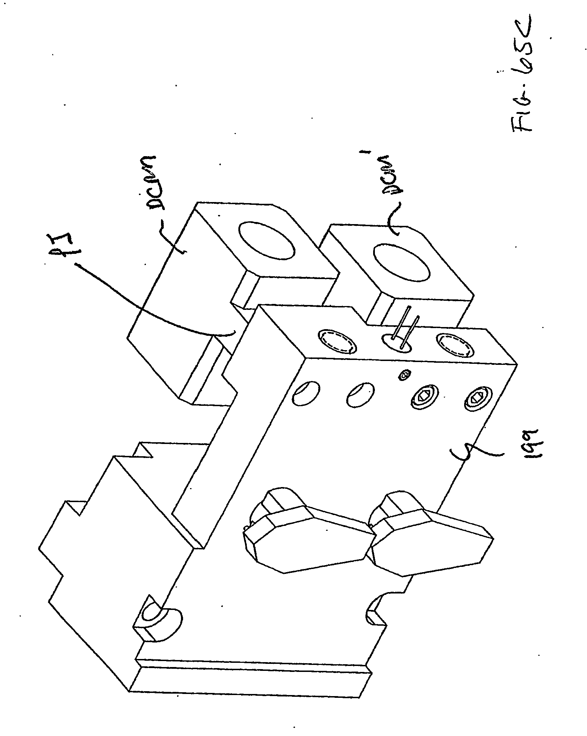

As seen from Figure 25, front section 504 of motor 200 is mounted with fasteners 510 (e.g., pins and bolts) to the rear end dispenser housing 194. As shown by Figures 25 and 30, output shaft 506 has fixed thereon bevel gear 512 and one-way clutch 514. One way clutch 514 (Figure 65) is fixedly attached to drive shaft 506 and has clutch reception section 516 receiving first end 518 of main drive shaft 520. Clutch reception section 516 includes means for allowing drive transmission during one direction of rotation (e.g., clockwise) such that rod 264 is reciprocated in mixing module 256, while one way clutch 514 freewheels when drive shaft 506 rotates in an opposite direction (e.g., counter clockwise) such that bevel gear 512 can drive the tip brush cleaning system 3000 rather then the reciprocating rod. This provides an efficient means of assuring the timing of any dispenser tip brushing and dispenser output avoiding an extension of this cleaning brush described below at a time when chemical is being output. Figure 65 further illustrates the interior rollers/cam lock up mechanisms 522 of one way clutch 514 which provide for device lock up to transmit torque when rotating in a first direction with near zero backlash. It is noted that clutch 514 is included in a preferred embodiment of the invention wherein motor 200 is dual functioning and reversible in direction based on the control system's instructions, (e.g., reciprocation of valving rod and reciprocation of a cleaning brush or some other means for clearing off any material that accumulates at the end of the dispenser). A single function embodiment wherein motor 200 is used for opening and closing the mixing module only with or without another driver for the cleaning brush is also featured, however, under the present invention (e.g., either without a tip cleaning function or a tip cleaning system which derives power from an alternate source).

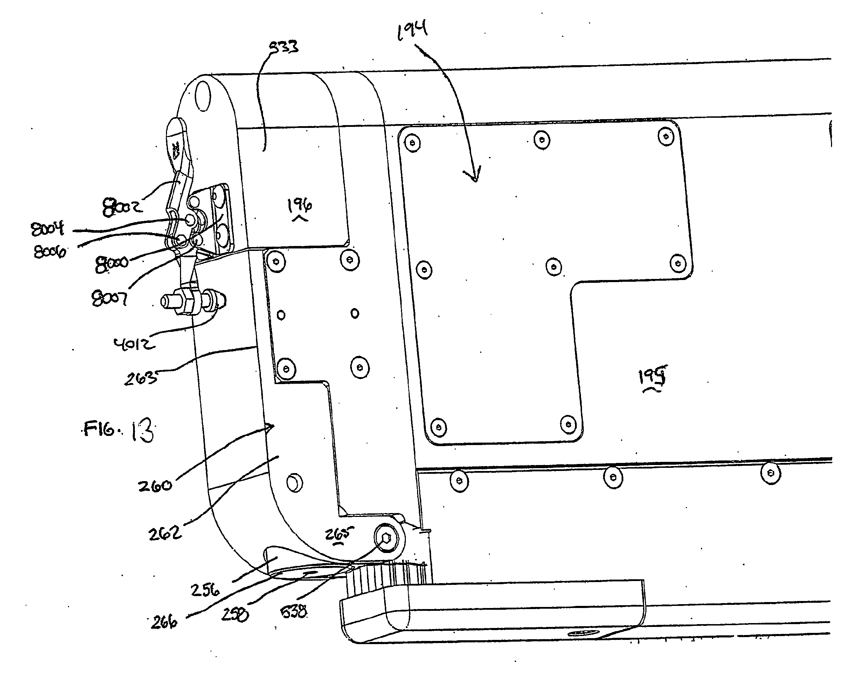

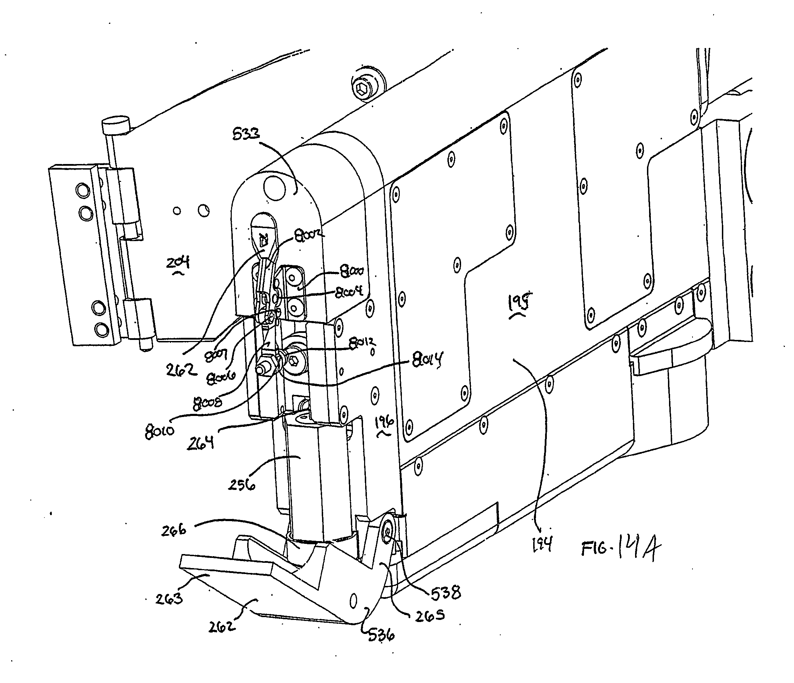

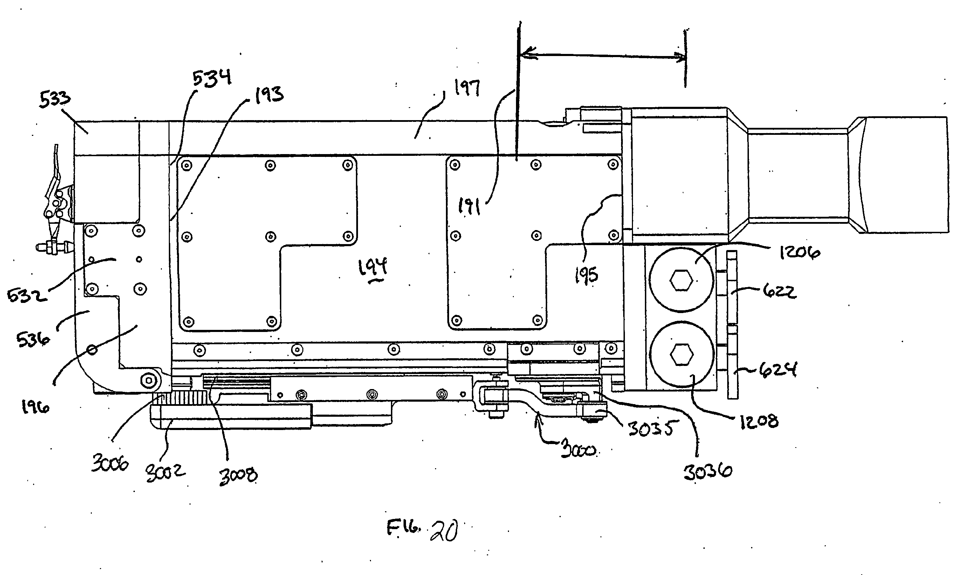

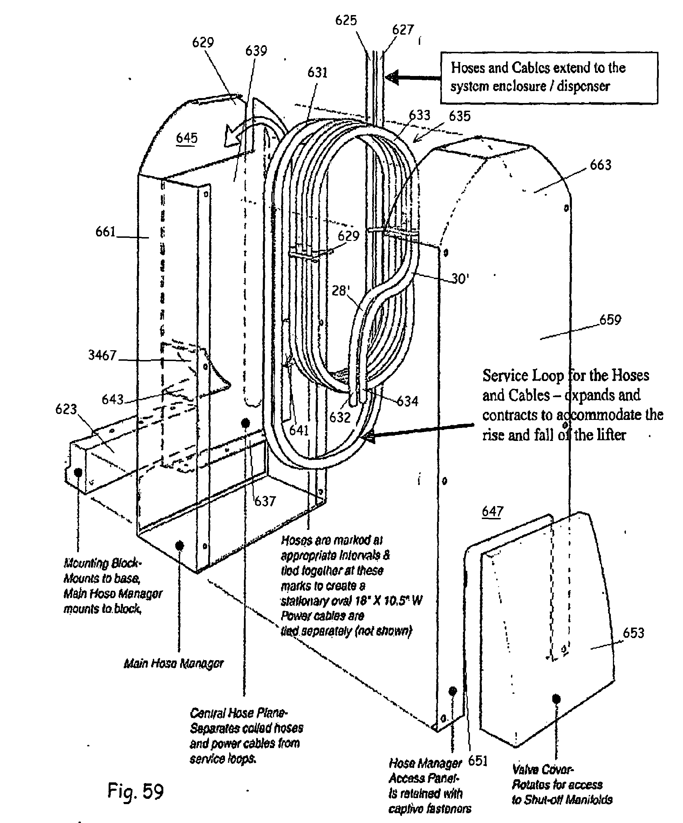

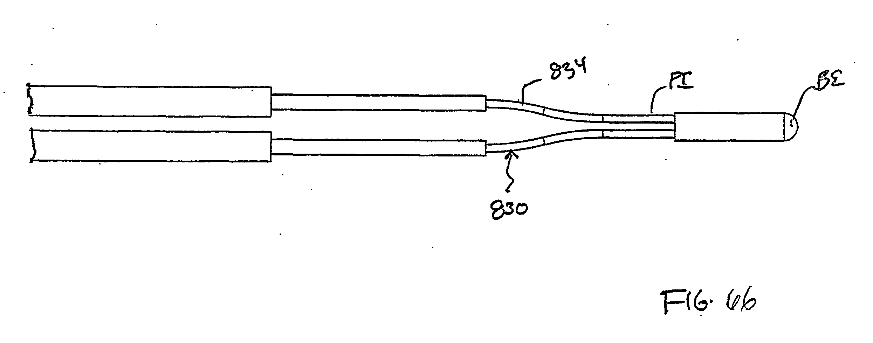

In a preferred embodiment the second end of main drive shaft 520 is connected to flexible coupling 524, although other arrangements, as in a direct force application without flexible coupling 524, is also featured under the present invention. Flexible coupling 524 is in driving engagement with dispenser crank assembly 526 (Figure 30). Dispenser crank assembly 526 is contained in dispenser component housing (see Figure 20). Dispenser component housing 528 is a self contained unit that is connected to the front end of main housing portion 195 as previously discussed and forms forward dispenser end section 196. The connection is achieved with suitable fasteners such as fasteners 530 shown in Figure 59 (three shown in cross -section). Dispenser component housing 528 comprises main crank (and mixing module) support housing component 532 (see Figure 66A) and upper dispenser housing cap 533 (Fig. 66B), with support housing 532 having a generally planar interior end 535 for flush engagement with the forward end 193 of support housing 194. Dispenser component housing 532 includes pivot recesses 534 (one shown-Fig. 66A) to which is pivotably attached closure door 536 (see Figures 12 and 13 60 for a closed closure door state and Figures 14A and 14B for an open closure door state) by way of pivot screws 538 (one shown) or the like.

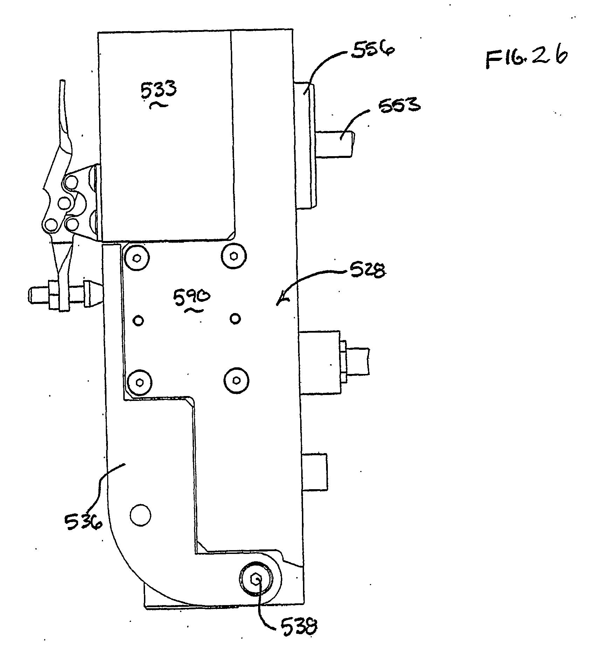

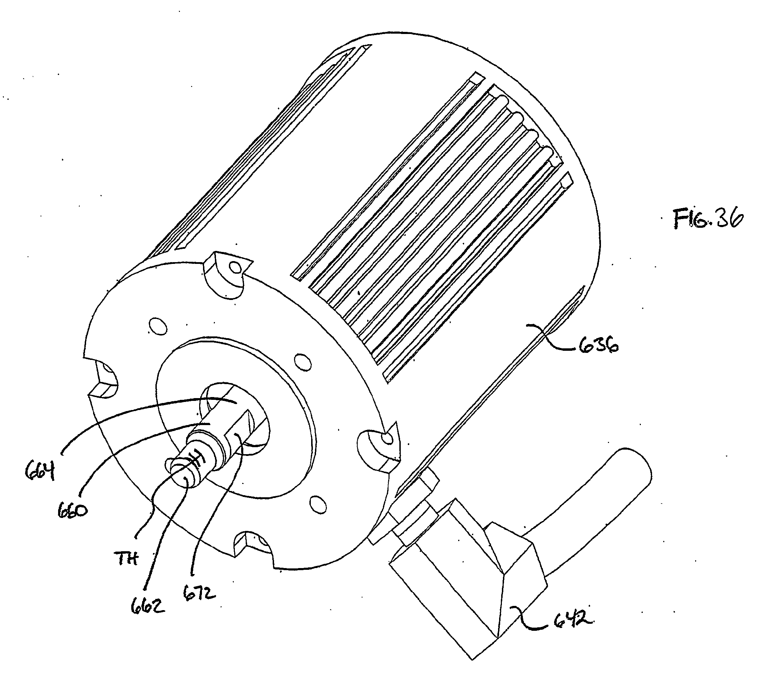

Dispenser housing cap 533, illustrated in Figs. 25 and 26 is secured to the top front of support structure 194 and is shown as having a common axial outline with support structure 194 (such that all potentially film contact surfaces of dispenser 192 are made with a non-interrupted smooth surface). Figure 66B illustrates housing cap 533 having a large crank clearance recess 542 and a bearing recess 544 sized for receipt of a first of two bearings such as the illustrated first (forwardmost) needle bearing 546 shown in Figures 25 and 36. Housing cap 533 is secured in position on the forward top face of main crank support housing component 532 by suitable fasteners (not shown). Bearing recess 544 is axially aligned with inner bearing recess 548 provided on the forward face of housing component 532 (Fig. 66A). Inner bearing device 550 (Fig. 25) represents the second of the two bearings within cap 533 and is received in inner bearing recess 548. Crank assembly 526 has opposite ends rotatably received within respective inner and outer bearings 545, 550 and is preferably formed of two interconnected components with a first crank assembly component 552 with key slot shaft extension 553 designed to extend past the innermost surface of main housing component 532 and into driving connection with the forward flexible coupling connector 554.

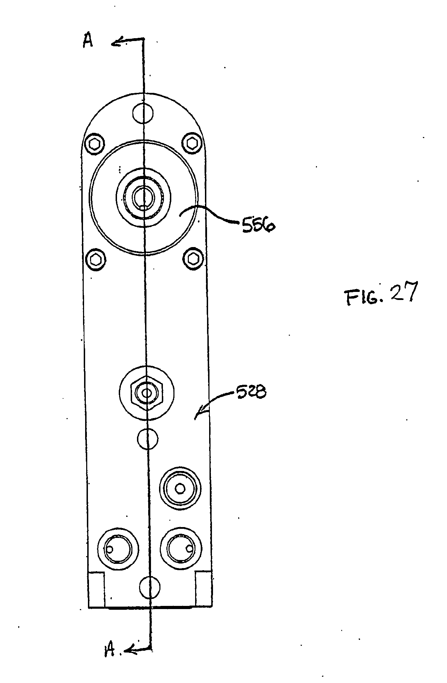

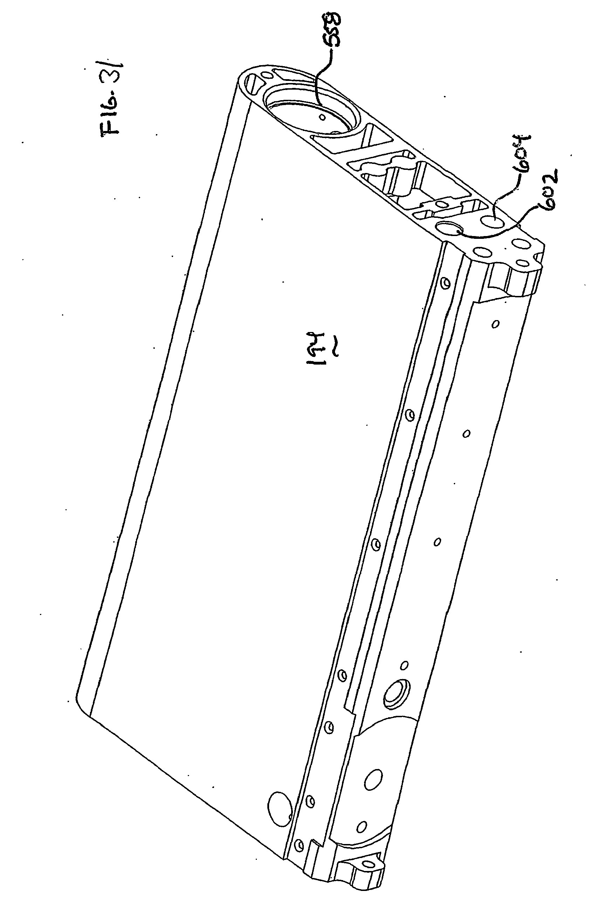

For added stability and positioning assurance, rear end 534 of housing component 532 further includes annular projection 556 (see Figure 27), that is dimensioned for friction fit connection with circular recess 558 (Fig. 31) formed in support housing structure 194. First crank assembly component 552 further includes bearing extension 560 sized for bearing engagement with inner bearing 550 and is positioned between slotted shaft extension 553 and inner crank extension 562. Inner crank extension is elliptical is shape and has bearing extension 560 having a central axis aligned with a first end (foci) of the ellipsoidal inner crank extension and crank pin 564 extending forward (to an opposite side as extension 560) from the opposite end (foci) of inner crank extension 562. Crank pin 564 has a reduced diameter free end which is dimensioned for reception in pin reception hole 566 formed in outer crank extension 568 of second crank component 570 having a peripheral elliptical or elongated shape conforming to that of the first crank component. At the opposite end of the elliptical extension 568, and aligned with the central axis of first or inner bearing extension 560, is provided outer or second bearing extension 572. Second bearing extension 572 is dimensioned for reception in outer bearing 546.

At its rear end, slot 573 has a curvature matching the curvature of the enlarged rod head 330 of rod 264 and capture recess extends rearward past the rear end of slot 573 so as to provide a capture reception region relative to the enlarged head of rod 330 shown in Figure 25, for example. Accordingly the connecting rod 574 converts the rotational motion of crank arm or connecting rod 574 into linear motion in the slider mechanism 586 which in turn, based on its releasable capture connection with the enlarged end 330 of rod 264, reciprocates rod 264 within the mixing chamber to purge and/or perform a valve function relative to the chemical mixing chamber feed ports.

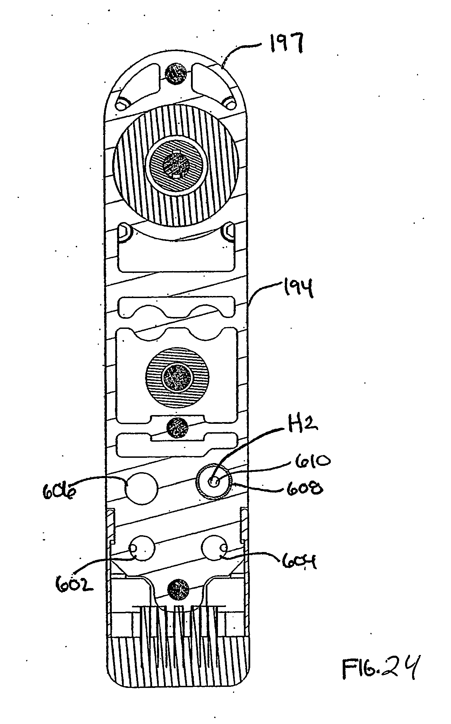

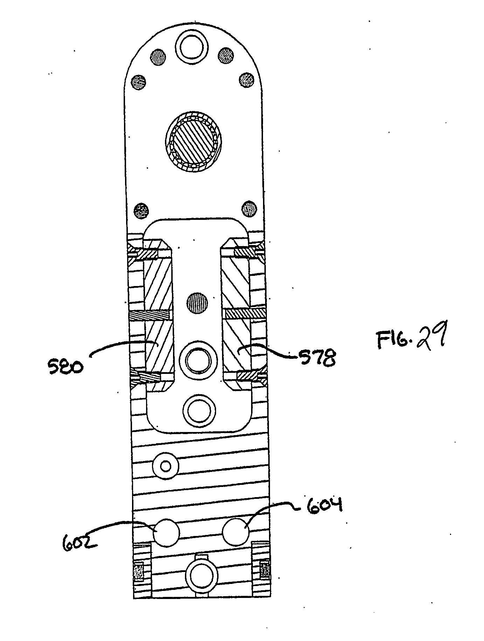

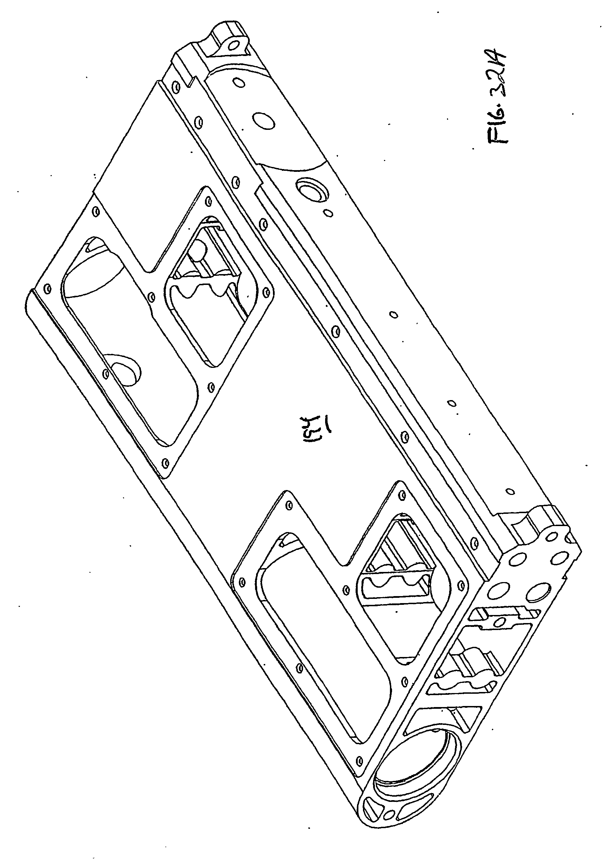

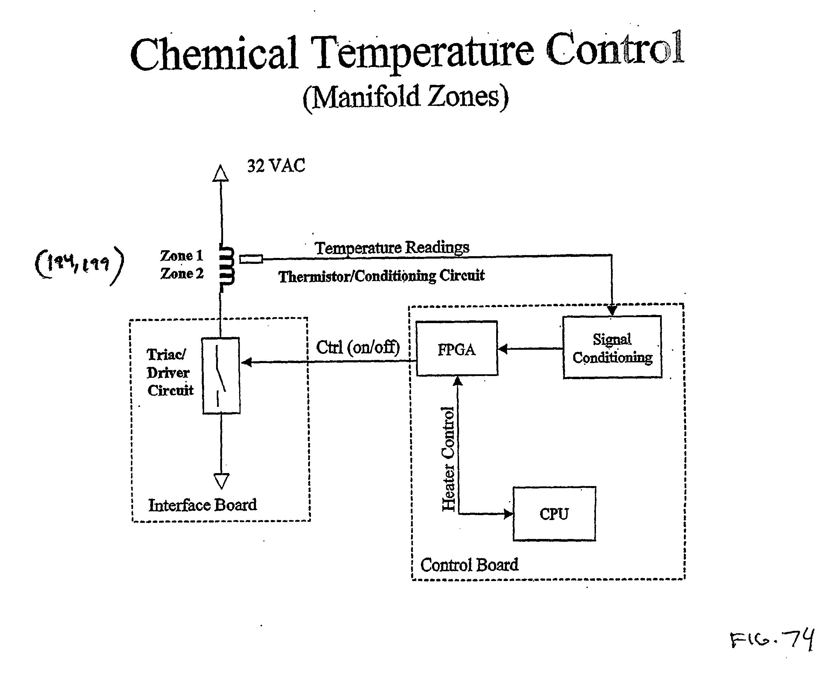

With reference to Figures 24-29, 31 and 32A, there is illustrated the chemical feed housing conduit system 600 passing from the inlet section 198 of dispenser apparatus 192 (via manifold 205) to dispenesr housing 194. Chemical outlets (see Figs. 24 and 31) 602 and 604 corresponding with those in the chemical front end dispenser housing component 528 feeding into the mixing module housing 302. Chemical conduits 602 and 604 are preferably formed in conjunction with an extrusion process used in forming the basic structure of main housing 194 (e.g., main housing section 195). As further shown in Figure 24 positioned above conduits 602 and 604 there is a second set of conduits with conduit 606 providing a solvent flow through passageway in main housing 194 and with the adjacent conduit 608 providing a cavity for reception of a heater cartridge 610 (or H2) (e.g., an elongated cylindrical resistance heater element) that is inserted into conduit 608 and has its electrical feed wires (not shown) feeding out the inlet end 198 side to the associated power source and control and monitor systems of the control means of the present invention as shown in Figure 74. Heater cartridge 610 features a heat control sub-component system which interfaces with the control means of the present invention as illustrated in Figure 74 and, is preferably positioned immediately adjacent (e.g., within an inch or two or three of the two chemical conduits 602 and 604) and runs parallel to the chemical passage to provide a high efficiency heat exchange relationship relative to the main housing preferably formed of extruded aluminum. The heat control sub-system of the present invention preferably is designed to adjust (e.g., automatically and/or by way of a temperature level setting means) the heater to correspond or generally correspond (as in averaging) with the temperature setting(s) set for the chemicals passing through the heater wires associated with the chemical feed lines 28' and 30' so as to maintain a consistent desired temperature level in the chemicals fed to the dispenser. Heater cartridge 610 is also within 2.54 cm or 5.08 cm (an inch or two) of the solvent flow through passageway and thus is able to heat up the solvent flow being fed to the mixing module (e.g., a common 130°F temperature). A temperature sensor is associated with the heater cartridge which allows for a controller monitoring of the heat output and the known heat transmissions effect on the chemical passing through the adjacent conduit through the intermediate known material (e.g., extruded aluminum).

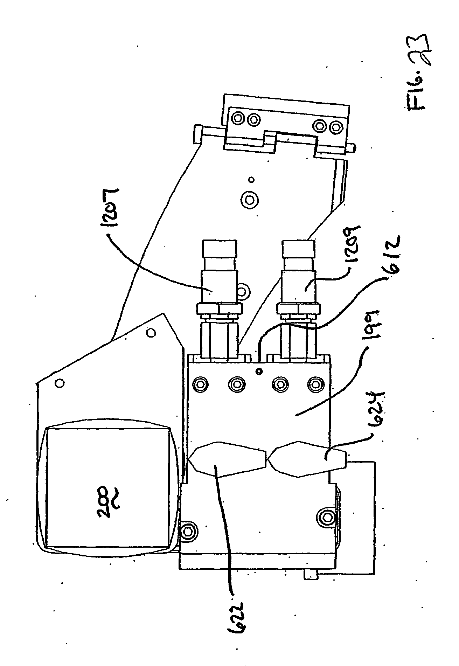

With reference to Figure 23 there is illustrated inlet manifold 199 formed of block 205 with the manifold cavities including one for inlet manifold heater 612 which functions in similar fashion to heater 610 in heating the surrounding region and particularly the chemical flowing through manifold 199 to preferably maintain a consistent chemical temperature level in passing from the heater wire conduit exits to the mixing module. Heater 612 also includes a temperature monitoring and control means associated with the main control board of the present invention to monitor the temperature level in the manifold block and make appropriate heat level adjustments in the manifold block to achieve desired chemical output temperature(s), as shown in Figure 194.

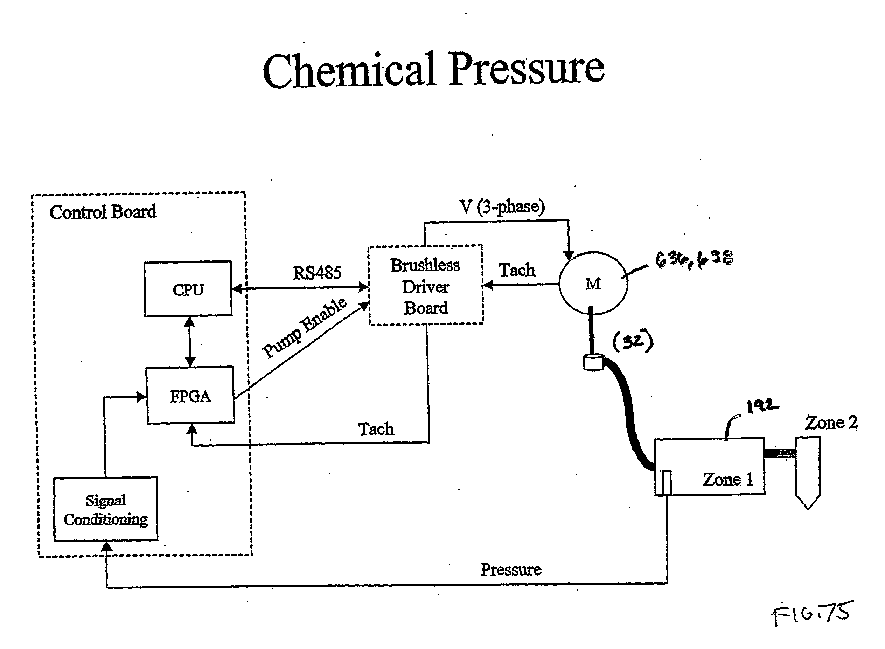

Figures 23 and 25 also illustrate manifold 199 as having A and B chemical passageways 614, 616 which feed into corresponding main housing A and B chemical conduits 602 and 604 also running adjacent the manifold heater 612 to maintain a desired temperature level in the chemical for all points of travel through the main manifold 199. The cross-section in Figure 25 illustrates filter reception cavities 618, 620 within which are received filters 4206 and 4208 (Fig. 20) which are readily inserted (e.g., screwed or friction held) into place so as to receive a flow through of respective chemicals A and B. Chemicals A and B passing through manifold 199 are also subject to flow/no flow states by way of chemical shutoff valves 622 and 624 which feature readily hand graspable and turnable handles and are preferably color coded to correspond with the A and B chemicals. Pressure sensing means (e.g., transducers) 1207 and 1209 also sense the chemical pressure of the chemicals passing in manifold 199 and convey the information to the control board where a board processor determines whether the pressure levels are within desired parameters and, if not, sends out a signal for making proper system adjustments as in a reduction or increase in pump output. Figure 75 shows the control system schematic for monitoring and adjusting chemical pressure in the dispensing system.

With reference to Figure 2 there can be seen chemical hose extensions 28' and 30' for chemicals A and B extending into a bottom connection with manifold 199 (not shown if Fig. 2) via threaded plugs 626 and 628 and extend down though extendable support assembly 40 which houses the remaining portions of chemical A and B feed hose extensions extending between the manifold and cable and hose management system 630 shown in Figure 59 which retains the coiled hoses and cable assembly 50. As further shown in Figure 2, chemical hose extensions 28' and 30' have ends 43 and 45 extending down into connection with in-line pump assembly 32 having pumps 44 and 46. As explained below, chemical hoses are heated chemical hoses, again under control of the control system as illustrated in Figure 193.

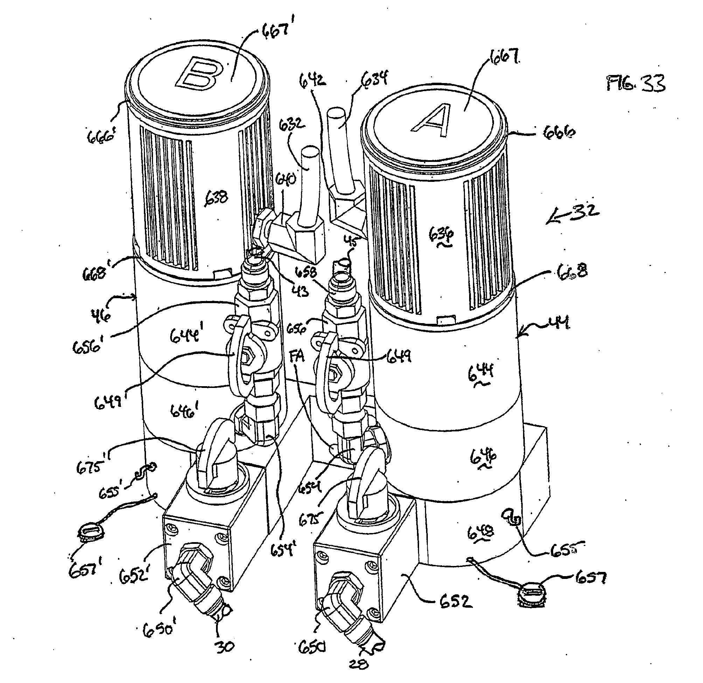

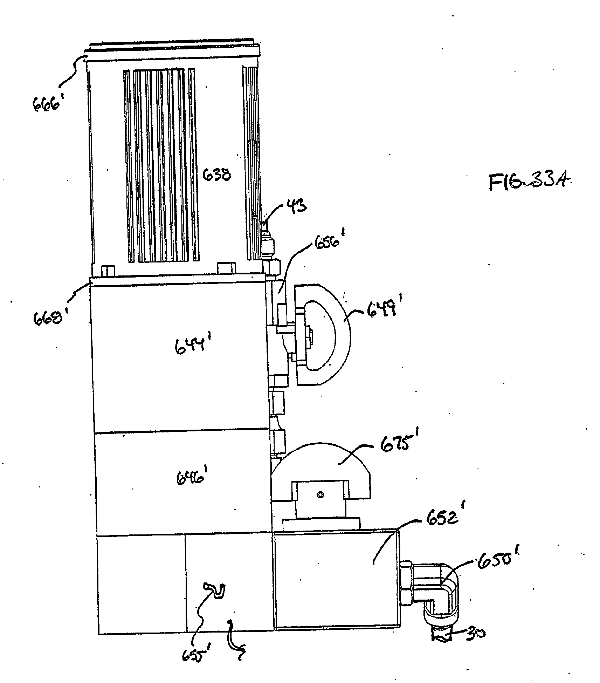

Figure 33 provides an enlarged perspective view of in-line pump system 32 shown in Figure 2 as being mounted on base 42 and featuring in-line pump assembly 44 for chemical A and in-line pump assembly 46 for chemical B. As shown in Figure 33, pump assemblies 44 and 46 have similar components but have offset extremity extensions that provide for a compact (space minimizing) arrangement for mounting on base 42. For example, pump motor electrical cables 632 and 634 feeding A chemical pump motor 636 and B chemical pump motor 638 (and preferably part of the cable and coil assembly), are arranged with relatively angled offset supports 640 and 642 attached to the respective motors circumferentially offset but by less than 15 degrees to provide for closer side-by-side pump assembly positioning. Chemical A pump assembly 44 further comprises pump coupling housing 644 which is sandwiched between pump 636 above and the below positioned chemical outlet manifold 646. Below outlet manifold 646 is positioned chemical inlet manifold 648. The downstream or upstream end of chemical conduit 28 is shown connected at angle connector 650 to inlet valve manifold 652 secured to the input section of chemical inlet manifold 648. Extending out of chemical outlet manifold 646 is another angle connector 654 extending into chemical outlet valve assembly 656 which is connected at its upper connector end 658 to chemical A hose extension 45 leading into heated hose and cable management system 630 (Fig. 59). The corresponding components in the chemical B pump assembly 46 are designated with common reference numbers with dashes added for differentiation purposes. Also, the following discussion focuses on the chemical A pump assembly 44 only in recognition of the preferred essentially common arrangement of each of the chemical A and B pump assemblies. Figure 33A provides a side elevational view of the pump assembly 46 and thus a different view of the aforementioned pump assembly components.

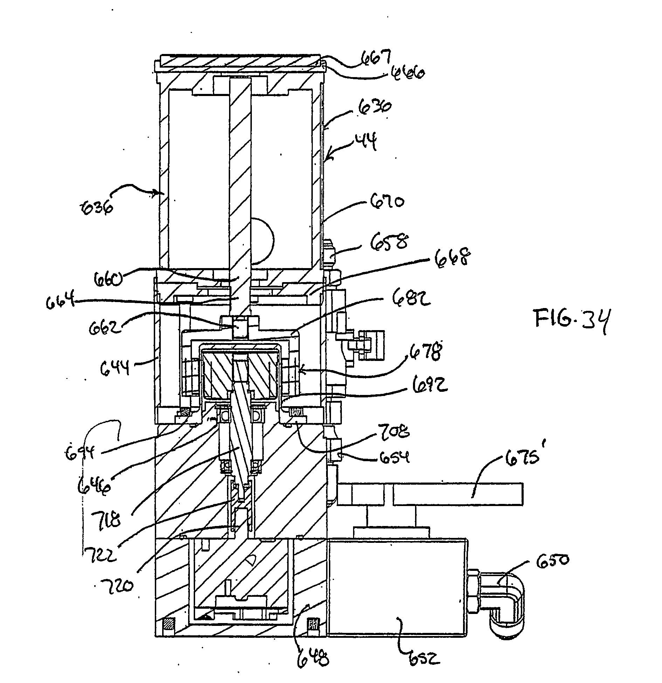

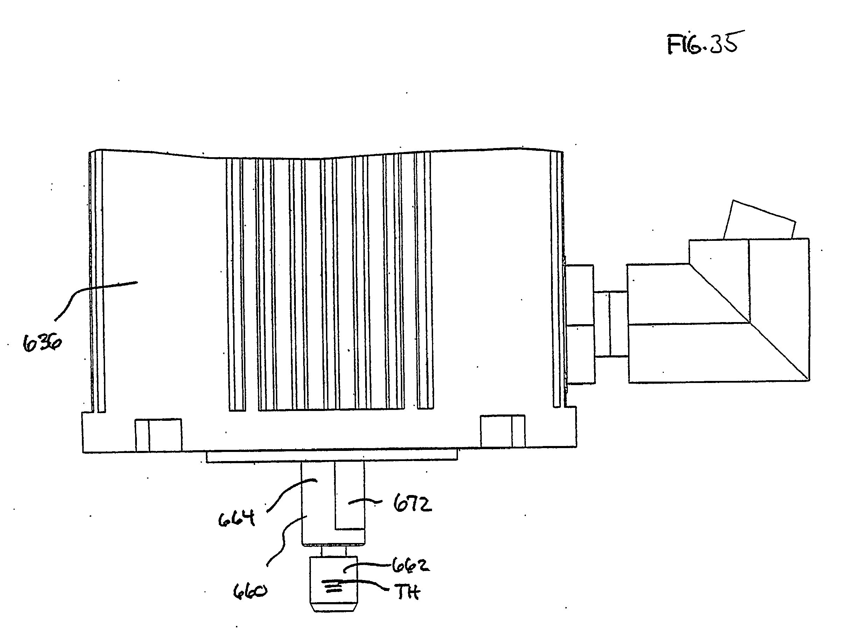

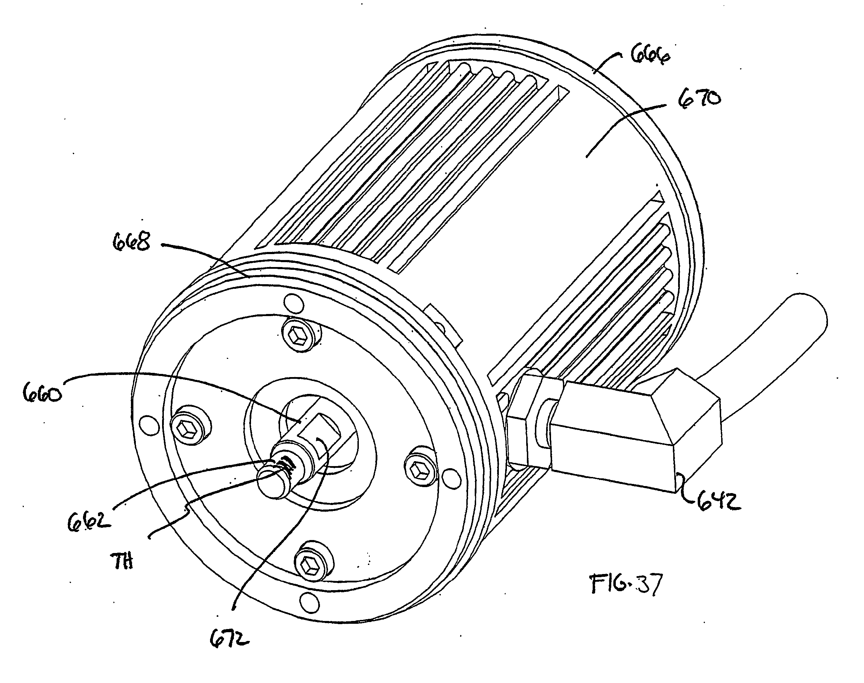

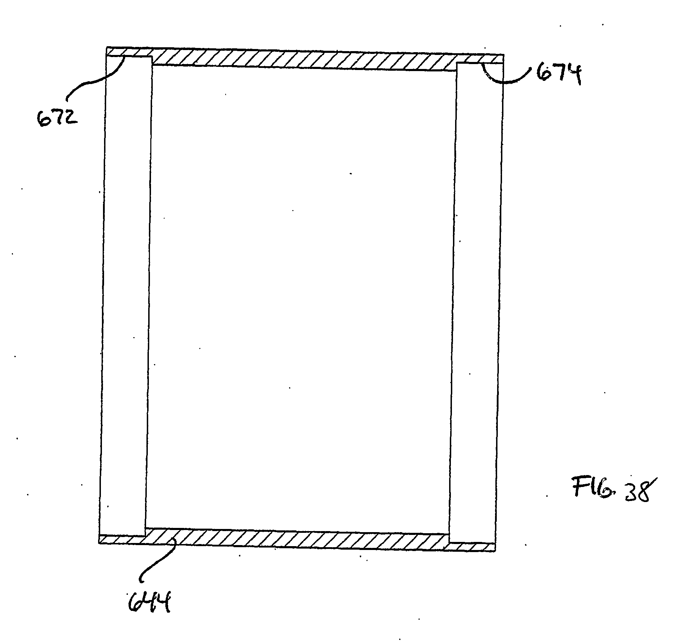

Figures 34-37 illustrate in greater detail the preferred embodiment for pump motor 636 for chemical A (same design for chemical B) with Figure 34 showing the motor casing being free of an internal motor component for draftsperson's convenience. In a preferred embodiment a brushless DC motor with internal encoder mechanism is utilized. As shown in Figures 34 and 35, pump motor 636 features a threaded output shaft 660 having left handed threaded end 662 extending from main shaft section 664. Figure 36 provides a full perspective view of pump motor 636 as well as the strain relief angle connector 642 for electrical cable connection. Figure 37 shows a view similar to Figure 36 but with added top and bottom adapter plates (666, 668) secured to the motor housing 670. The top adapter 666 provides a recess for receiving the color and letter coded (A in this instance) identifying plate 667 (Figure 33) while bottom adaptor plate 668 functions as a positioning means with its reception ring properly centering shaft section 664 when the adapter plate 668 is received by coupling housing 644 shown in Figure 38. Figures 36 and 37 also illustrate housing coupling 644 having a notched portion 672. Coupling housing 644 has upper and lower stepped shoulders 674 and 676 with upper shoulder 674 designed to frictionally retain the aforementioned adapter plate 668, while lower stepped shoulder is designed for frictional and/or fastener engagement with a corresponding notched lower end in chemical outlet manifold 646 (the threaded connection of the shaft maintaining to some extent the assembled pump assembly state).

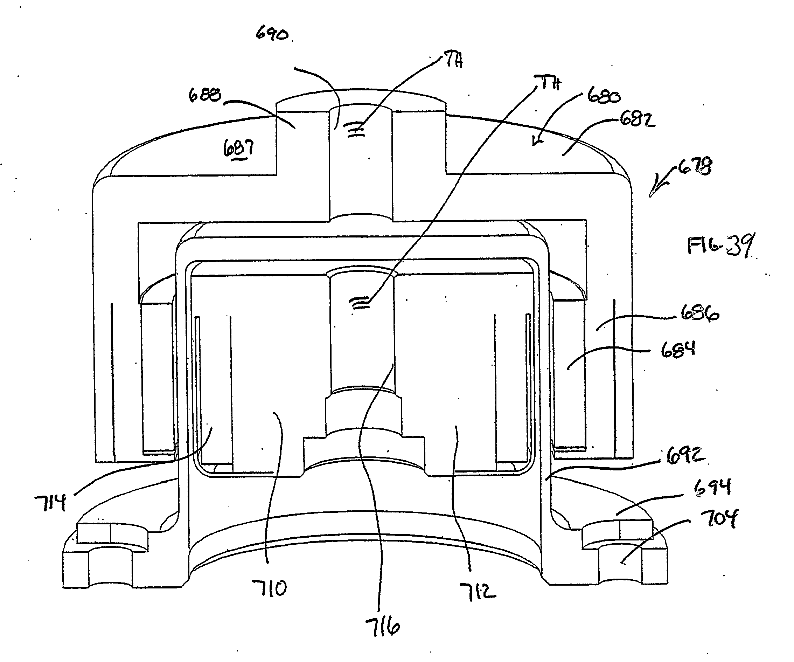

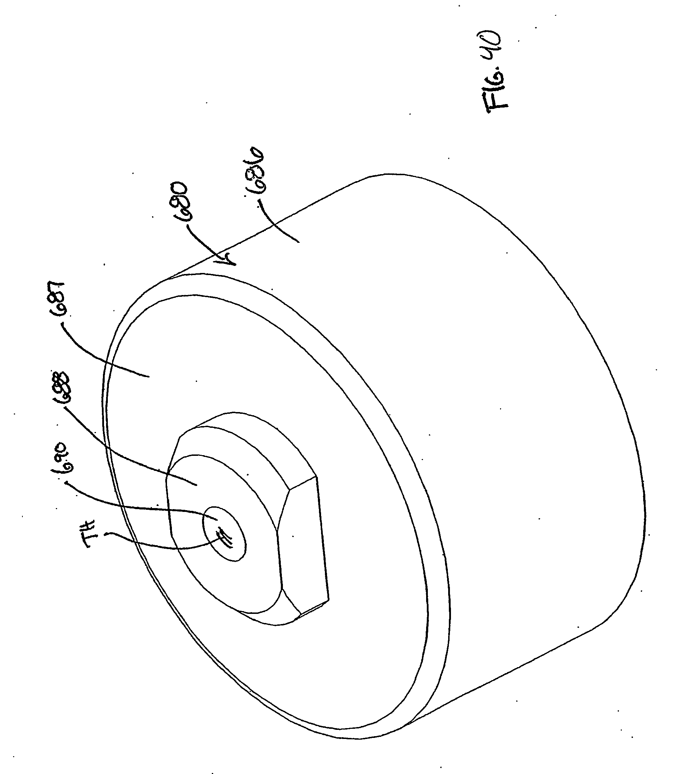

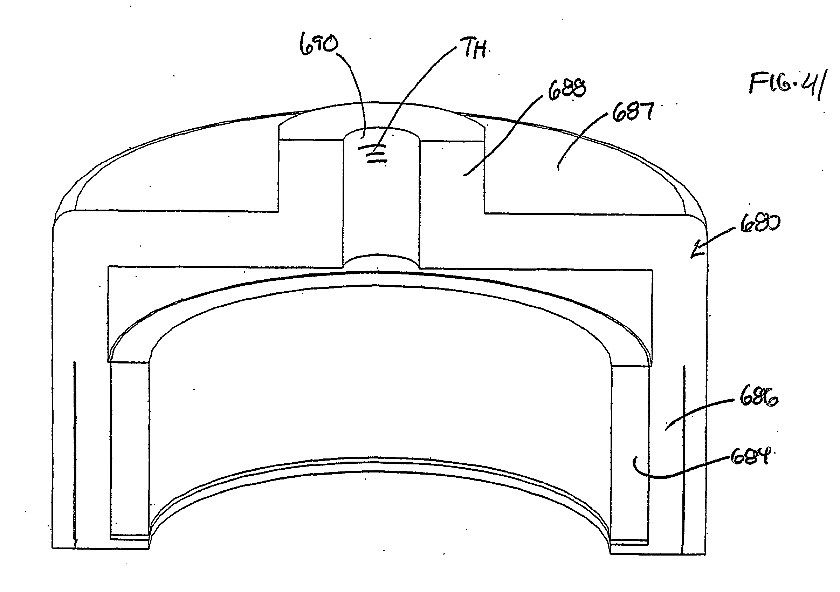

Coupling housing 644 houses magnetic coupling assembly 678 shown in position in the cross-sectional view of Figure 34. Figure 39 provides a cutaway view of magnetic coupling assembly 678 having outer magnet assembly 680 with drive shaft coupling housing 682 and magnet ring 684 secured to an inner surface of cylindrical coupling housing wall 686. Figures 40 and 41 provide a perspective and cross-sectional view of outer magnet assembly 680 having an upper wall 687 with a central protrusion 688 with, as shown in Figure 41, a threaded inside diameter 690 designed for threaded engagement with the threaded end 662 of pump motor drive shaft 660 via the left hand threaded end 662. Thus, drive shaft coupling housing 682 is placed in threaded engagement with drive shaft 660 and positions its supported magnet ring 684 about shroud 692. Ring 684 is preferably of a magnet material having high magnetic coupling strength such as the rare earth magnet material (e.g., Neodymium). Ring 684 is also preferably magnetized with multiple poles for enhanced coupling power.

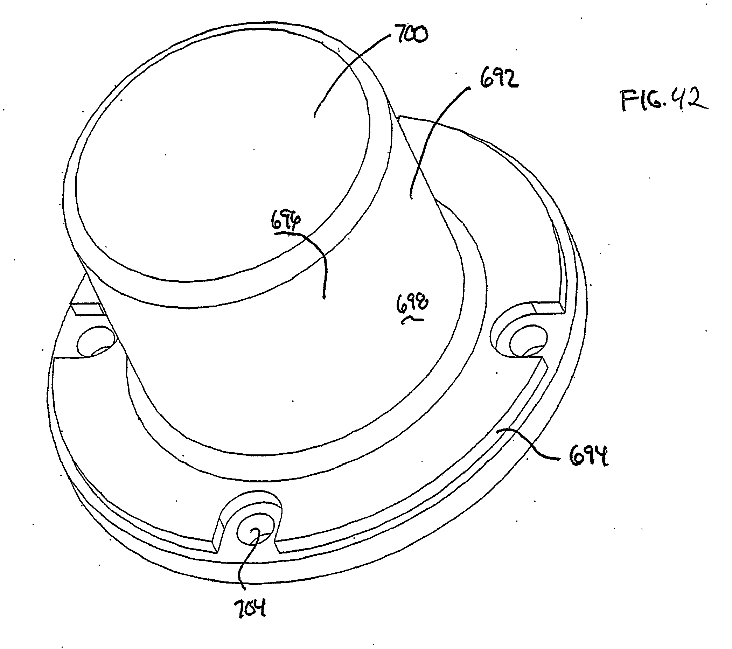

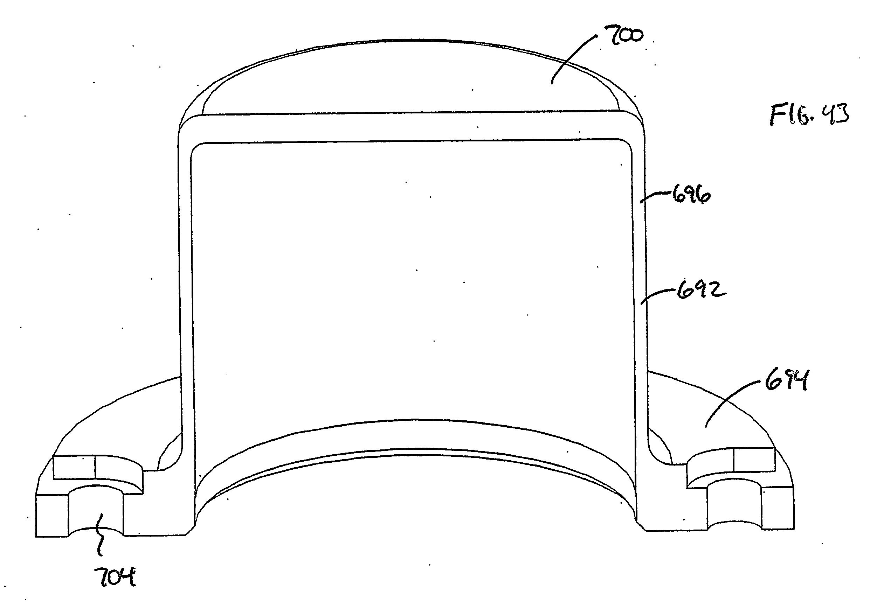

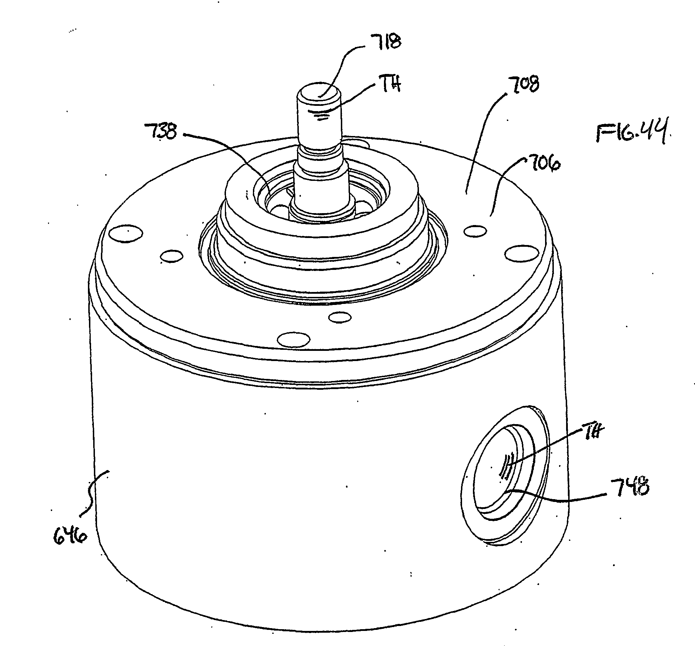

Shroud 692 is shown in operative position in Figure 34 having its based secured to the upper surface of chemical outlet manifold 646. Figures 42 and 43 further illustrate shroud 692 in perspective and in cross-section, and show shroud 692 having a top hat shape with base flange 694 and cup-shaped top 696 extending upward therefrom and having shroud side wall 698 and top 700 which together define interior chemical chamber 702 (the same chemical being pumped from the respective chemical pumps). Base flange 694 is shown as having a plurality of circumferentially spaced fastener apertures 704 that are positioned for securement to corresponding fastening means 706 on the upper surface 708 of chemical outlet manifold 646 as shown in Figure 44. Preferably there is a static seal relationship between the bottom of the shroud and the receiving upper surface of the outlet manifold 646 as in an O-ring seal relationship (not shown).

Figures 34, 39, 45A and 45B show inner magnet assembly 710 positioned within the inner chemical chamber 702 of shroud 692 which acts to separate the inner and outer magnet assemblies (680 and 710) and isolates the chemical. Inner magnet assembly 710 comprises a main housing body 712 which supports along its exterior circumference inner magnet ring 714 and has threaded center hole 716. Outer magnet assembly 680 positions the threaded inside diameter 690 of the outer magnet assembly 680 in axially alignment with the threaded central hole 716 of inner magnet assembly 710 but to the opposite side of top 700 of the isolating shroud 692. Also, by way of the illustrated cup shape in outer magnet assembly 680, its side wall extends down to place outer magnet ring 684 in a generally vertically overlapping and concentric arrangement (to opposite sides of the side wall of the isolating shroud) relative to inner magnet ring 714 supported by inner main housing body 712. Inner magnet ring 714 is preferably formed of the same magnet material and with multiple poles as its outer counterpart. As seen from Figure 34 the central threaded hole in inner magnet assembly 710 connects with bearing shaft 718 (e.g., a left handed thread) which, in turn drives pump shaft 720 by way of the preferred intermediate flexible coupling 722 (components 718, 720 and 722 working together to provide inner pump drive transmission means). The magnet coupling achieved under the present invention thus provides means to transmit torque from the motor to the pumping unit without the need for a connecting drive shaft and its problematic drive shaft seal. That is, the pump motor (636, 638) is provided with a magnet (e.g., less than 2.54 or 5.08 cm (one or two inches), for example) but the pump and motor drive shafts never contact each other although the magnet assemblies generate a magnetic field arrangement that magnetically locks the motor and pump drive shafts together. As noted in the background, this sealed arrangement avoids the problem in the prior art of drive shaft seal degradation such as from iso-crystal build-up which can quickly destroy the softer seal material.

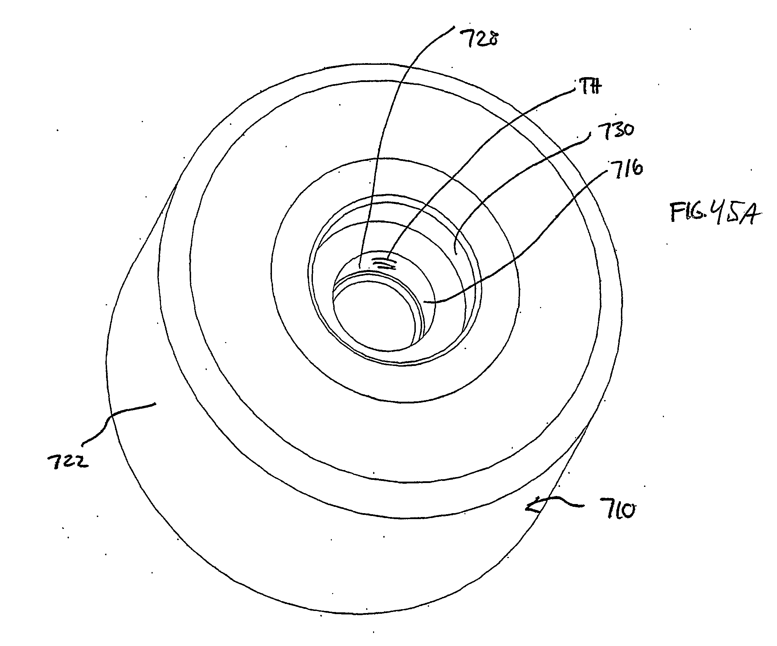

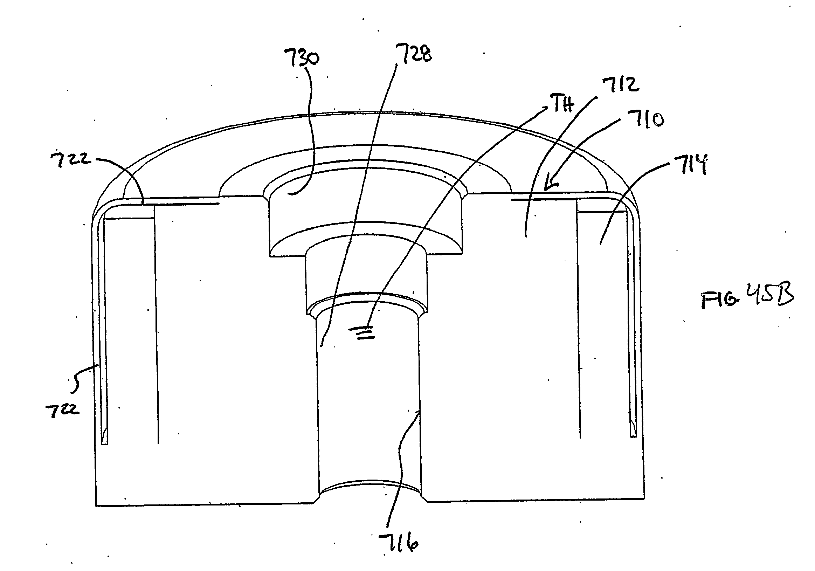

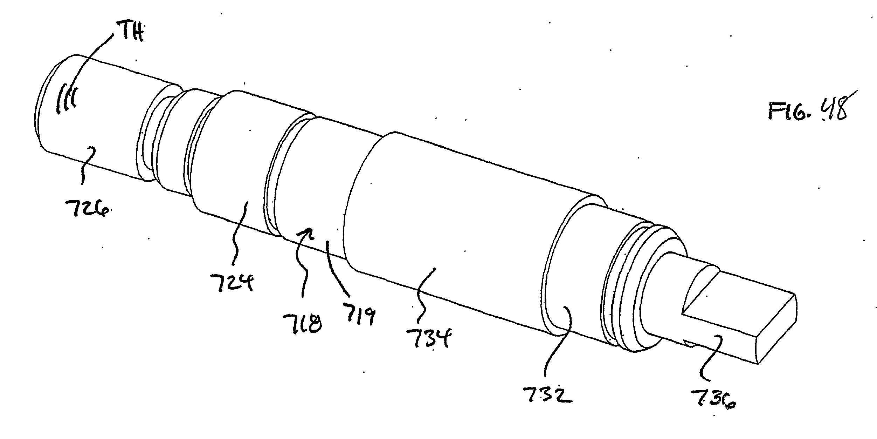

Shroud 692 is preferably made of a material (e.g., steel) that does not interfere with the magnetic locking of the inner and outer magnet rings and is relatively thin. Figures 45A and 45B further illustrate inner magnet assembly 710 having outer encasing layer or covering 722 (e.g., a polymer laminate) that protects inner magnet assembly 710 from adverse chemical reactions from either of the contacting chemicals A or B. Also, as seen by Figure 48, to provide for added stability, bearing shaft 718 has first, enlarged bearing section 724 extending below the smaller diameter uppermost threaded shaft section 726, and the central through hole 716 of inner magnet assembly 710 has a smaller diameter threaded section 728 which engages with threaded uppermost shaft section 726 and a larger reception recess 730 which receives enlarged bearing section 724 with the step shoulder between sections 724 and 726 contacting the corresponding step shoulder between sections 728 and 730.

Figure 48 also illustrates shaft 718 having second bearing contact surface 732 spaced from first bearing contact surface 724 by enlarged separation section 734 and intermediate section 719. Second bearing contact surface 732 extends into shaft flex head connector 736 forming the end of shaft 718 opposite threaded end 726.

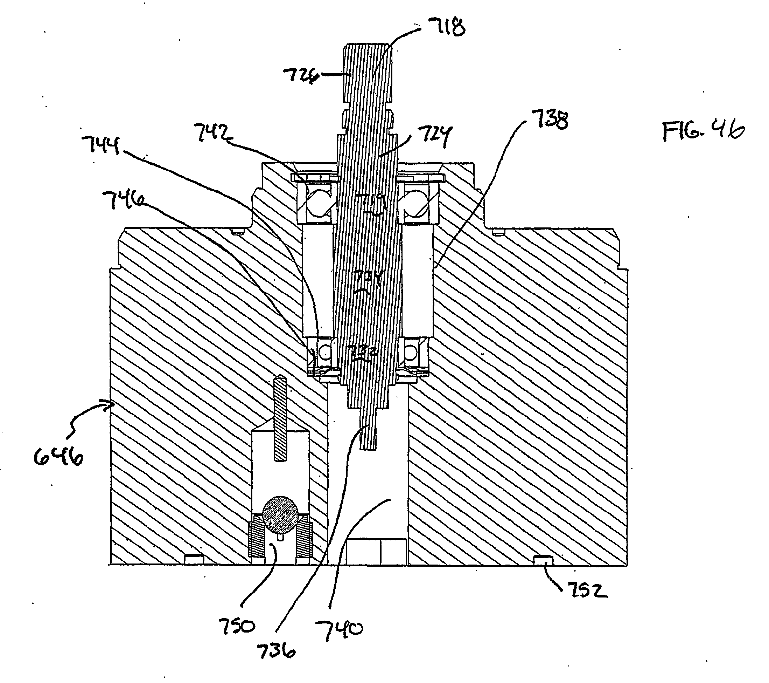

Figures 44, 46 and 47 illustrate bearing shaft 718 received within bearing reception region 738 formed in the upper, central half of outlet manifold assembly 646. Bearing reception region 738 opens into a smaller diameter shaft end reception region 740 which forms the remaining part of the overall through hole extending through the center of outlet manifold 646. Figure 46 illustrates the compact and stable bearing shaft relationship with outlet manifold 646 wherein first and second ring bearings 742, 744 are received in bearing reception region 738 in a stacked arrangement with the lower bearing ring (e.g., a caged ball bearing ring) supported on the step shoulder 746 of outlet manifold 646 and the upper bearing ring supported on a step shoulder defined by enlarged separation section 734 of shaft 718. This twin bearing support arrangement helps minimize vibration and side load on the below described pump head The relatively short shaft 718 (e.g., less than 7.6 or 10.1 cm (3 or 4 inches) in length) has its flex connector end 736 received within shaft end reception cavity 740. Figure 44 illustrates chemical outlet port 748 which preferably is threaded for connection with an angle connector as in angle connectors 654 or 654' shown in Figure 33.

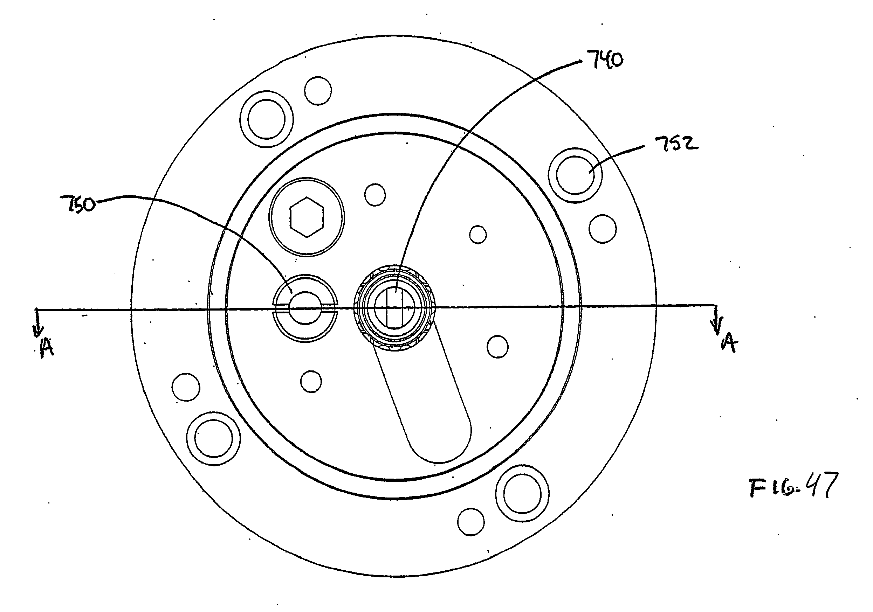

Figures 46 and 47 further illustrate backflow prevention means 750 shown as ball check valve positioned at the pump head side or lower end of outlet manifold 646. Figure 47 illustrates a bottom view of the same which includes an illustration of check valve 750 as well as mounting alignment recesses 752. In addition rupture disc 754 is threaded into the base of the outlet manifold as protection against over pressure by blowing out at a desired setting (e.g., 9,928.4 KPa (1440 psi). Check valve 750 helps avoid backflow and maintain line pressure to minimize the work required from the pumping unit during idle periods. Bearing shaft 718 supports the pump side of the magnetic coupling unit and drives the pump head shaft.

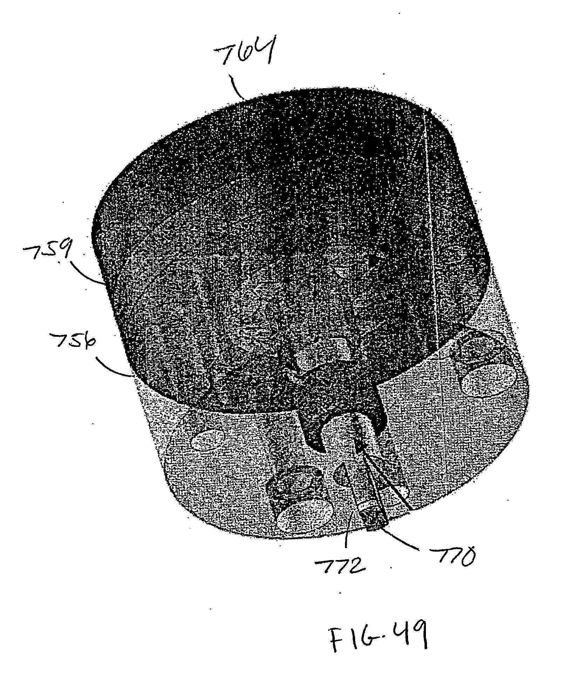

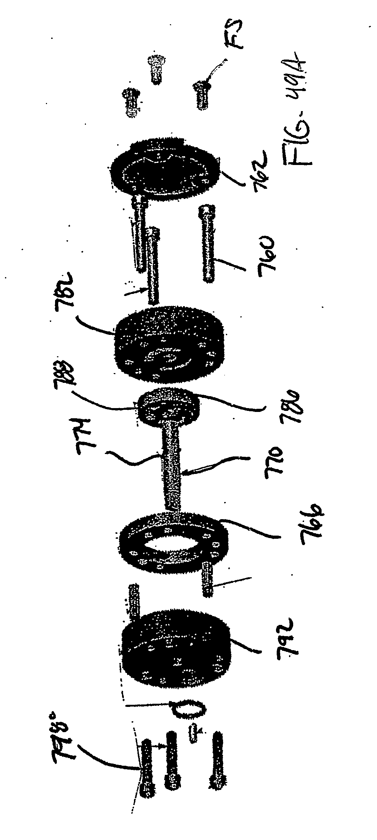

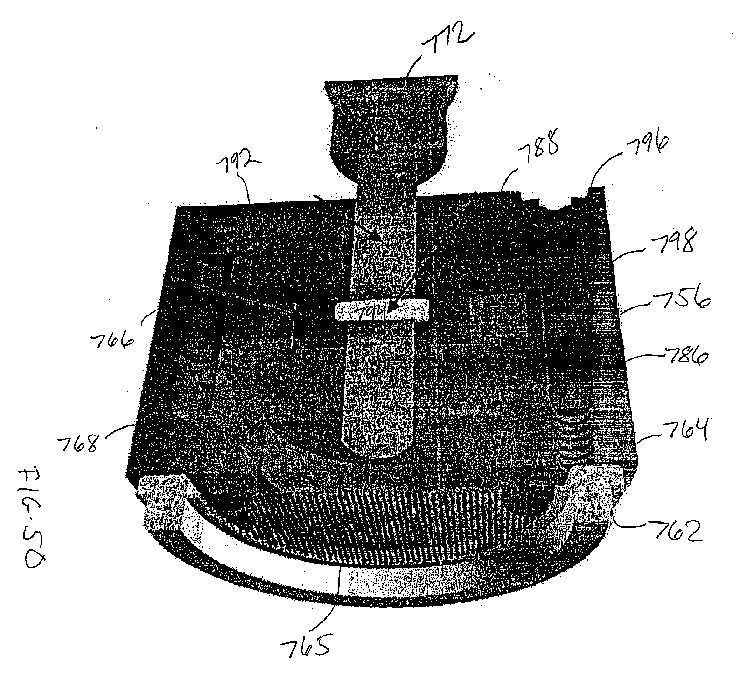

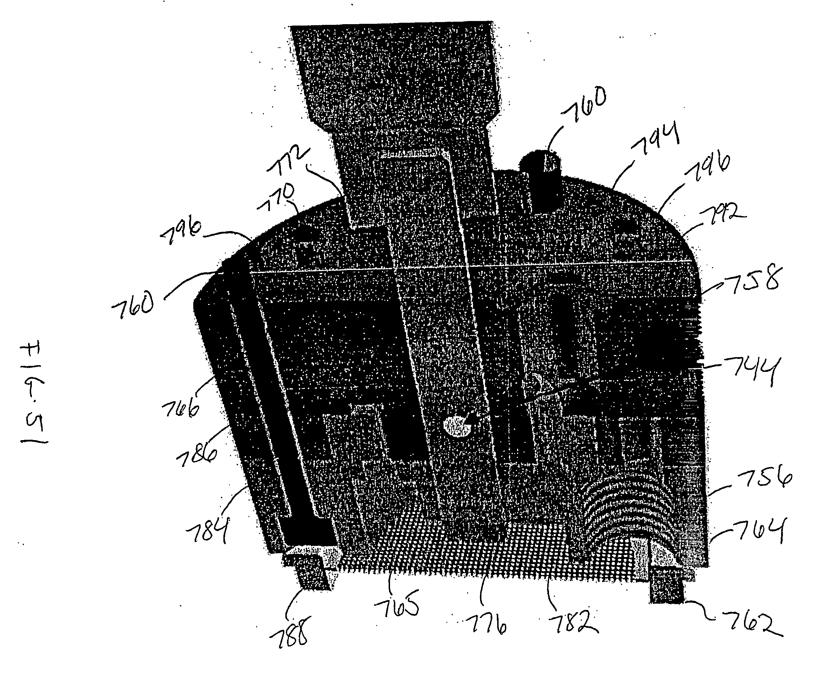

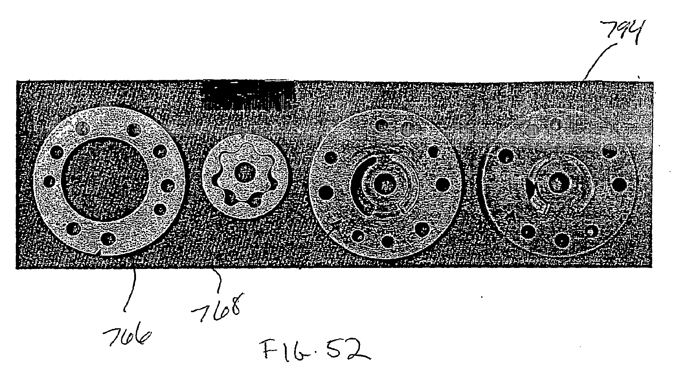

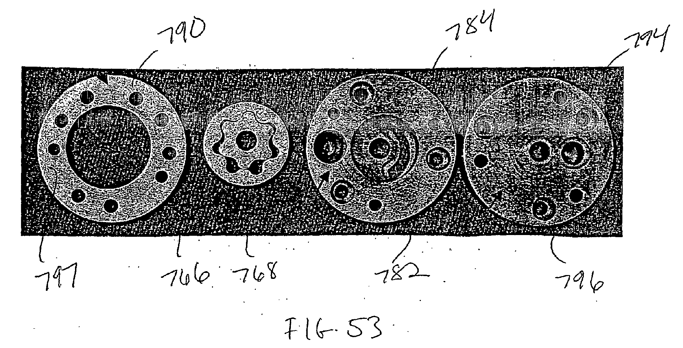

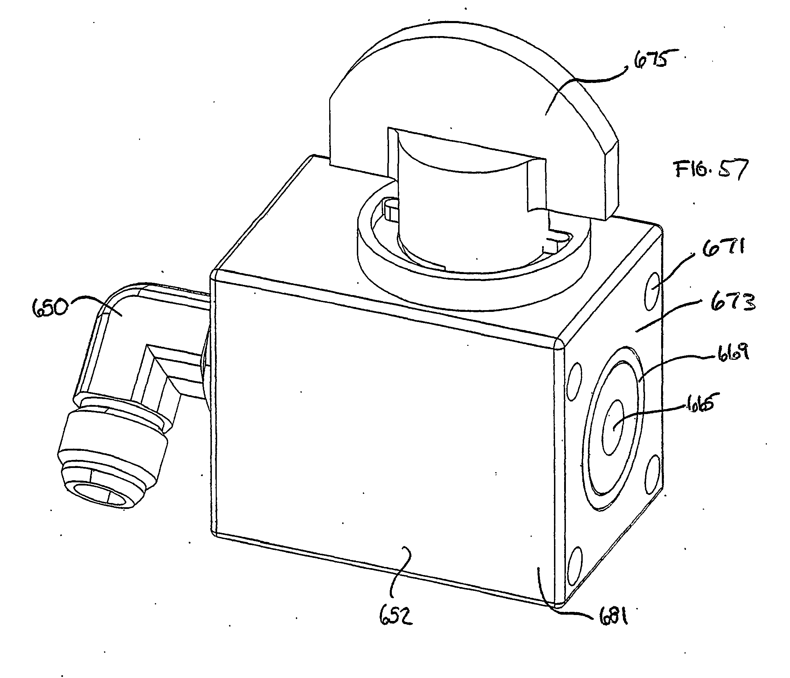

In a preferred embodiment, there is attached a gerotor pumping unit to the base of the outlet manifold. In this regard, reference is made to Figure 49 providing a rendering of pump head 756 in an assembled condition and Figure 49A showing an exploded view of the same. Figures 50 and 57 provide different cross sectional views of pump head 756 and shows locating pins 760 designed for reception in alignment recesses 752 (Fig. 47) at the base of outlet manifold such that pump head 756, with its chemical output port 758, is placed in proper alignment with the input port 750 at the bottom of outlet manifold 646. As shown in Figures 49-53, pump head 756 is a multi-stack arrangement comprising a plurality of individual plates with Figure 52 showing the unassembled set of plates with a view to the interior surface of each and Figure 53 showing the same plates but with an outer or exposed surface presentation (the below described center or intermediate plate 766 and gcrotor unit 768 having a common appearance on either side). Figures 50 and 51 illustrate base annular ring 762 which provides a clearance space relative to filter 765 (e.g., a 30 to 40 mesh being deemed sufficient in working with the 100 mesh screens in manifold 199, for example) sandwiched between ring 762 and bottom or base plate 764 of pump head 756. Center plate 766 is stacked on base plate 764 and held in radial alignment by way of drive shaft 770 which has an upper connecting end 772, an intermediate drive pin 774, and an extension end 776 extending into bottom plate central recess 782 providing a cavity above filter 765. The solid central region of bottom or base plate 764 defining the base of recess 782 and the chemical access passageway 784 for chemical having just passed through filter screen 765 and into recess 782. The chemical is then received by gerotor unit 768 comprised of outer gerotor ring 786 and inner gerotor ring 788 each preferably formed of powdered metal.

Gerotor unit 768 is received within the eccentric central hole 790 of center plate 766. As seen from Figures 52 and 53 a preferred arrangement features an inner gerotor section 788 having 6 equally spaced teeth in a convex/concave arrangement. The interior of outer ring 786 also features seven concave cavities extending about a larger inner diameter relative to the outer diameter of the interior positioned gerotor gear with, for example, a 1.27 mm (.05 inch) eccentricity. The concave recesses generally conform to the convex projections of the interior gerotor plate with the relative sizing being such that when one interior ring tooth of the interior gerotor pump plate is received to a maximum extent in a receiving concave cavity in outer ring 786, the diametrically opposite interior tooth of the interior gerotor pump plate just touches one of the outer ring projections along a common diameter point while the adjacent teeth of the inner ring have contact points on the exterior side of the adjacent two projections of the outer ring (e.g., within 15° of the innermost point of those two teeth). The upper (relative to the Figures) left and right teeth of the inner ring extend partially into the cavity adjacent to the one essentially fully receiving the inner ring tooth. The left and right teeth extend into those outer ring reception cavities moreso than the remaining teeth with the exception of the noted essentially fully received tooth. The geometry of the gerotor of the present invention takes into account the characteristics of isocyanate which has a tendency to wear out prior art configured gerotor tips in the A chemical which reduces pump efficiency and negatively effects foam quality. Isocyanate does not provide a good or suitable hydrodynamic boundary layer between the rotating teeth of the gerotor assembly and an associated excessive contact between the inner and outer rotor and rings at specific location on each tooth leading to rapid wear. The illustrated geometry of the gerotor of the present invention takes into account these prior art deficiencies and is directed at providing a minimized degree of pump element wear and loss of pumping efficiency, which if lost can lead poor chemical ratio control and a resultant loss in foam quality.

Figures 50 and 52 further illustrate top plate 792 which includes outlet port 794 which feeds into the bottom of outlet manifold 646 via conduit 750 with check valve control. As seen from Figures 51 and 53, there are a plurality of recessed fastener holes 796 formed in the top plate that are designed to receive extended fasteners 798 with one representative bolt type fasteners 798 shown in Figures 49A and 50 as extending through reception holes in each plate with preferably at least a lower plate having threads to interlock all plates into a pump unit with the gerotor unit nested within the same, and pin 774 precluding pull out of drive shaft 770 until unit disassembly. Also, as seen from Figure 51 alignment pins 760 are also elongated so as to extend through aligned holes in each plate as in alignment holes 799 and 797 for central plate 766 and top plate 792 (Fig. 53). Alignment pins have enlarged heads 795 that are received as shown in Figure 51 and preferably locked in place upon annular ring 762 fixation to bottom plate 764 via fasteners F5.

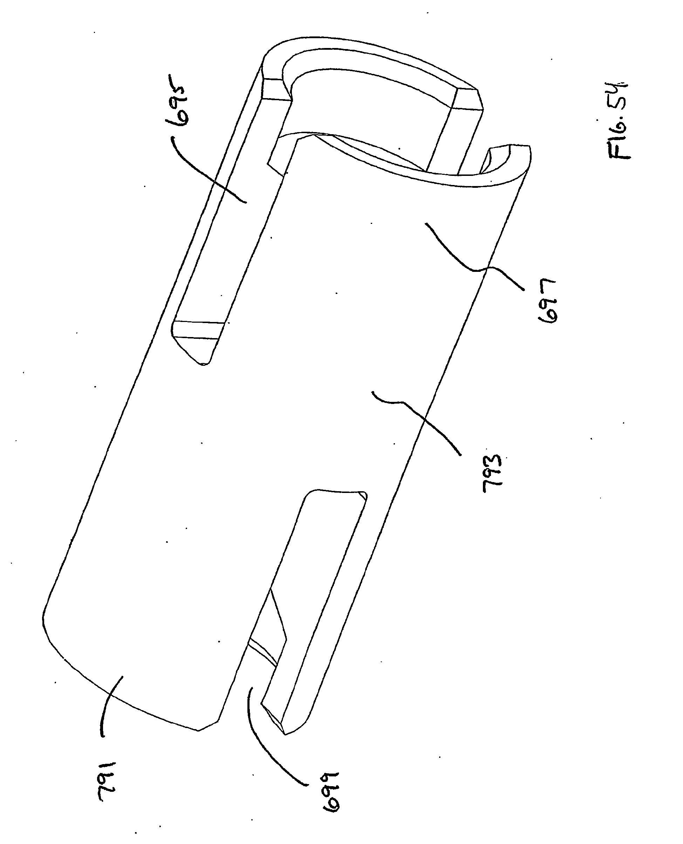

Figure 54 illustrates flex coupling 793 having slotted bearing shaft connection end 791 with slot 699 receiving lower, dual flat sided flex connector end 736 of bearing shaft 718 (Fig. 49) for a torque transmission connection as shown in Figure 34. Flex coupling 793 includes drive shaft connection end 697 having a shaft reception slot 695 rotated 90 degrees relative to slot 699 and designed to fully receive the upper, dual flat sided end 772 of drive shaft 770 (Figs. 34 and 51). Flex coupling 793 allows for accommodation of some misalignment between the bearing shaft and drive shaft, and helps to avoid premature failure of output manifold bearings or the load bearing surfaces of the pump itself.

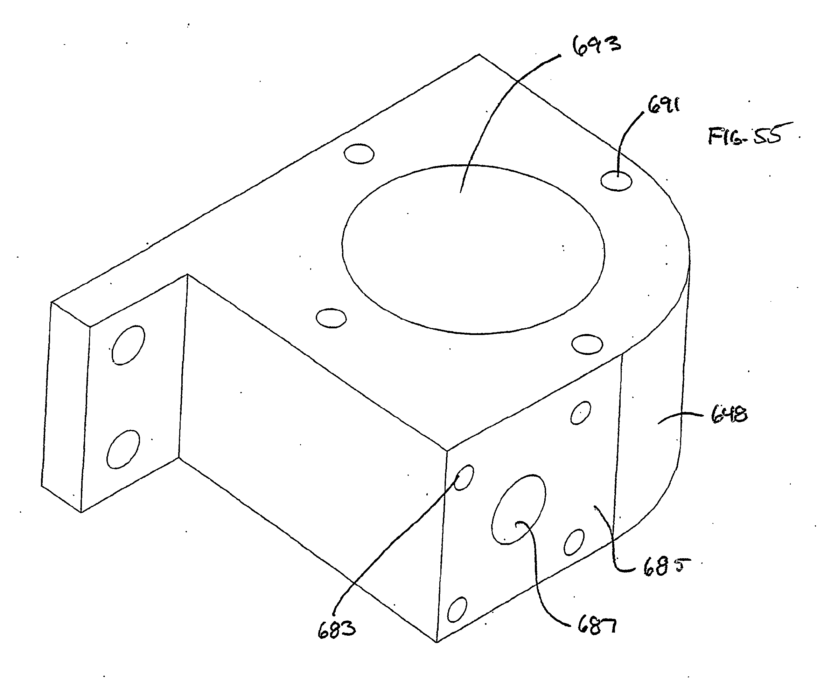

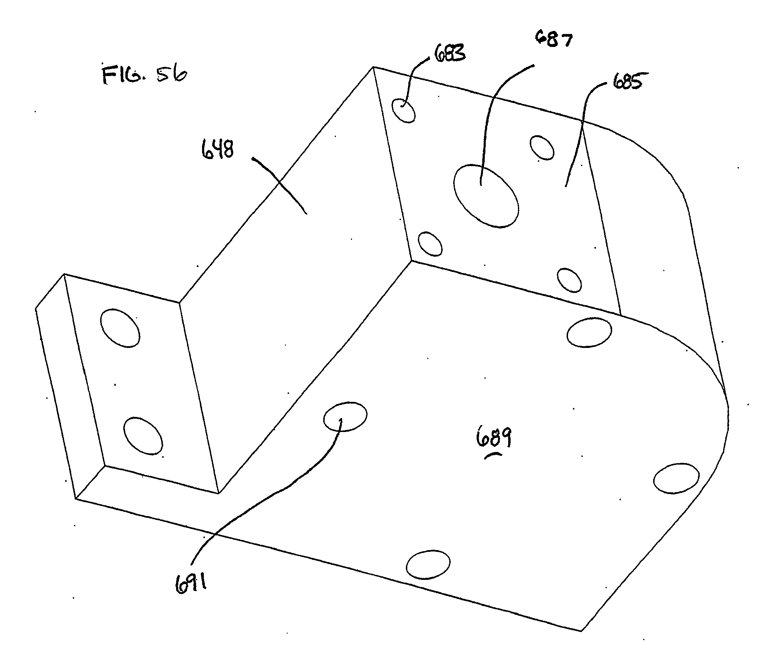

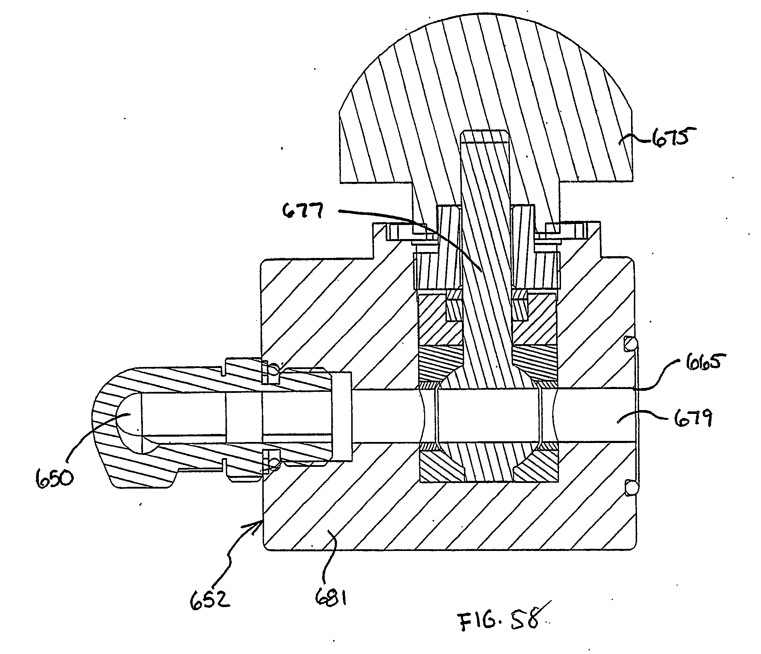

As seen from Figures 33, 34, 55 and 56, chemical inlet manifold 648 has a recessed region 693 for receiving the above described gerotor pump assembly as well as fastener reception holes 691 that extend through the inlet manifold to provide for connection with outlet manifold 646 in the stacked arrangement shown in Figure 34 (preferably with a compressed O-ring there between as shown in Figure 34). Figures 55 and 56 also illustrate inlet manifold 648 having flat bottom surface 689 which can be placed on base 42 of the foam-in-bag dispenser. Fastener flange 649 also provides for fastening the pump assembly into a fixed position relative to base 642 (e.g., via fastener holes FA to a suitable flange reception area in base 42). Figures 55 and 56 further illustrate chemical inlet port 687 formed in side wall 685 which wall is planar and surrounds port 687 and has fastener holes 683 (e.g., four spaced at corners in the planar wall surface 685). Fastener holes 683 and planar surface 685 provide a good mounting surface and means for mounting inlet valve manifold 652 shown in Figures 57 and 58. Inlet valve manifold is shown to have chemical line angle connector 650 in threaded engagement with housing block 681 having a longitudinal chemical passage 679 with outlet 665 for feeding inlet port 687 of inlet manifold 648 so that chemical can be fed to the gerotor unit Housing block also has a vertical recess for receiving ball valve insert 677 which is connected at its end to grasping handle 675 (or an alternate handle embodiment as represented in Figure 34 with handle 675') which is used to rotate valve insert 677 to either align the ball units passageway with the chemical passageway or block off the same. Figure 57 further illustrates mounting face 673 which has a seal ring recess 669 for receiving an O-ring and also illustrates the outlet ends of fastener holes 671 aligned with holes 683 for releasable, sealed mounting of inlet valve assembly 652 on inlet manifold 648.

Figure 59 illustrates housing 663 forming part of the hose and cable management system of the present invention. As seen from Figures 1-5, cable management housing 663 has a left to right width that conforms to the combined width of solvent tank 402 and extendable support assembly 40 and is also mounted on base 42 so as to provide a compact assembly that is readily mobile to a desired location. As seen from Figures 1, 3 and 4 housing 663 houses chemical A pump assembly 44 and chemical B assembly 46 with the exception of the quick connect inlet valve manifolds 652 and 652' connected to chemical hose lines 28 and 30. As seen from Figure 59, housing 663 includes cable side housing section 661 and pump side housing section 659. These two sections are designed to mate together to form the overall housing configuration and have fasteners to connect them together. On the pump side section 659 there is provided quick release access cover 653 which covers over an access cutout 651 provided in housing 663. In a preferred embodiment, cover 653 is readily removed without fasteners (e.g., a slide/catch arrangement or a hinged door arrangement with flexible tab friction hold closed member (not shown)) and sized so as to provide for direct access to the inlet ports shown in Figure 55 for the inlet manifolds 648, 648' and the fastener holes 683 and also overlapping valve handles 649, 649' (Fig. 33) for shutting off the heated outlet lines 43' and 45 leading out from outlet manifold 646. Thus, with the inclusion of inlet valve manifolds 652, 652' at the end of the chemical hose lines 28, 30 an unpacked foam-in-bag system can be rolled into the desired location, and the inlet valve manifolds readily fastened to the inlet pump manifolds 648 and 648', and when the system is ready for operation, inlet manifold valve handles 675 and 675' can be opened with handles 649 and 649' also placed in an open position for allowing chemical flow to the dispenser of the foam-in-bag system. If servicing is desired, the valve handles 649 and 649' are closed off to isolate any downstream chemical, valve handles 675, 675' are closed off to avoid any chemical outflow from the heated hoses and the inlet manifold valves 652, 652' unfastened and removed. While in this valve closed situation, the flow of isolated chemical out of the pump head unit itself is minimal, there is also preferably provided block off caps 657, 657' which are fixed in position close to the inlet manifold ports and can be quickly inserted as by threading or more preferably a soft plastic friction fit. Caps 657 and 657' are also preferably fixed on lines to the pump assembly so as to always be at the desired location and Figure 33 shows capture hooks 655 and 655' for mounting the caps in an out of the way position during non-use.

Hose and cable management means 663 receives within it portions of the chemical conduit hoses 28' and 30' running from the outlet of the in-line pumps to the dispenser and portions of electrical cables that originate at the dispenser end of the heater hoses. Between the dispenser and the management means 663, the cables and hoses substantially (e.g., less than 61 cm (2 feet exposed)) or completely extend within the adjustable support 40. Thus, there are no dangling chemical hoses or umbilical cables outside of the foam-in-bag system's enclosure areas, with the possible exception of the chemical feed hoses 28 and 30, which supply chemicals from the remote storage containers, but can be fed directly from the service to the positioned lower pump inlet (e.g., a protected ground positioning and need not be heated, although a manifold type heater or a hose heater can be provided on the upstream side of the in-line pumps (e.g., to avoid situations where the chemical being fed to the in-line pumps is lower than desired) (e.g., below 18.3 °C (65°F)). A feature of the hose and cable management means of the present invention is that it can accommodate the lift of the bagger assembly which is shown in Figure 5 in a raised position (e.g., a 61 cm (24 inch) rise from a minimum setting). The ability of the cable management to both enclose and still allow for extension and retraction of the hose and cables provides a protection factor (both from the standpoint of protecting the cables and hoses as well as protecting other components from being damaged by interfering cables and hoses) as well as an overall neatness and avoidance of non-desirable or uncontrolled hose flexing.

In a preferred embodiment there is provided a dual-coil assembly 635 for the cable and hose sections enclosed in the housing. This dual-coil assembly includes one static or more stationary hose (and preferably cable) coil loop assembly 633 and one expandable and contractable or "service" coil loop assembly 631. For clarity, only the chemical coil hoses are shown in the housing in the dual loop configuration although the power cables are preferably looped either together with the hoses or in an independent dual-coil set. In the embodiment shown in Figure 59 the hoses are marked at appropriate intervals and tied together (ties 629 shown) at these marks to create a static oval (e.g., a 38.1 cm to 50.8 cm (43.2) or (15" to 20" (e.g., 17")) height or loop length L and a 17.9 cm to 30.5 cm (26.7 cm) or (7" to 12" (e.g., 10.5") width)) coil loop 633 which has its free hose ends 632 and 634 in connection with the internalized pump assemblies' respective chemical outlets. The downstream or non-free end of static loop 633 merges (a continuous merge) into the upstream end of service coil 631 shown having less coil loops of about the same width when the system is at its lowest setting but longer length coils (e.g., 50.8-76.2 cm (61 cm) or (20-30" (24")) L X 20.3-30.5 cm (26.7) 8-12" (10.5") width). The length of each hose 28' and 30' with upstream connection ends 45, 43, respectively, is preferably less than 7.6 m (25 feet (e.g., 6 m (20 feet)) and preferably long enough to accommodate the below described chemical hose/heater of about 5.5 m ± .6 m (18 feet ± 2 feet) in coil assembly with the static loop set having about 3 to 7 coil loops and moving coil 631 preferably having less (but longer length coils) such as 1 to 4 coils with 2 being suitable. Thus, the vertical length of the cable set 631 is vertically longer than the stationary coil set in its most expanded state and the reverse (or equality) is true when the non-stationary coil is in its most contracted state.

Housing section 661 further includes cable and hose guide means 3467 which is shown in Figure 59 to include separation panel 639 which is fixed in position at an intermediate location relative to the spacing between main panels 647 and 645 of housing sections 659 and 661. Separation panel 639 is shown with a planar back wall (no lower abutment flange unlike the opposite side) facing main panel 645 and an opposite side having mirror image curved mounts 643 and 641 with curved or sloped upper facing surfaces that are designed to generally conform with the generally static or fixed loop curvature of coil assembly 633. Service coil 631 is positioned between panel 639 and housing back wall of section 645 and in an extended states extends down below the lower edge of panel 639. Panel 639 has an upper cut out section 629 which provides space for an overhanging of the fixed loop and service loop merge portion 631 such that the static coil portion is on the opposite side of panel 639 as the service loop. As shown in Figure 59 the downstream ends 625 and 627 of the internal chemical A and chemical B conduit extensions 28' and 30' within the hose (and preferably cable) manager are arranged to extend vertically out of an open top of the house and into a reception cavity provided in the hollow support 40 positioned in abutment with housing 663 as shown in Figure 2.

With the hose and cable management of the present invention, as the lifter moves up the service coil assembly contracts and gets smaller (tighter coil), while as the lifter moves down the service coil assembly expands back and gets larger or extends down farther. The hose sections in the static coil are arranged so as to avoid any movement as the movement requirement associated with a lifting of the bagger is accommodated by the larger coil loop or loops of the service coil assembly which, because of the larger size, is better able to absorb the degree of coil contraction involved. The number of each coil set depends upon the lifting height capability of the bagger assembly. In addition the arrangement of the housing and the separator panel help in ensuring proper and controlled contraction and expansion. Preferably the hoses and cables are also banded with colored shrink tubing to aid in the manual process of winding the coils within their respective enclosures or housing sections, which typically occurs in the factory before initial ship out and in limited service situations. Lining up the colored guide bands on each hose or cable will help ensure that the coil is wound correctly as a bad winding can cause serious damage to the system when the lifter goes up, as it can lift with over 2,224N (500 lbf). An additional advantage of the cable and hose management means of the present invention is the protection given to the heater wire lines within each of the chemical hoses extending downstream from the pump assemblies. By isolating the chemical lines, and providing limited and controlled motion for everything inside, the hose manager protects the heater wires from excessive bending, pulling, twisting, and/or crushing that could cause the heater wire to fail prematurely (e.g., these forces associated with uncontrolled movement and improper positioning of the hoses also represents a common cause of broken thermistors in the heater wire line representing one of the most common chemical conduit heater system failures).

Figure 59 further illustrates mounting block 623 having a first side mounted to the housing and a second side attached to base 42 so the shorter dimension of the housing's base hangs off in cantilever fashion off the back flange of the base. The temperature in the two heated coiled chemical source hoses 28' and 30' in the cable and hose managing means preferably have temperature sensors to facilitate maintenance of the chemical at the desired temperature. The coiled hoses 28' and 30' are each provided with an electrical resistant heater wiring and feed through assembly and extend between the in-line pump assemblies 44 and 46 and output to the dispenser (e.g., manifold 199) or, if an in-barrel pump is utilized, between the in-barrel pump at the chemical source to the dispenser. Providing the chemical to the dispenser at the proper temperature provides improved foam quality. As an example, chemical precursors for urethane foam usually are heated to about 51.7 to 62.8 °C (125 to 145°F) for improved mixing and performance (although various other settings are featured under the present invention such as below 51.7 °C (125°F) to room temperature through use of catalyst or alternate chemicals, or higher temperatures above 62.8 °C (145 degrees F) (e.g., (71.1 to 79.4°C) (160 to 175°F) range) of different characteristic foam in higher density polyurethane foam).

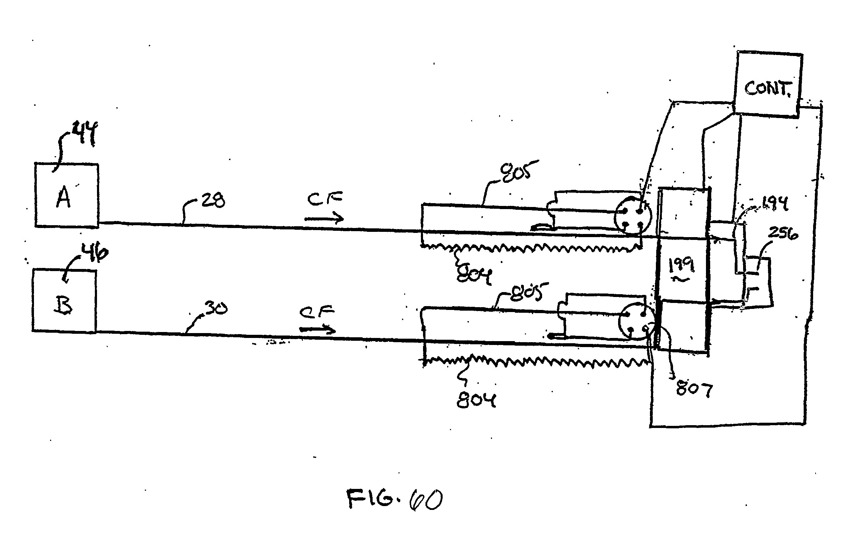

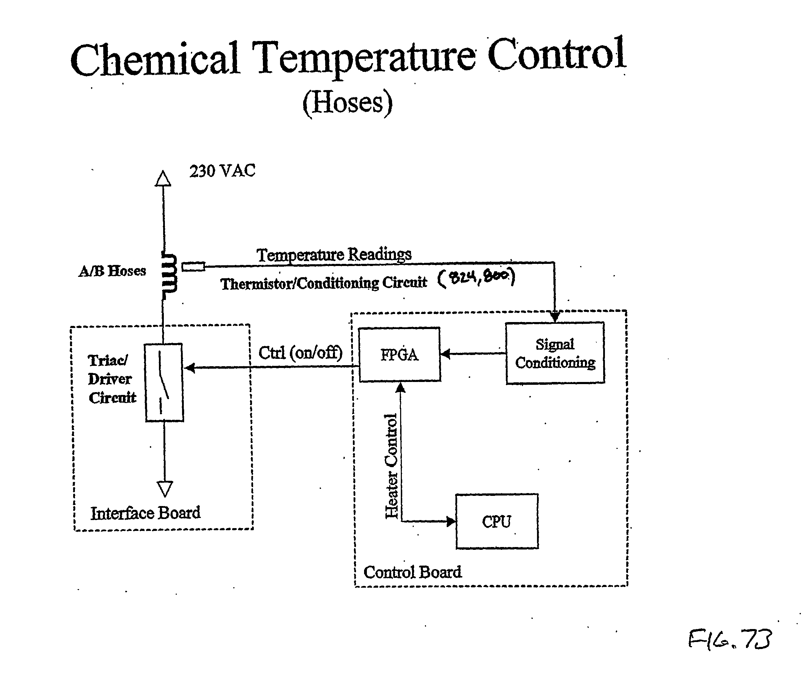

Figure 60 shows the heater conduit electrical circuitry or means for heating the chemical while passing through chemical hose 28' (or 30') provided in the hose management means and coiled for over a majority of their length preferably over 75% of their overall length. Figure 60 shows heater element 804 having a lead that extends from a schematically illustrated feed through block 807 providing means for separating a chemical contact side from an air side, with the heater element wiring received within the chemical hose and a feed wire extending externally to the feed through block 807 to a control component in electrical connection with a source of power as in a 220 volt standard electrical source connection. Figures 60 to 67 illustrate various components of the heated chemical hoses 28' and 30' extending for about 20 feet between the outlet of the in-line pumps and manifold 199 mounted on dispenser housing 194. Figures 71 and 73 illustrate the control system designed to place and maintain the chemical at the desired temperature at the time it reaches the manifold 199. By increasing or decreasing the amperage level to the below described chemical hose heater the desired temperature can be maintained. Also, with the design of the present invention an 5.5 m (18 foot) heater element in the chemical conduit will be sufficient to provide a uniform temperature to the rather viscous and difficult to uniformly heat chemical processors A and B. The electrical heater in the hose extends from its mounting location with the feedthrough (mounted on the dispenser) back down through the coil toward the outlet of the in-line pump (or barrel pump) but need not extend all the way to the pump, as having the control and feedthrough end of the chemical hose heater at the dispenser end allows for the upstream end of the hose heater which first makes contact with chemical in the hose, to be located some length away from the pump source end such as more than 45.7 cm (18 inches (which avoids an insulating wrapping of that end of the hose heater))

Figure 60 illustrates feedthrough 807 in electrical connection with the control board with electrical driver and temperature sensor monitoring means by way of a set of wires extending from the air side of feedthrough 807. Figure 65 illustrates electrical cable 801 received within the air side potting AP and the chemical side potting CP, with the potting epoxy utilized being suitable for the temperatures, pressure and chemical type involved such as the chemicals A and B. A suitable epoxy is STYCAST® 2651 epoxy available from Emerson Cumming of Billenca, Massachusetts, USA.

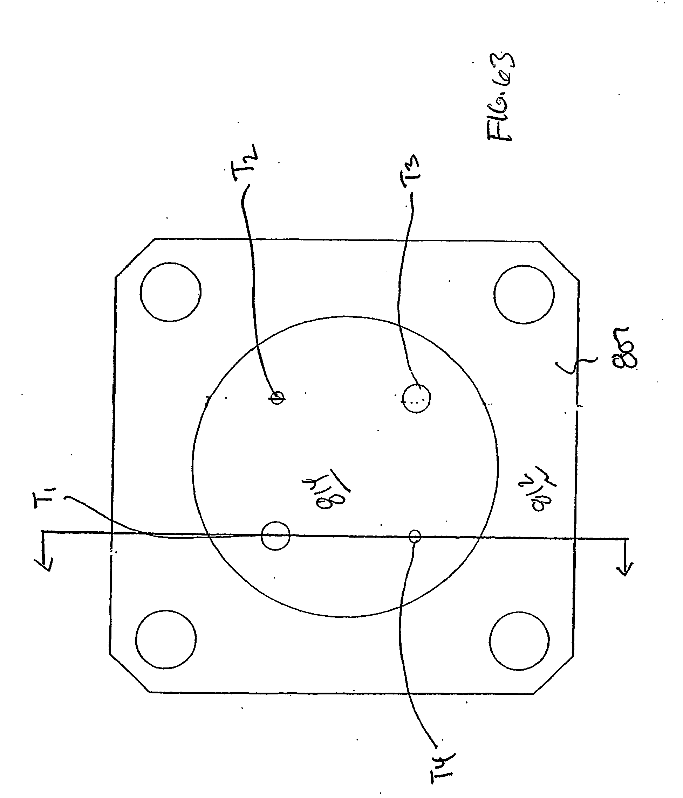

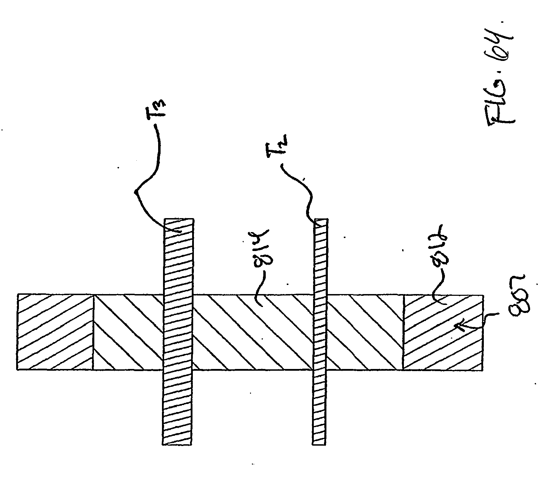

The electrical cable set 801 is comprised of four separate leads 801A, 801B, 801C, 801D with 801A providing the electrical power required for heating the heater element 804 to the desired temperature and with 801B in communication with the return leg extending from the end of the heating element that is farthest removed from the feedthrough 807 and with 801C and 801D, providing the leads associated with the thermistor (or alternate temperature sensing means). The control schematic of Figure 73 shows the chemical hose heater driver circuit and temperature monitoring sub-system of the control system of the present invention. Figure 60 also illustrates in schematic fashion the control means 803 which is preferably provided as part of an overall control console or board for other systems of the illustrated foam-in-bag assembly as shown in Figure 71. The driver for the hose heaters preferably receive power from a typical commercial grade wall outlet When the heater element of the present invention is drawing full power (e.g., at start up to get the chemical up to the desired temperature), the voltage differential from one end of the heater coil to the other is typically the full AC line voltage, which varies depending on local power with a heater coil drawing at about 9 amps at 208 volts AC. Figures 63 and 64 illustrate the feedthrough plate alone while Figure 65 illustrates feedthrough connector assembly 810 having feedthrough 807 comprised of an outer feedthrough housing block 812 and an interior insert 814 preferably formed of a material that is both insulating and can be sealed about the terminals (e.g., a molten glass application, although other insulating means as in, for example a material drilled through with an adhesive insulative and sealing injectable material filling in a gap) as shown in Figures 63 and 64 with the illustrated glass insert having extending therethrough to opposite sides terminals T₁ to T₄. As shown terminals T₁ and T₃ are more robust or larger terminals and are designed to handle a higher amperage than the smaller pins T₂ and T₄ with the larger preferably being 12 amp terminals and the smaller preferably being 1 amp terminals. Terminals T₁ to T₄ extend out to opposite sides of the feedthrough and are embedded in the AC and AP pottings providing casings with casing CP covering all exposed surfaces of the chemical side of terminals T1 to T4 and the associated wire connections shown bundled on the chemical side and generally represented by BS. Casing AP or the opposite side also cover all exposed surfaces of terminals T1 to T4 as well as the wire lead connections (e.g., solder and exposed wire portions) so as to leave no exposed, non-insulated regions susceptible to human contact (a deficiency in prior art systems).

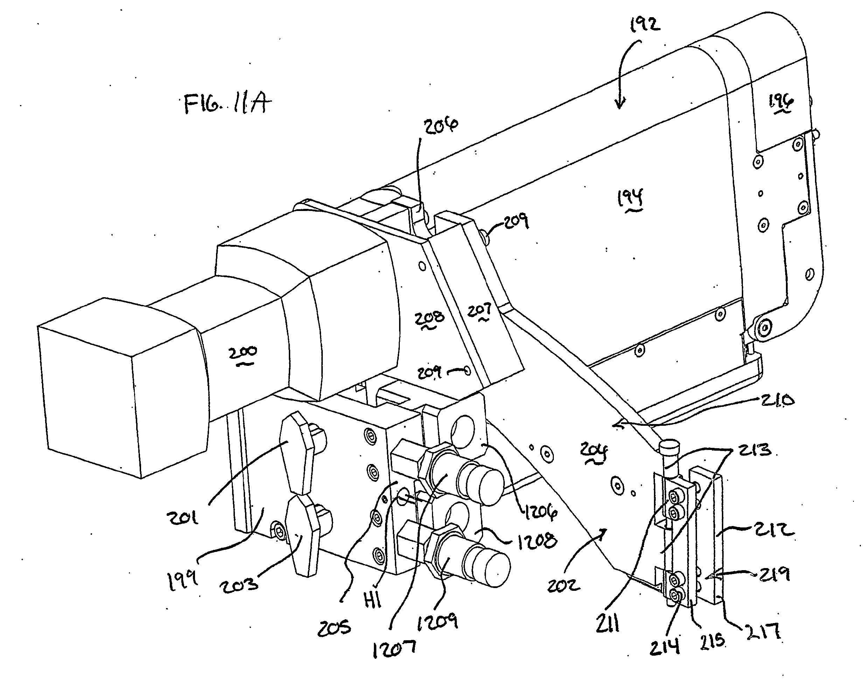

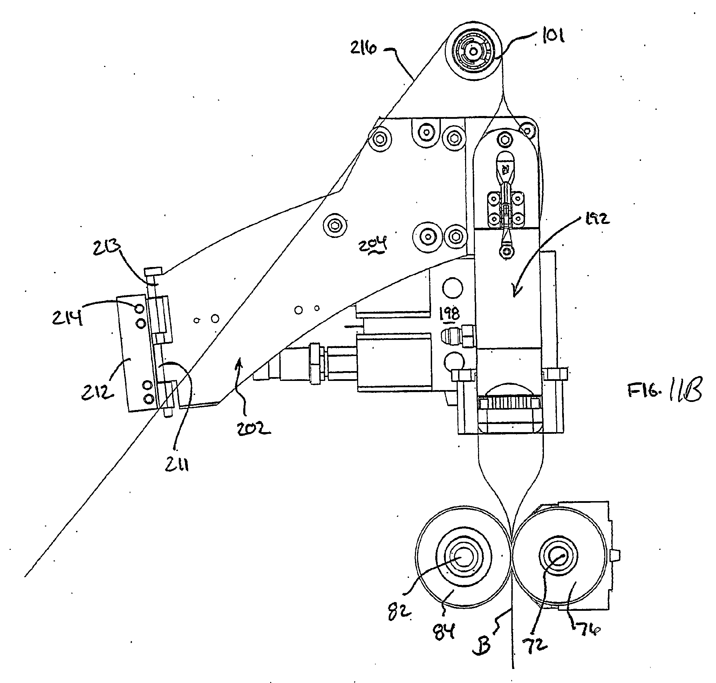

Figures 65A, 65B, and 65C illustrate feedthrough connector 810 in combination with dispenser connection manifold DCM. As shown in Figure 65B, feedthrough plate 807 is secured (note corner bolt fastener holes) to an end of manifold DCM. As shown in Figure 65C, dispenser connection manifold DCM for one of the chemicals (e.g., A) as well as the corresponding dispenser connection manifold DCM' are secured at their projections PJ having central chemical port CCP (adjacent bolt fastener apertures to each side). Figure 60 also illustrates relative to the chemical side of the feedthrough which is received within the chemical hose 28' and 30', the coiled resistance heater 804. Figure 65A provides a cut away view of the heated chemical hose manifold 1206 (see Figure 11A for an illustration of its mounting on the dispenser together with the other chemical hose manifold 1208) which houses feedthrough connector assembly 810. Figure 65A also shows the coiled heater element 804 received directly in the chemical side potting CP and connected to one of the robust terminals (e.g., T1) while the return leg wire (not shown - included together with the thermistor wires on the chemical side 801C' and 801D') traveling in the interior of the coil extends through the potting CP and is connected to the other robust terminal (T3). The last 45.7 to 61cm (18 to 24 inches) of the coiled heater wire extending from the chemical potting is preferably wrapped or coated or covered in some other fashion with an insulative material as the chemical B is somewhat conductive and thus this covering avoids leakage in the area of metal components such as the receiving manifold 1206. The remainder of the coiled heater wire need not be covered (except for perhaps the run out portion of the wires extending out of the heater coil wire to bypass the thermistor head which occupies much of the interior of the coiled heater wire) thus saving the expense and cost associated with prior art heater coils extending from the pump end toward the dispenser. This wrapped end WR is represented in Figure 65 but is removed in Figure 65A for added clarity. The opposite cable group 801 on the air side extends a short distance (e.g., less than 76.2cm (2 ½ feet) such as 61cm (2 feet)) to the controller thus reducing umbilical line cost for the heater element. Figure 65A further illustrates O-ring or some alternate seal received with an annular recess ORR in the feedthrough contacting end of manifold 1206 ("DCM") and placed in sealing compression against feedthrough upon fastening the two together. Thus chemical being fed through chemical hose 28' exits the end of the hose 28' at the enlarged head HE with manifold engagement means (e.g., a threaded connection of a male/female connector -not shown). Also, although not shown in Figure 65A, the solvent entering the chamber in manifold 1206 is fed out of the chemical port CCP shown in Figure 65B and into the main manifold 199.

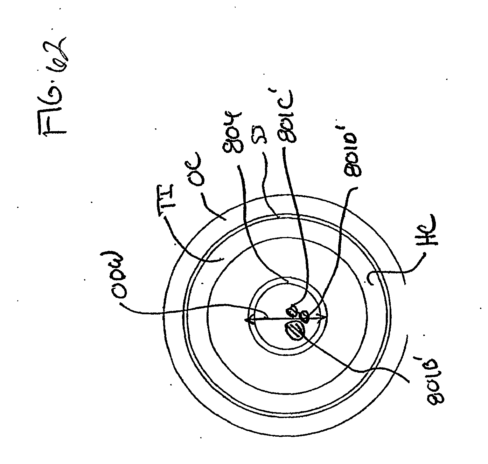

Figure 62 provides a cross-sectional view taken along line H-H in Figure 65 showing the wires 801B', 801C' and 801D' and heater coil 804 received within hose casing HC which is a flexible and includes a Teflon interior TI and a strengthening sheath SS and outer covering OC. Although not shown for added flexibility the outer housing preferably has a coiled or convoluted configuration which extends to the interior conduit surface and which improves flexibility despite the fairly high pressures involved. The convolutions form a non-smooth, corrugated or ridged interior surface in the liner TI's interior surface (see below regarding the modified coiled heater element free end insert to facilitate the feed in of the coil into the hose conduit)..

Teflon inner lining has a preferred 1.3cm (½ inche) of open clearance for chemical flow and reception of the thermistor and heater wires. The illustrated hose 28' is designed for handling the aforementioned pressures for the pumped chemicals (e.g., 1,378Kpa to 4136Kpa 200 to 600 psi) together with the flexibility required associated with the described environment including pressurization and bending requirements. Stainless steel swivel fittings (JIC or SAE type) are preferably provided on each end of any fittings between a chemical hose and any inlet manifold or other receiving component of the chemical pump assembly. The illustrated internal heater 804 is designed to be able to heat the chemical derived from the source which is typically at room temperature (which can vary quite a bit (e.g., -34.4 to 48.9°C (-30 to 120°F) depending on the location of use) and needs to be heated to the desired temperature (e.g., 54.4°C (130°F)) before reaching the dispenser mixing chamber - with a length of 6m (20 feet) for the chemical hose being common in many prior art systems. In a preferred embodiment, an internal resistance heater wire 804 is snaked through the chemical hose conduit and is not physically attached to the inside diameter of the hose and the heater element of the heater wire is formed of uninsulated wire with a coil configuration being preferred and with a round or rectangular wire configuration (e.g., a ribbon wire) also being preferred. A preferred material is Nichrome material for the chemical hose heater wires.

The coiled heater element section of the heater wire received in the hose has a length which is sufficient to achieve the desired heat build up in the chemical but unlike the prior art arrangements (wherein the electrical connections are at the pump end and the heater wire had to extend for about the same length of the chemical hose to avoid cold shot potential), the present invention does not have to match the length of the chemical hose as there can be an unheated upstream section in the chemical hose leading up to the closest, first chemical end tip of the heater wire. The outside diameter ODW (Fig. 106) for the heater coil (e.g., 8.9mm (0.35 inches)) is made smaller than the hose fittings which the heater coil must be passed through.

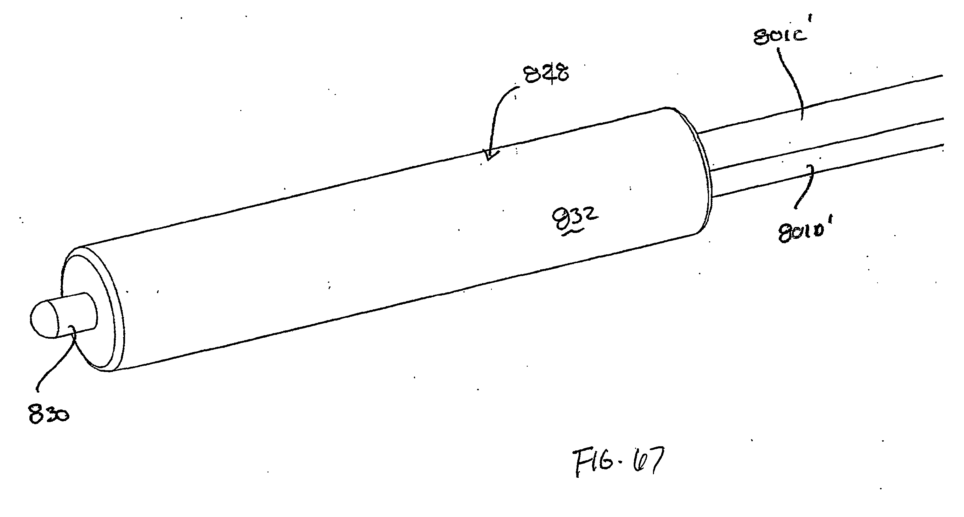

As shown by Figures 66 and 67, the feed out leads 801C and 801D' extend out from terminals T₂ and T4 (less robust terminals) within the chemical conduit out to a chemical temperature sensor 828 assembly, which in a preferred embodiment includes a thermistor sensor THM glass rod thermistor device 830 encapsulated within thermistor casing 832. Glass rod thermistor device preferably comprises a 1.4 to 1.5mm (.055 to .060 inch) diameter glass rod thermistor device 830 of a length about 6.4mm (0.25 inches) with less than a half of its overall length exposed (e.g., a ¼ length exposure or 2.3mm of a 6.4 mm (.09 of a .25 inch) long rod) by extending axially out from the central axis of the illustrated cylindrical casing 832. Running internally within glass rod 830 is a pair of platinum iridium alloy leads (PI) leading to the thermistor sensing bead BE which is positioned at (and encompassed by) the end of the glass rod. The thermistor device is preferably rated at 2000 ohms at room temperature with a +/- .5°F accuracy and is designed for operating at high efficiency within a 51.7 to 73.9°C (125 to 165°F) range. The glass bead BE is provided within the thermistors glass casing which is designed free of cracks and bubbles to avoid undesirable chemical leakage to affect the bead. The thermistor device is further rated for a liquid environment of up to 6894 kPa (1000 psi) and designed to withstand the potential contact chemicals as in water, glycols and polyols, surfactants, and urethane catalysts and being able to operate within an overall temperature environment of 0 to 100°C (32 to 212) degrees F).

Thermistor casing 832 is preferably formed of epoxy (e.g., a 2.54cm or an inch long with a diameter which allows of insertion in the heater element coil - such as 4.8mm (.190 inch) diameter) which encapsulates the leads 801C', 801D' (e.g., 61cm (two foot long) wires with 24 AWG solid nickel conductor with triple wrap TFE tape and with etched end insulation for improved bonding to epoxy). Inside casing 832 is also the noted portion of the thermistor glass rod 830 and stripped nickel leads 834 bowed for strain relief and welded or silver soldered to the platinum thermistor leads 836 with the latter extending both through the cylindrical casing and having a preferred thickness of .05 to .1mm (.002 to .004 inch) diameter and preferably welded or soldered to the nickel leads. The epoxy forming the casing is preferably transparent or translucent and should be thermal expansion compatible with the glass rod so as to avoid cracking of the same under thermal shock. As depicted in Figure 73, the hose temperature control system senses the chemical temperature by measuring the resistance of the thermistor bead centered in the heater coil. The thermistor is designed to change resistance with temperature change, with a preferred design featuring one that has 2000 ohms at room temperature (e.g., 21.1°C (70°F), and about 400 ohms at 54.4°C (130 degrees F)).

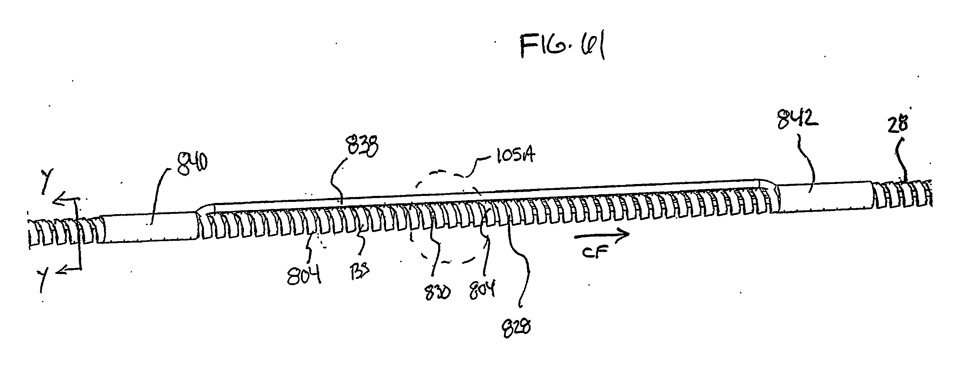

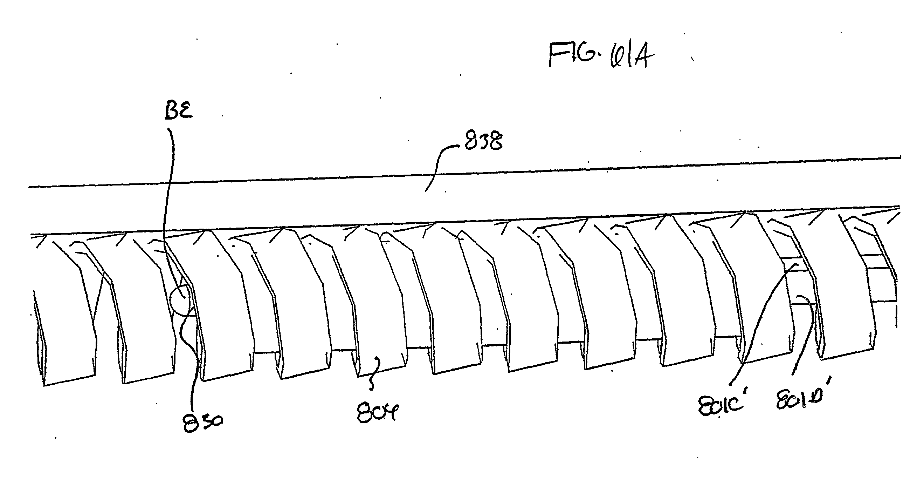

Figures 61 and 61 A illustrate in greater detail a section of heater wire 28' (or 30' as they are preferably made in universal fashion) with outer hose conduit casings removed to illustrate the heater means received within that casing having coiled heater wire 804 and associated wiring having a thermistor sensing means 828 (Fig. 66). Figure 61 illustrates the section of chemical hose 28' in which the thermistor extends and thus includes a heater element return leg detour wherein the return leg 838 extends from its travel within the conduit to run for a period out of the coiled heater wire 804 so as to run parallel for a period and then and extends into connection with a corresponding (unoccupied) one of the heavy duty terminals T1 or T3. Return leg 838 is preferably made from an insulated piece of round Nichrome or Nickel wire in a non-coiled form with suitable insulation as in PTFE of PFA insulation, in extruded or wrapped tape form. The return leg 838 that is opposite the one attached to the feedthrough terminal is attached to the end of the heater coil that terminates as coil. The heater coil and the return leg combine to close the heater circuit, so the same current that flows through the heater coil will also flow through the return leg.

As shown by Figure 61, since the thermistor and leads for it extend from electrical connections at the dispenser end of the heated conduit the thermistor sensor's bead BE is placed in direct contact with the incoming flow of chemical. This provides for a fast response to changes in chemical temperature. That is, if the thermistor bead on the end face of the epoxy cylinder faces away from the flow as it is in prior art systems, its thermal response time will be increased, and accuracy of the temperature control will suffer. In other words prior art systems that extend the thermistor from the in barrel pump toward the dispenser instead of the opposite direction of the present invention fail to place the temperature sensor in contact with the incoming chemical flow direction unless an effort is made to reverse the direction in a prior art system which is a difficult and time consuming job that that can readily result in breakage of the delicate thermistor rod. In addition, the arrangement of the present invention is unlike prior art systems where the thermistor leads have to be taken outside the potted thermistor assembly and changed in direction by 180° as they exit the coil and run along together with the return leg. This 180° redirectioning was difficult to accomplish without damaging the coil or the thermistor leads. The prior art also featured Teflon shrink tubing in this difficult to manufacture section of the heater wire with Teflon shrink tubing being a material difficult to work with from the standpoint of high temperature requirements (in excess of 600°F), requirements for adequate ventilation to remove toxic fumes, and uneven shrink qualities which can necessitate reworking.

As seen from Figure 61, only the return leg for the heater coil runs outside of the hose around the thermistor assembly and the thermistor leads never have to leave the inside diameter of the heater coil and do not have to be looped 180 degrees to face the thermistor into the direction of chemical flow. In the transition zones (840, 842), where the return leg 838 exits and re-enters, the chemical hose and exiting or entering portion of the wrapped return leg is covered with ordinary (non-shrink) tubing as in Teflon tubing. Also, because of the positioning of the thermistor assembly (e.g., exact location within 61cm (two feet) of the in-line pump assembly if utilized or the dispenser if an alternate pump system is utilized which is a location positioned internally within the chemical hose and at a location not normally flexed or bent).

Accordingly, under the present invention, the thermistor is not as easily subject to mechanical damage when the chemical hose is flexed in its vicinity. This enhanced thermistor reliability is advantageous since flexing is a leading cause of thermistor failure, which is the foremost cause of heater wire failure, and changing heater wires is a difficult, time consuming, and messy job, so avoiding such failures is highly desirable. Also, there are advantages provided under the design of the present invention of having the heater wire connections (e.g., heater wire feedthrough) of the present invention positioned close to the electronics control (e.g., control board) to preferably within 122cm (4 feet) and more preferably within 61cm (2 feet). In this way, the length of the electrical umbilical therebetween can be significantly reduced down from a standard 6 m (20 foot) length in the industry to about 61 cm 2 feet for example. Also, the umbilical cables are contained in the above described cable and hose management system, which avoids added complications such as having to use robust (SJO rated) wiring, because of the protective inclusion of the cable within the enclosure. An added benefit in the ability to place the shorter length umbilical connection within the housing 636 (e.g., formed of sheet metal) provides protection of the same from electro-magnetic interference (EMI) from the outside world and emits less EMI to the outside world such as other controlled systems in the foam-in-bag system. This feature enhances reliability and provides for easier certification as under the European CE certification program concerning EMI levels. A reduction down in the length from, for example an 5.5 m (18 foot) long prior art umbilical cord with thermistor leads down to, for example a 61 cm (2 foot) length umbilical with significant cost savings relative to the often custom engineered, triple insulated wire, with nickel conductor.

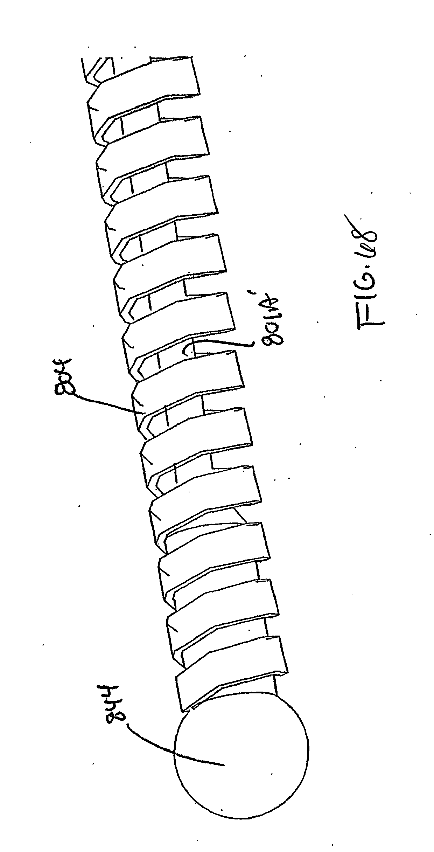

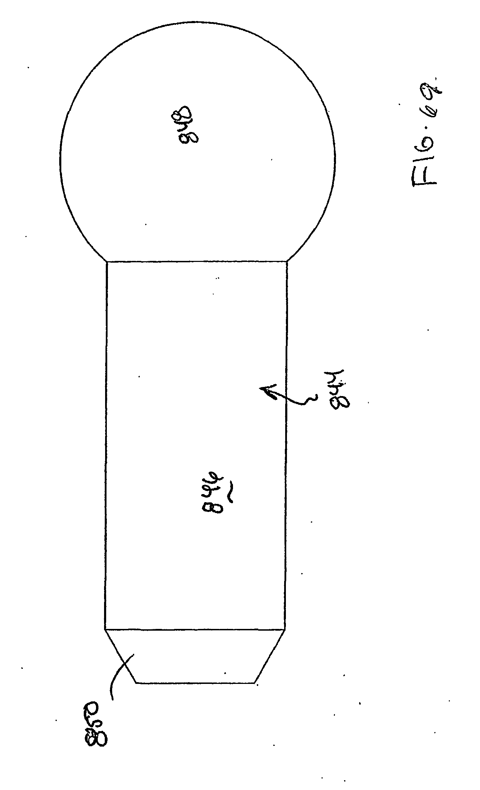

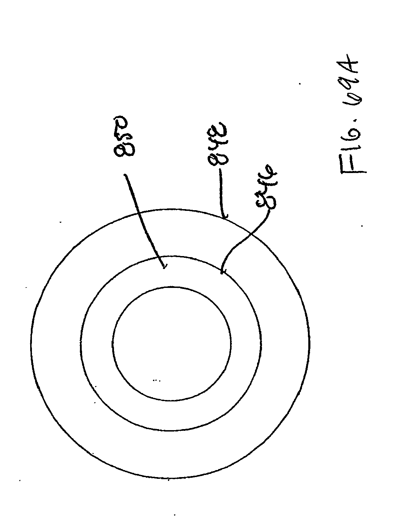

Figures 68 and 69 illustrate an additional feature of the present invention associated with the heated chemical hoses 28' and 30' which have convolved interior surfaces. Figure 68 illustrates an alternate free-end chemical hose insertion facilitator 844. Figure 68 shows a generally spherical tip 844 (e.g., referenced as the "true ball" embodiment) which is preferably comprised of Teflon body which is machined or otherwise formed. As seen from Figure 69, tip 844 has a heater coil insertion facilitator end 846 and a chemical hose insertion end 848. In the illustrated embodiment end 846 has a cylindrical configuration with sloped insertion edge 850 and a spherical or ball shaped end 848 connected to it. This arrangement provides for a rapid connection of end 846 in the free end of the heater coil as in, for example, a crimping operation wherein the insertion end 846 is crimped within the confines of a portion of the free end of the coiled heater element 804. This design also avoids a requirement for shrink Teflon tubing or any type of tubing or wrap as the ball tip end is positioned far enough away from the end of the chemical hose so that leakage currents are negligible. The relative sizing is such that the ball tip diameter has a diameter that is larger than that of the heater coil diameter but smaller than the inside diameter of the hose conduit 28 and any hose fittings to provide for threading the,heater coil within the protective sheathing. For example a size relationship wherein the inside diameter of the hose conduit lining (e.g., Teflon) 802 is about 12.7 mm F (½ inch), the ball diameter is made less than 12.7 mm (5 inch) and sufficient to allow for chemical flow (e.g., .5c m to .76 cm .2 to .30 inch, which generally corresponds to its axial length (e.g., a less than 20% slice in the true ball configuration and placed flush with the front end cylindrical extension). The cylindrical extension 846 preferably has a 12.7 mm (½ inch) axial length and a .5 cm (.20 inch) diameter. The thermistor cylinder described above preferably has a .22 inch diameter. Other means of attachment than crimping include, for example, mechanical fasteners and/or adhesives or threading inserts, wrappings, formations, etc. The insertion facilitator 844 of the present invention provides for enhanced heater wire sliding or insertion through the braided flex cable 28 (or 30) relative to prior art designs such as the ones where the coil end is provided with a potted cylindrical block with a non-bulbous, generally pointed end. The present invention's design avoids the tendency to have the inserted pointed end of the prior art tip to catch along the hose convolutions.

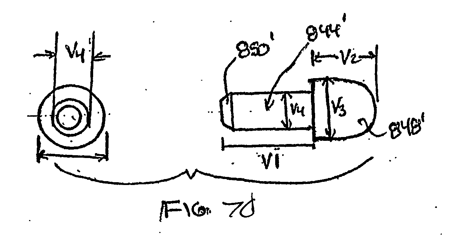

Figure 70 shows an alternate embodiment of a chemical hose insertion end 844' (corresponding components being similarly referenced label with an added dash) formed from a rod of Teflon material. As in the earlier embodiment the axial length of the coil insertion end (which extends away from the bulbous insertion end) is preferably between a 12.7mm a (½ inch) to 2.54cm (one inch) (V1) to provide sufficient crimping or securement connection surface area. The maximum diameter V3 of the bulbous hose insertion smoothly contoured end 848' is preferably about 6.6mm (260 inch), while the smoothly contoured head (half oval cross-section) has an axial length V₂ of abut a 6.6mm (¼ inch) with V₄ for extension 844' being about .5cm (20 inches) to provide for a tight fit in the heater coil 804 before being crimped.

## Claims

1. A foam chemical dispenser apparatus (20), comprising:
a chemical supply device (23);
a dispenser device (22), having a dispenser housing (194) and an outlet (308) from which foam chemical is output;
a chemical passageway through which chemical passes in going from said supply device to said foam chemical output, said chemical passageway being defined by a hose (28', 30') and chemical conduiting (602, 604, 614, 616) formed in said dispenser device wherein
a heating system is provided comprising a first heater element (804) that extends within said hose from a first end positioned closer to said chemical supply device to a second end supported closer to said dispenser device, **characterized by** a second heating element (610, 612) that is provided in said dispenser device;
a temperature sensor system including a first temperature sensor (830) positioned for sensing temperature of chemical traveling in said hose and a second temperature sensor (610, 612) positioned for sensing the temperature of chemical traveling in said dispenser device; and
a control assembly (803) in communication with said temperature sensor system and said heating system to maintain chemical traveling from a point on the heater element in said hose to the chemical outlet of said dispenser device at a chemical temperature above a predetermined minimum temperature during said traveling of the chemical.

2. The apparatus of claim 1 wherein said control assembly includes means for striving to maintain the temperature of chemical in said dispenser at the same level as that in said hose.

3. The apparatus of claims 1 or 2 wherein said control assembly includes means for adjusting a chemical heat temperature in said hose and means for adjusting said second heating element to be in better temperature level accordance with the adjusted temperature chemical in said hose.

4. The apparatus of any preceding claim wherein said dispenser comprises a chemical intake manifold (195, 199, 1206, 1208, DCM, DCM') having a chemical conduit through which the chemical passes in going from said hose to the dispenser housing, and said heating system comprising a third heater element (612, 610) and said temperature sensing system comprises a third temperature sensor positioned for sensing the temperature of chemical traveling in said intake manifold, and said control assembly being in communication with said third temperature sensor and said third heater element.

5. The apparatus of claim 4 wherein said third heater element is adjusted by said control assembly to conform in temperature with an adjusted hose temperature setting.

6. The apparatus of claim 4 or 5 further comprising a chemical filter (1206, 1208) and wherein said intake manifold further includes a filter reception recess (618, 620) which receives said filter, and wherein said intake manifold further includes a pressure transducer recess which receives said pressure transducer (1206, 1208), and a solvent flow passage (606).

7. The apparatus of any of claims 4 to 6 wherein said first heater element and temperature sensor is in direct contact with the chemical and said second and third heater elements and temperature sensors are not in direct contact with the chemical.

8. The apparatus of any preceding claim wherein said dispenser housing includes an elongated hole running adjacent an elongated section of said chemical passageway defined by said dispenser housing and said second heater element is an elongated cartridge heater insertable within said elongated hole to heat chemical traveling in said elongated section of said chemical passageway.

9. The apparatus of claim 8 wherein said cartridge heater is of a negative temperature coefficient heater type.

10. The apparatus of any preceding claim wherein said dispenser housing includes a main manifold (195) which is an extruded element with two elongated through holes, with a first receiving said second heater and the second defining a section of said chemical passageway.

11. The apparatus of any preceding claim further comprising a solvent supply line solvent passageway in said dispenser housing heated by said second heater element.

12. The apparatus of any preceding claim wherein said heating system, temperature sensor system and control assembly cooperate to retain a chemical temperature within said hose and said dispenser housing from 51.7 to 60.0 °C (125 to 140 degrees F).

13. The foam dispenser apparatus of claim 1, wherein said chemical supply device comprises a system comprising
first and second chemical passageway hoses and a pump assembly (32) for delivering foam precursor chemicals "A" and "B", respectively, to said passageway hoses; and
said dispenser device comprises a chemical mixing module (256) with mixed chemical output;
and said dispenser housing supports said mixing module, said dispenser housing further including a main manifold (195) which includes a pair of elongated chemical passageways for said chemicals "A" and "B";
and wherein said second heater device is received in a heater device recess provided in said main manifold adjacent said pair of elongated chemical passageways to heat chemical passing in said pair of passageways.

14. The apparatus of claim 13 further comprising a solvent supply source (400) and wherein said main manifold includes a solvent flow passageway (606) which extends along with said pair of chemical passageways and said heater element is an elongated heater cartridge extending adjacent said solvent passageway and a pair of chemical flow passageways so as to heat solvent and chemical passing therein.

15. The apparatus of claims 13 or 14 further comprising an intake manifold (195, 199, 1206, 1208, DCM, DCM') for receiving chemical from said hoses and feeding chemical through a pair of intake manifold chemical passageways to said main manifold, and an intake manifold heater element which is received by said intake manifold to heat chemical passing through the pair of intake manifold passageways.

16. The apparatus of any of claims 13 to 15 further comprising an intake manifold chemical temperature sensor and said control system having means for monitoring and adjusting said intake manifolds heater elements and the chemical in said pair of intake manifold passageways.

17. The apparatus of claim 1, **characterized in that** said first heater element has a downstream end that is received by a feedthrough unit supported by an intake manifold portion of the dispenser device.

18. The apparatus of claim 1 **characterized in that**,
said chemical supply device includes a foam precursor fluid chemical pump;
the heating system comprises an elongated heating device as said first heater element received within said hose and a feedthrough unit to which a first end of said heating device extends and into which electrical terminals in electrical communication with said heating device extend into, and wherein said heating device comprises an elongated coil resistance element that has a return leg electrical line and said first temperature sensor being received within said elongated coil and said return leg having a first section which extends from within to an exterior of said elongated coil, an intermediate section that extends along an exterior portion of said elongated coil and past an interior positioned sensor probe of said temperature sensor, and then has a return section which extends from an exterior of the elongated coil back into said elongated coil.

19. The apparatus of claim 18 wherein said temperature sensor that is in the form of a thermistor and said control assembly comprises a closed loop control and power source combination for monitoring and maintaining a desired chemical temperature in said hose based on readings by said first temperature sensor.

20. The apparatus of claims 18 or 19 wherein said first temperature sensor has a main body extending in an upstream to downstream direction relative to fluid chemical flow in said hose and a temperature probe that is at an upstream end of said temperature sensor, and said first temperature sensor has electrical leads which extend only in an upstream to downstream direction in going from a first connection end at said main body to a second connection end at said feedthrough unit.

21. The apparatus of any of claims 18 to 20 wherein the ratio of length of said hose to said first temperature sensor from an upstream end of each to said feedthrough unit is 10 to 1 or more.

22. The apparatus of any of claims 18 to 21 wherein said second heating element includes a manifold block which is connected with said feedthrough unit and which includes a chemical outlet flow port for feeding heated chemical to said dispenser.

23. The apparatus of any of claims 18 to 22 wherein said first heating device includes a resistance element received within said hose and the first end of said heating device is encompassed in a chemical contact insulation member at said feedthrough unit, and said feedthrough unit receiving electrical terminals and said heating system further comprising a second, non-chemical contact insulating member that receives said electrical terminals, and said heating system further comprising power source and return leads which extend into said second insulating member and into electrical communication with said terminals received within said second insulating member.

24. The apparatus of claim 23 wherein said insulating members are pottings which fully encompass the terminals and said terminals extend to opposite sides of said feedthrough unit.

25. The apparatus of claims 23 or 24 wherein said resistance element includes a return electrical line that extends into electrical communication with one of said terminals supported by said feedthrough unit.

26. The apparatus of any of claims 23 to 25 wherein said first temperature sensor has electrical lines that extend into said first insulating member and said heating device comprising third and fourth terminal leads to which respective electrical lines of said temperature sensor extend.

27. The apparatus of any of claims 18 to 26 wherein said heating system includes insulating wrap limited to areas of where said return line exits and reenters the confines of said elongated coil.

28. The apparatus of any of claims 18 to 27 wherein said heating device includes a manifold block which is connected with said feedthrough unit and which includes a chemical outlet flow port for feeding heated chemical to said dispenser, wherein said manifold block includes mounting means for mounting said manifold block to a dispenser housing of said dispenser.

29. The apparatus of any of claims 18 to 28 wherein the free end of said heating coil supports an insert member having a bulbous configuration for facilitating feeding of said coil within said hose.

30. The apparatus of claim 29 wherein said bulbous insert has an insertion end that extends into a reception area within a coiled section of said heating coil and said bulbous insert having a slide facilitator section having a diameter greater than that of the coiled section of the heating coil.

31. The apparatus of claims 29 or 30 wherein said bulbous insert has a mushroom shape with a smoothly curving front exterior surface.

32. The apparatus of any of claims 18 to 31 wherein said heating system includes a resistance element that extends from said feedthrough unit towards the pump end of the hose but is of a length which makes the heating elements free end sufficiently removed from a hose pump connection end of said hose as to be free of any insulation.

33. The apparatus of any of claims 18 to 32 wherein said feedthrough unit is formed of an interior insulating material and a section formed of a different material in a supporting relationship about said insulating layer.

34. The apparatus of any of claims 18 to 33 wherein said first heating device comprises a resistance coil with a return leg that is the only electrical lead component of the heating system external to said coil within said hose.

35. A method of manufacturing a heater system for a foam dispenser assembly having a chemical supply device, a dispenser device with a dispenser housing and an outlet from which foam chemical is output, and a chemical passageway through which chemical passes in going from said source to said foam chemical output, said chemical passageway being defined by a hose and chemical conduiting formed in said dispenser housing, **characterised by**
providing a heating system which includes a first heater element that extends within said hose from a first fixed end positioned closer to said chemical supply device to a second free end positioned closer to said dispenser device, and a second heating element that is provided in said dispenser device; a temperature sensor system including a first temperature sensor positioned for sensing temperature of chemical traveling in said hose and a second temperature sensor positioned for sensing the temperature of chemical traveling in said dispenser device; and
providing a control assembly which communicates with said temperature sensor system and said heating system to maintain chemical traveling from a point on the heater element in said hose to the chemical outlet of said dispenser device at a chemical temperature above a minimum temperature during said traveling of the chemical.

## Patentansprüche

1. Schaumchemikalienabgabevorrichtung (20), umfassend:
eine Chemikalienversorgungsvorrichtung (23);
eine Abgabevorrichtung (22), die ein Abgabegehäuse (194) und einen Auslass (308) aufweist, von dem Schaumchemikalie ausgegeben wird;
einen Chemikaliendurchgang, durch welchen Chemikalie von der Versorgungsvorrichtung zur Schaumchemikalienausgabe einläuft, wobei der Chemikaliendurchgang durch einen Schlauch (28', 30') und Chemikalienleitungen (602, 604, 614, 616) definiert ist, die in der Abgabevorrichtung gebildet sind, wobei
ein Heizsystem, umfassend eine erstes Heizelement (804), bereitgestellt ist, das sich innerhalb des Schlauchs von einem ersten Ende, das näher an der Chemikalienversorgungsvorrichtung platziert ist, zu einem zweiten Ende, das näher an der Abgabevorrichtung getragen wird, erstreckt, **gekennzeichnet durch** ein zweites Heizelement (610, 612), welches in der Abgabevorrichtung bereitgestellt ist;
ein Temperatursensorsystem, das einen ersten Temperatursensor (830), der zum Fühlen der Temperatur einer in dem Schlauch laufenden Chemikalie angeordnet ist, und einen zweiten Temperatursensor (610, 612), der zum Fühlen der Temperatur einer in der Abgabevorrichtung laufenden Chemikalie angeordnet ist, umfasst; und
eine Steuer-/Regelanordnung (803), die mit dem Temperatursensorsystem und dem Heizsystem in Kommunikation steht, um die Chemikalie, die von einem Punkt auf dem Heizelement in dem Schlauch zum Chemikalienauslass der Abgabevorrichtung läuft, bei einer Chemikalientemperatur über einer vorbestimmten Minimaltemperatur während des Laufens der Chemikalie zu halten.

2. Vorrichtung nach Anspruch 1, wobei die Steuer-/Regelanordnung Mittel zum Anstreben des Haltens der Temperatur der Chemikalie in der Abgabevorrichtung auf der selben Höhe wie in dem Schlauch, umfasst.

3. Vorrichtung nach Anspruch 1 oder 2, wobei die Steuer-/Regelanordnung Mittel zum Anpassen einer Chemikalienheiztemperatur in dem Schlauch und Mittel zum Anpassen des zweiten Heizelements umfasst, um in einer besseren Temperaturhöhenübereinstimmung mit der Chemikalie mit angepasster Temperatur in dem Schlauch zu sein.

4. Vorrichtung nach einem der vorhergehenden Ansprüche, wobei die Abgabevorrichtung eine Chemikalienaufnahmesammelleitung (195, 199, 1206, 1208, DCM, DCM') umfasst, die eine Chemikalienleitung aufweist, durch welche die Chemikalie von dem Schlauch her in das Abgabegehäuse einlaufend, läuft, und das Heizsystem, das ein drittes Heizelement (612, 610) und das Temperaturfühlsystem umfasst, welches einen dritten Temperatursensor umfasst, der zum Fühlen der Temperatur einer Chemikalie in der Aufnahmesammelleitung angeordnet ist, wobei die Steuer-/Regelanordnung in Kommunikation mit dem dritten Temperatursensor und dem dritten Heizelement steht.

5. Vorrichtung nach Anspruch 4, wobei das dritte Heizelement durch die Steuer-/Regelanordnung eingestellt wird, um in der Temperatur mit einer angepassten Schlauchtemperatureinstellung übereinzustimmen.

6. Vorrichtung nach Anspruch 4 oder 5, ferner umfassend einen Chemikalienfilter (1206, 1208) und wobei die Aufnahmesammelleitung ferner eine Filteraufnahmeaussparung (618, 620) umfasst, welche den Filter aufnimmt und wobei die Aufnahmesammelleitung ferner eine Druckwandleraussparung umfasst, die den Druckwandler (1206, 1208) aufnimmt, und einen Lösungsmittelflussdurchgang (606).

7. Vorrichtung nach einem der Ansprüche 4 bis 6, wobei das erste Heizelement und der erste Temperatursensor in direktem Kontakt mit der Chemikalie sind und die zweiten und dritten Heizelemente und Temperatursensoren nicht in direktem Kontakt mit der Chemikalie sind.

8. Vorrichtung nach einem der vorhergehenden Ansprüche wobei das Abgabegehäuse ein längliches Loch umfasst, das angrenzend an einen länglichen Abschnitt des Chemikaliendurchgangs verläuft, der durch das Abgabegehäuse definiert wird und das zweite Heizelement eine längliche Hülsenheizung ist, die innerhalb des länglichen Lochs einführbar ist, um Chemikalie, die in dem länglichen Abschnitt des Chemikaliendurchgangs läuft, zu erhitzen.

9. Vorrichtung nach Anspruch 8, wobei die Hülsenheizung vom Typ eines Heizers mit negativem Temperaturkoeffizienten ist.

10. Vorrichtung nach einem der vorhergehenden Ansprüche, wobei das Abgabegehäuse eine Hauptsammelleitung (195) umfasst, die ein extrudiertes Element mit zwei länglichen Durchgangslöchern ist, wobei ein erstes den zweiten Heizer aufnimmt und das zweite einen Abschnitt des Chemikaliendurchgangs definiert.

11. Vorrichtung nach einem der vorhergehenden Ansprüche, ferner umfassend einen Lösungsmittelversorgungsleitung-Lösungsmitteldurchgang in dem Abgabegehäuse, das von dem zweiten Heizelement beheizt wird.

12. Vorrichtung nach einem der vorhergehenden Ansprüche, wobei das Heizsystem, Temperatursensorsystem und Steuer-/Regelanordnung zusammenarbeiten, um eine Chemikalientemperatur in den Schlauch und dem Abgabegehäuse von 51,7 bis 60,0°C (125 bis 140 Grad Fahrenheit) aufrechtzuerhalten.

13. Schaumabgabevorrichtung nach Anspruch 1, wobei die Chemikalienversorgungsvorrichtung ein System umfasst, umfassend
erste und zweite Chemikaliendurchgangsschläuche und eine Pumpenanordnung (32) zum Liefern von jeweils Präkursorchemikalien "A" und "B" an die Durchgangsschläuche; und
wobei die Abgabevorrichtung ein Chemikalienmischmodul (256) mit Mischchemikalienausgabe umfasst;
und das Abgabegehäuse das Mischmodul trägt, das Abgabegehäuse ferner eine Hauptsammelleitung (195) umfasst, welche ein Paar von länglichen Chemikaliendurchgängen für die Chemikalien "A" und "B" umfasst;
und wobei die zweite Heizvorrichtung in einer Heizvorrichtungsaussparung aufgenommen ist, welche in der Hauptsammelleitung angrenzend an das Paar von länglichen Chemikaliendurchgängen zum Erhitzen von Chemikalie, die in dem Paar von Durchgängen läuft, bereitgestellt ist.

14. Vorrichtung nach Anspruch 13, ferner umfassend eine Lösungsmittelversorgungsquelle (400) und wobei die Hauptsammelleitung einen Lösungsmittelflussdurchgang (606) umfasst, welcher sich entlang mit dem Paar von Chemikaliendurchgängen erstreckt, und wobei das Heizelement eine längliche Heizhülse ist, die sich angrenzend an den Lösungsmitteldurchgang und ein Paar von Chemikalienflussdurchgängen so erstreckt, dass Lösungsmittel und Chemikalie, die darin laufen, erhitzt werden.

15. Vorrichtung nach Anspruch 13 oder 14 ferner umfassend eine Aufnahmesammelleitung (195, 199, 1206, 1208, DCM, DCM') zum Erhalten von Chemikalie von den Schläuchen und zum Speisen von Chemikalie durch ein Paar von Aufnahmesammelleitungschemikaliendurchgängen an die Hauptsammelleitung, und ein Aufnahmesammelleitungsheizelement, welches von der Aufnahmesammelleitung aufgenommen wird, um Chemikalie, die durch das Paar von Aufnahmesammelleitungsdurchgängen läuft, zu erhitzen.

16. Vorrichtung nach einem der Ansprüche 13 bis 15, ferner umfassend einen Aufnahmesammelleitungschemikalientemperatursensor, und wobei das Steuer-/Regelsystem Mittel zum Überwachen und Anpassen von den Aufnahmesammelleitungsheizelementen und der Chemikalie in dem Paar von Aufnahmesammelleitungsdurchgängen aufweist.

17. Vorrichtung nach Anspruch 1, **dadurch gekennzeichnet, dass** das erste Heizelement ein stromabwärtiges Ende aufweist, das von einer Durchführungseinheit aufgenommen wird, die von einem Aufnahmesammelleitungsabschnitt der Abgabevorrichtung getragen wird.

18. Vorrichtung nach Anspruch 1, **dadurch gekennzeichnet, dass**
die Chemikalienversorgungsvorrichtung eine Schaumpräkursorflüssigkeitschemikalienpumpe umfasst;
das Heizsystem eine längliche Heizvorrichtung als das erste Heizelement, das in dem Schlauch aufgenommen ist, und eine Durchführungseinheit umfasst, zu welcher sich ein erstes Ende der Heizvorrichtung erstreckt und in welche sich elektrische Klemmen in elektrischer Kommunikation mit der Heizvorrichtung erstrecken, und wobei die Heizvorrichtung ein längliches Spulenwiderstandselement aufweist, welches eine Rückführstreckenstromleitung aufweist, und wobei der erste Temperatursensor in der länglichen Spule aufgenommen ist und die Rückführstrecke einen ersten Abschnitt, welcher sich vom Inneren zu einer Außenseite der länglichen Spule erstreckt, einen Zwischenabschnitt, welcher sich entlang einem äußeren Abschnitt der länglichen Spule und vorbei an einer innen positionierten Sensorsonde des Temperatursensors erstreckt, und dann einen Rückführabschnitt, der sich von einer Außenseite der länglichen Spule zurück in die längliche Spule erstreckt, aufweist.

19. Vorrichtung nach Anspruch 18, wobei der Temperatursensor, der in der Form eines Thermistors vorliegt und die Steuer-/Regelanordnung eine geschlossene Schleifensteuerungs-/regelungs- und Energiequellen-Kombination zum Überwachen und Erhalten einer Soll-Chemikalientemperatur in dem Schlauch, die auf Ableseergebnissen des ersten Temperatursensors basiert, umfasst.

20. Vorrichtung nach Anspruch 18 oder 19, wobei der erste Temperatursensor einen Hauptkörper, der sich in einer stromaufwärtigen nach stromabwärtigen Richtung relativ zum Flüssigchemikalienfluss in dem Schlauch erstreckt, und eine Temperatursonde, die sich an einem stromaufwärtigen Ende des Temperatursensors befindet, aufweist, und wobei der erste Temperatursensor elektrische Leitungen aufweist, die sich nur in einer stromaufwärtigen nach stromabwärtigen Richtung erstrecken, indem sie von einem ersten Verbindungsende an dem Grundkörper zu einem zweiten Verbindungsende an der Durchführungseinheit verlaufen.

21. Vorrichtung nach einem der Ansprüche 18 bis 20, wobei das Verhältnis von Länge des Schlauchs zu dem ersten Temperatursensor von einem stromaufwärtigen Ende der beiden zu der Durchführungseinheit 10 zu 1 oder mehr ist.

22. Vorrichtung nach einem der Ansprüche 18 bis 21, wobei des zweite Heizelement einen Sammelleitungsblock umfasst, welcher mit der Durchführungseinheit verbunden ist, und welcher einen Chemikalienauslassflussanschluss zum Speisen von erhitzter Chemikalie an die Ausgabevorrichtung umfasst.

23. Vorrichtung nach einem der Ansprüche 18 bis 22, wobei die erste Heizvorrichtung ein Widerstandselement umfasst, das in dem Schlauch aufgenommen ist und das erste Ende der Heizvorrichtung in einem Chemikalienkontakt-Isolationsteil bei der Durchführungseinheit umschlossen ist, und die Durchführungseinheit elektrische Klemmen aufnimmt und das Heizsystem ferner ein zweites, nicht-Chemikalienkontakt-Isolationsteil, das die elektrischen Klemmen aufnimmt, umfasst, und das Heizsystem ferner Energiequelle und Rückleitungen umfasst, welche sich in das zweite Isolationsteil und in elektrische Kommunikation mit den Klemmen, die in dem zweiten Isolationsteil aufgenommen sind, erstrecken.

24. Vorrichtung nach Anspruch 23, wobei die Isolationsteile Vergüsse sind, welche die Klemmen vollständig umschließen und sich die Klemmen in entgegengesetzte Seiten der Durchführungseinheit erstrecken.

25. Vorrichtung nach einem der Ansprüche 23 oder 24, wobei das Widerstandselement eine elektrische Rückleitung umfasst, die sich in elektrischer Kommunikation mit einer der Klemmen, die von der Durchführungseinheit getragen werden, erstreckt.

26. Vorrichtung nach einem der Ansprüche 23 bis 25, wobei der erste Temperatursensor elektrische Leitungen aufweist, die sich in das erste Isolationsteil erstrecken und die Heizvorrichtung dritte und vierte Klemmenführungen umfasst, zu welchen sich jeweilige elektrische Leitungen des Temperatursensors erstrecken.

27. Vorrichtung nach einem der Ansprüche 18 bis 26, wobei das Heizsystem isolierende Umhüllung umfasst, die sich auf Bereiche beschränkt, in denen die Rückleitung aus dem Inneren der länglichen Spule austritt und in dieses wieder eintritt.

28. Vorrichtung nach einem der Ansprüche 18 bis 27, wobei das Heizelement einen Sammelleitungsblock umfasst, welcher mit der Durchführungseinheit verbunden ist und welcher einen Chemikalienauslassflussanschluss zum Speisen von erhitzter Chemikalie an die Abgabevorrichtung umfasst, wobei der Sammelleitungsblock Befestigungsmittel zum Befestigen des Sammelleitungsblocks an ein Abgabegehäuse der Abgabevorrichtung aufweist.

29. Vorrichtung nach einem der Ansprüche 18 bis 28, wobei das freie Ende der Heizspule ein Einsatzende trägt, das eine bauchige Gestaltung zum Ermöglichen des Speisens der Spule innerhalb des Schlauchs aufweist.

30. Vorrichtung nach Anspruch 29, wobei der bauchige Einsatz ein Einsatzende aufweist, das sich in einen Aufnahmebereich innerhalb eines Spulenabschnitts der Heizspule erstreckt und der bauchige Einsatz einen Gleitvermittlerabschnitt aufweist, der einen Durchmesser größer als derjenige des Spulenabschnitts der Heizspule aufweist.

31. Vorrichtung nach Anspruch 29 oder 30, wobei der bauchige Einsatz eine Pilzform mit einer sich glatt krümmenden vorderen Außenfläche aufweist.

32. Vorrichtung nach einem der Ansprüche 18 bis 31, wobei das Heizsystem ein Widerstandselement aufweist, das sich von der Durchführungseinheit in Richtung des Pumpenendes des Schlauches erstreckt, jedoch eine Länge aufweist, die das freie Ende des Heizelements ausreichend von einem Schlauchpumpenverbindungsende des Schlauches entfernt, um frei von jeglicher Isolierung zu sein.

33. Vorrichtung nach einem der Ansprüche 18 bis 32, wobei die Durchführungseinheit aus einem inneren Isolierungsmaterial und einem Bereich gebildet ist, der aus einem anderen Material in einer tragenden Beziehung um die Isolationsschicht gebildet ist.

34. Vorrichtung nach einem der Ansprüche 18 bis 33, wobei die erste Heizvorrichtung eine Widerstandsspule mit einer Rückführstrecke umfasst, die die einzige elektrische Leitungskomponente des Heizsystems außerhalb der Spule in dem Schlauch ist.

35. Verfahren zum Herstellen eines Heizsystems für eine Schaumabgabeanördnung, die eine Chemikalienversorgungsvorrichtung, eine Abgabevorrichtung mit einem Abgabegehäuse und einen Auslass, aus dem eine Schaumchemikalie ausgelassen wird, und eine Chemikaliendurchführung, durch welche eine Chemikalie von der Quelle zu der Schaumchemikalienausgabe durchläuft, wobei die Chemikaliendurchführung durch einen Schlauch und eine Chemikalienführung, die in dem Abgabegehäuse gebildet wird, definiert ist, aufweist, **gekennzeichnet durch**
Bereitstellen eines Heizsystems, das ein erstes Heizelement umfasst, das sich innerhalb des Schlauchs von einem ersten befestigten Ende, das näher an der Chemikalienversorgungsvorrichtung positioniert ist, zu einem zweiten freien Ende, das näher an der Abgabevorrichtung positioniert ist, erstreckt, und einem zweiten Heizelement, das in der Abgabevorrichtung bereitgestellt ist; ein Temperatursensorsystem, das einen ersten Temperatursensor, der zum Fühlen der Temperatur von Chemikalie, die sich in dem Schlauch bewegt, positioniert ist, und einen zweiten Temperatursensor, der zum Fühlen der Temperatur von Chemikalie, die sich in der Ausgabevorrichtung bewegt, positioniert ist, aufweist; und
Bereitstellen einer Steuer-/Regelanordnung, welche mit dem Temperatursensorsystem und dem Heizsystem kommuniziert, um Chemikalie, die sich von einem Punkt im Heizelement in dem Schlauch zu dem Chemikalienauslass der Abgabevorrichtung bewegt, bei einer Chemikalientemperatur über einer Minimaltemperatur während der Bewegung der Chemikalie zu halten.

## Revendications

1. Appareil distributeur de produit chimique sous forme de mousse (20), comprenant :
un dispositif d'alimentation en produit chimique (23) ;
un dispositif distributeur (22), comportant un boîtier de distributeur (194) et une sortie (308) d'où sort le produit chimique sous forme de mousse ;
un passage de produit chimique emprunté par le produit chimique dans son trajet dudit dispositif distributeur à ladite sortie de produit chimique, ledit passage de produit chimique étant défini par un tuyau (28', 30') et un ensemble de conduits de produit chimique (602, 604, 614, 616) formé dans ledit dispositif distributeur,
un système de chauffage étant prévu, comprenant un premier élément de chauffage (804) qui s'étend au sein dudit tuyau d'une première extrémité située plus près dudit dispositif d'alimentation en produit chimique à une seconde extrémité supportée plus près dudit dispositif distributeur, **caractérisé par** un deuxième élément de chauffage (610, 612) qui est situé dans ledit dispositif distributeur ;
un système de capteurs de température comprenant un premier capteur de température (830) placé de façon à détecter la température du produit chimique se déplaçant dans ledit tuyau et un deuxième capteur de température (610, 612) placé de façon à détecter la température du produit chimique se déplaçant dans ledit dispositif distributeur ; et
un ensemble de commande (803) en communication avec ledit système de capteurs de température et ledit système de chauffage pour maintenir le produit chimique, se déplaçant d'un point sur l'élément de chauffage dans ledit tuyau jusqu'à la sortie de produit chimique dudit dispositif distributeur, à une température de produit chimique supérieure à une température minimale prédéfinie durant le déplacement dudit produit chimique.

2. Appareil selon la revendication 1, dans lequel ledit ensemble de commande comprend un moyen pour tenter de maintenir la température du produit chimique dans ledit distributeur au même niveau que la température dans ledit tuyau.

3. Appareil selon la revendication 1 ou 2, dans lequel ledit ensemble de commande comprend un moyen pour régler une température de chauffage dans ledit tuyau et un moyen pour régler ledit deuxième élément de chauffage pour qu'il soit à un niveau de température plus conforme relativement au produit chimique à température réglée dans ledit tuyau.

4. Appareil selon l'une quelconque des revendications précédentes, dans lequel ledit distributeur comprend un collecteur d'admission de produit chimique (195, 199, 1206, 1208, DCM, DCM') comportant un conduit de produit chimique emprunté par le produit chimique dans son trajet dudit tuyau jusqu'audit boîtier de distributeur, et ledit système de chauffage comprend un troisième élément de chauffage (612, 610) et ledit système de capteurs de température comprend un troisième capteur de température placé de façon à détecter la température du produit chimique se déplaçant dans ledit collecteur d'admission, et ledit ensemble de commande étant en communication avec ledit troisième capteur de température et ledit troisième élément de chauffage.

5. Appareil selon la revendication 4, dans lequel ledit troisième élément de chauffage est réglé par ledit ensemble de commande pour avoir une température conforme à une température de tuyau réglée.

6. Appareil selon la revendication 4 ou 5, comprenant, en outre, un filtre de produit chimique (1206, 1208) et ledit collecteur d'admission comprenant, en outre, un évidement récepteur de filtre (618, 620) qui reçoit ledit filtre, et ledit collecteur d'admission comprenant, en outre, un évidement de transducteur de pression qui reçoit ledit transducteur de pression (1206, 1208), et un passage d'écoulement de solvant (606).

7. Appareil selon l'une quelconque des revendications 4 à 6, dans lequel ledit premier élément de chauffage et ledit premier capteur de température sont en contact direct avec le produit chimique et lesdits deuxième et troisième capteurs de température ne sont pas en contact direct avec le produit chimique.

8. Appareil selon l'une quelconque des revendications précédentes, dans lequel ledit boîtier de distributeur comprend un trou allongé s'étendant adjacent à une section allongée dudit passage de produit chimique défini par ledit boîtier de distributeur et ledit deuxième élément de chauffage est une cartouche chauffante allongée apte à être insérée au sein dudit trou allongé pour chauffer le produit chimique se déplaçant dans ladite section allongée dudit passage de produit chimique.

9. Appareil selon la revendication 8, dans lequel ladite cartouche chauffante est du type à coefficient de température négatif.

10. Appareil selon l'une quelconque des revendications précédentes, dans lequel ledit boîtier de distributeur comprend un collecteur principal (195) qui est un élément extrudé pourvu de deux trous traversants allongés, un premier trou recevant ledit deuxième élément de chauffage et le deuxième trou définissant une section dudit passage de produit chimique.

11. Appareil selon l'une quelconque des revendications précédentes, comprenant, en outre, un passage de solvant de conduite d'alimentation en solvant dans ledit boîtier de distributeur chauffé par ledit deuxième élément de chauffage.

12. Appareil selon l'une quelconque des revendications précédentes, dans lequel lesdits système de chauffage, système de capteurs de température et ensemble de commande coopèrent pour garder le produit chimique à une température, au sein dudit tuyau et dudit boîtier de distributeur, dans la plage de 51,7 à 60,0°C (125 à 140°F).

13. Appareil distributeur de mousse selon la revendication 1, dans lequel ledit dispositif d'alimentation en produit chimique comprend un système comprenant :
des premier et second tuyaux de passage de produit chimique et un ensemble pompe (32) pour distribuer des produits chimiques précurseurs sous forme de mousse "A" et "B", respectivement, auxdits tuyaux de passage ; et
ledit dispositif distributeur comprend un module de mélange de produit chimique (256) à sortie de produit chimique mélangé ;
et ledit boîtier de distributeur supporte ledit module de mélange, ledit boîtier de distributeur comprenant, en outre, un collecteur principal (195) qui comprend une paire de passages de produit chimique allongés pour lesdits produits chimiques "A" et "B" ;
et ledit deuxième dispositif de chauffage est reçu dans un évidement de dispositif de chauffage ménagé dans ledit collecteur principal adjacent à ladite paire de passages de produit chimique allongés pour chauffer le produit chimique empruntant ladite paire de passages.

14. Appareil selon la revendication 13, comprenant, en outre, une source d'alimentation en solvant (400) et dans lequel ledit collecteur principal comprend un passage d'écoulement de solvant (606) qui s'étend conjointement à ladite paire de passages de produit chimique et ledit élément de chauffage est une cartouche chauffante allongée s'étendant adjacente audit passage de solvant et à une paire de passages d'écoulement de produit chimique de façon à chauffer le solvant et le produit chimique empruntant les passages.

15. Appareil selon la revendication 13 ou 14, comprenant, en outre, un collecteur d'admission (195, 199, 1206, 1208, DCM, DCM') destiné à recevoir un produit chimique desdits tuyaux et distribuer le produit chimique par l'intermédiaire d'une paire de passages de produit chimique de collecteur d'admission jusqu'au dit collecteur principal, et un élément de chauffage de collecteur d'admission qui est reçu par ledit collecteur d'admission pour chauffer le produit chimique empruntant la paire de passages de collecteur d'admission.

16. Appareil selon l'une quelconque des revendications 13 à 15, comprenant, en outre, un capteur de température de produit chimique de collecteur d'admission et ledit système de commande comportant un moyen pour contrôler et régler lesdits éléments de chauffage de collecteur d'admission et le produit chimique dans ladite paire de passages de collecteur d'admission.

17. Appareil selon la revendication 1, **caractérisé en ce que** ledit premier élément de chauffage comporte une extrémité d'aval qui est reçue par une unité d'amenée supportée par une partie de collecteur d'admission du dispositif distributeur.

18. Appareil selon la revendication 1, **caractérisé en ce que** :
ledit dispositif d'alimentation en produit chimique (23) comprend une pompe de produits chimiques précurseurs sous forme de mousse ;
le système de chauffage comprend un dispositif de chauffage allongé sous la forme dudit premier élément de chauffage reçu dans ledit tuyau et une unité d'amenée jusqu'à laquelle s'étend une première extrémité dudit dispositif de chauffage et dans laquelle s'étendent des bornes électriques en communication électrique avec ledit dispositif de chauffage, et ledit dispositif de chauffage comprenant un élément à résistance sous forme de bobine allongée qui comporte une ligne électrique à branchement de retour et ledit premier capteur de température étant reçu au sein de ladite bobine allongée et ledit branchement de retour comportant une première section qui s'étend de l'intérieur jusqu'à un extérieur de ladite bobine allongée, une section intermédiaire qui s'étend le long d'une partie extérieure de ladite bobine allongée et au-delà d'une sonde de capteur, positionnée intérieurement, dudit capteur de température, puis une section de retour qui s'étend en retour d'un extérieur de la bobine allongée jusque dans ladite bobine allongée.

19. Appareil selon la revendication 18, dans lequel ledit capteur de température se présente sous la forme d'un thermistor et ledit ensemble de commande comprend une combinaison source d'alimentation et asservissement en circuit fermé pour contrôler et maintenir une température de produit chimique souhaitée dans ledit tuyau sur la base de relevés effectués par ledit premier capteur de température.

20. Appareil selon la revendication 18 ou 19, dans lequel ledit premier capteur de température comporte un corps principal s'étendant dans une direction d'amont en aval relativement à l'écoulement de produit chimique fluide dans ledit tuyau et une sonde de température qui est située à une extrémité d'amont dudit capteur de température, et ledit premier capteur de température a des fils de sortie qui s'étendent uniquement dans une direction d'amont en aval dans leur trajectoire d'une première extrémité de connexion au niveau dudit corps principal jusqu'à une seconde extrémité de connexion au niveau de ladite unité d'amenée.

21. Appareil selon l'une quelconque des revendications 18 à 20, dans lequel le rapport de longueur dudit tuyau audit premier capteur de température depuis une extrémité d'amont de chacun d'eux jusqu'à ladite unité d'amenée est de 10:1 ou plus.

22. Appareil selon l'une quelconque des revendications 18 à 21, dans lequel ledit deuxième élément de chauffage comprend un bloc collecteur qui est relié à ladite unité d'amenée et qui comprend un orifice d'écoulement de sortie de produit chimique pour distribuer le produit chimique chauffé audit distributeur.

23. Appareil selon l'une quelconque des revendications 18 à 22, dans lequel ledit premier dispositif de chauffage comprend un élément à résistance reçu au sein dudit tuyau et la première extrémité dudit dispositif de chauffage est englobée dans un élément d'isolation de contact avec produit chimique au niveau de ladite unité d'amenée, et ladite unité d'amenée recevant des bornes électriques et ledit système de chauffage comprenant, en outre, un second élément d'isolation de contact avec produit non chimique, qui reçoit lesdites bornes électriques, et ledit système de chauffage comprenant, en outre, une source d'alimentation et des conducteurs de retour qui s'étendent dans ledit second élément d'isolation et en communication électrique avec lesdites bornes reçues dans ledit second élément d'isolation.

24. Appareil selon la revendication 23, dans lequel lesdits éléments d'isolation sont des enrobages qui englobent complètement les bornes et lesdites bornes s'étendent jusqu'aux côtés opposés de ladite unité d'amenée.

25. Appareil selon la revendication 23 ou 24, dans lequel ledit élément à résistance comprend une ligne électrique de retour qui s'étend en communication électrique avec l'une desdites bornes supportées par ladite unité d'amenée.

26. Appareil selon l'une quelconque des revendications 23 à 25, dans lequel ledit premier capteur de température comporte des lignes électriques qui s'étendent dans ledit premier élément d'isolation et ledit dispositif de chauffage comprenant des troisième et quatrième conducteurs de borne jusqu'auxquels s'étendent des lignes électriques respectives dudit capteur de température.

27. Appareil selon l'une quelconque des revendications 18 à 26, dans lequel ledit système de chauffage comprend une enveloppe isolante limitée à des zones d'où ladite ligne de retour sort et entre de nouveau dans les confins de ladite bobine allongée.

28. Appareil selon l'une quelconque des revendications 18 à 27, dans lequel ledit dispositif de chauffage comprend un bloc collecteur qui est relié à ladite unité d'amenée et qui comprend un orifice d'écoulement de sortie de produit chimique pour distribuer le produit chimique chauffé audit distributeur, ledit bloc collecteur comprenant un moyen de montage pour monter ledit bloc collecteur sur un boîtier de distributeur dudit distributeur.

29. Appareil selon l'une quelconque des revendications 18 à 28, dans lequel l'extrémité libre de ladite bobine de chauffage supporte un élément d'insertion ayant la configuration d'un bulbe pour faciliter la distribution de ladite bobine dans ledit tuyau.

30. Appareil selon la revendication 29, dans lequel ledit élément d'insertion en bulbe comporte une extrémité d'insertion qui s'étend dans une zone de réception au sein d'une section enroulée de ladite bobine de chauffage et ledit élément d'insertion en bulbe comportant une section d'aide au glissement présentant un diamètre supérieur à celui de la section enroulée de la bobine de chauffage.

31. Appareil selon la revendication 29 ou 30, dans lequel ledit élément d'insertion en bulbe a la forme d'un champignon à surface extérieure avant doucement incurvée.

32. Appareil selon l'une quelconque des revendications 18 à 31, dans lequel ledit système de chauffage comprend un élément à résistance qui s'étend depuis ladite unité d'amenée vers l'extrémité de pompe du tuyau mais a une longueur qui rend les éléments de chauffage libres et suffisamment extraits d'une extrémité de connexion à pompe dudit tuyau pour être libres de toute isolation.

33. Appareil selon l'une quelconque des revendications 18 à 32, dans lequel ladite unité d'amenée est faite d'un matériau d'isolation interne et d'une section constituée d'un matériau différent en une relation de support autour de ladite couche d'isolation.

34. Appareil selon l'une quelconque des revendications 18 à 33, dans lequel ledit premier dispositif de chauffage comprend une bobine de résistance munie d'un branchement de retour qui est le seul fil de sortie du système de chauffage extérieur à ladite bobine au sein dudit tuyau.

35. Procédé de fabrication d'un système de chauffage pour un ensemble distributeur de mousse comportant un dispositif d'alimentation en produit chimique, un dispositif distributeur comportant un boîtier de distributeur et une sortie d'où sort le produit chimique sous forme de mousse, et un passage de produit chimique emprunté par le produit chimique dans son trajet de ladite source à ladite sortie de produit chimique, ledit passage de produit chimique étant défini par un tuyau et un ensemble de conduits de produit chimique, formé dans ledit dispositif distributeur, **caractérisé par** les étapes consistant à :
prévoir un système de chauffage comprenant un premier élément de chauffage qui s'étend au sein dudit tuyau d'une première extrémité fixe située plus près dudit dispositif d'alimentation en produit chimique à une seconde extrémité libre située plus près dudit dispositif distributeur, et un deuxième élément de chauffage qui est situé dans ledit dispositif distributeur ; un système de capteurs de température comprenant un premier capteur de température placé de façon à détecter la température du produit chimique se déplaçant dans ledit tuyau et un deuxième capteur de température placé de façon à détecter la température du produit chimique se déplaçant dans ledit dispositif distributeur ; et
prévoir un ensemble de commande qui communique avec ledit système de capteurs de température et ledit système de chauffage pour maintenir le produit chimique, se déplaçant depuis un point sur l'élément de chauffage dans ledit tuyau jusqu'à la sortie de produit chimique dudit dispositif distributeur, à une température de produit chimique supérieure à une température minimale durant le déplacement dudit produit chimique.
